# EUROPÄISCHE PATENTSCHRIFT

(11) **EP 3 477 515 B1**
(45) Veröffentlichungstag und Bekanntmachung des Hinweises auf die Patenterteilung: **22.01.2020**
(21) Anmeldenummer: 18202455.4
(22) Anmeldetag: 25.10.2018
(51) Int. Cl.: G06F 21/31, G06F 21/32, G06F 21/62

(54) **BEREITSTELLEN PHYSIOLOGISCHER DATEN**
PROVISION OF PHYSIOLOGICAL DATA
FOURNITURE DES DONNÉES PHYSIOLOGIQUES

(30) Priorität: 26.10.2017 DE 102017219261
(43) Veröffentlichungstag der Anmeldung: 01.05.2019
(73) Patentinhaber: Bundesdruckerei GmbH, 10969 Berlin (DE)
(72) Erfinder: PAESCHKE, Dr. Manfred, 16348 Wandlitz (DE); SCHNJAKIN, Dr. Maxim, 10245 Berlin (DE)
(74) Vertreter: Richardt Patentanwälte PartG mbB

(56) Entgegenhaltungen:
- WO-A1-2012/093393
- US-A1- 2014 289 833
- US-A1- 2016 012 217

## Beschreibung

Die Erfindung betrifft ein Verfahren und System zur Datenverwaltung, genauer gesagt zum Freigeben eines Zugriffs auf physiologische Daten.

Mobile, tragbare elektronische Geräte, wie etwa Smartphones, Smartwatches oder Fitnesstracker, sind heutzutage weit verbreitet und werden in den unterschiedlichsten Situationen für die verschiedensten Aufgaben des Alltags eingesetzt. Sie unterstützen den Menschen durch Ihre Handhabbarkeit in Verbindung mit ihrer Rechenleistung und ihrer Sensorik. Die Sensorik ist dabei sensibel genug, beispielsweise den Puls und/oder Blutdruck eines Nutzers zu messen oder die Schritte des Nutzers zu zählen.

Um Zugriff auf ein mobiles, tragbares Kommunikationssystem, wie etwa ein Smartphone, und die darin gespeicherten Daten zu erlangen, muss sich ein Nutzer üblicherweise über eine persönliche Identifikationsnummer (PIN), ein Passwort oder gegebenenfalls einen Fingerabdruck authentifizieren. Angesichts der Vielzahl an PIN-gesicherten Geräten und Anwendungen, welche Nutzer alltäglich verwenden, und der damit verbundenen Vielzahl zu merkenden PINs kommt es leicht vor, dass ein Nutzer eine PIN vergisst. Passwörter, die oftmals frei wählbar sind, sind entweder zu kurz und leicht zu merken, was jedoch den Nachteil hat, dass sie schneller zu erraten sind und somit nur ein geringes Maß an Sicherheit bieten. Passwörter, welche ein hohes Maß an Sicherheit bieten, sind demgegenüber oft lang und komplex, was es für den Nutzer schwierig macht sie sich zu merken.

Um zu verhindern, dass unberechtigte Personen Zugriff Daten des Nutzers erlangen, sind die entsprechenden Daten in einem Speicher beispielsweise durch Anmeldeinformationen, etwa eine Kombination aus Nutzername bzw. Nutzerpseudonym und Passwort, oder einem ähnlichen Mittel zu Authentifizierung geschützt. Der Nutzer muss sich seine Anmeldedaten merken, um auf seine Daten zugreifen zu können.

Der Erfindung liegt demgegenüber die Aufgabe zugrunde, ein verbessertes Verfahren zur Verwaltung erfasster Daten zu ermöglichen.

Die der Erfindung zugrundeliegende Aufgabe wird jeweils mit den Merkmalen der unabhängigen Patentansprüche gelöst. Ausführungsformen sind in den abhängigen Patentansprüchen angegeben.

Der für die Erfindung relevante Stand der Technik umfasst die Dokumente US2014/289833, US2016/012217 und WO2012/093393.

Ausführungsformen betreffen ein Verfahren zum Freigeben eines Zugriffs eines Computersystems auf physiologische Daten eines registrierten Nutzers eines mobilen, tragbaren Kommunikationssystems, welche in einem Speichersystem persistent gespeichert sind. Das Kommunikationssystem weist ein Klassifikationsmodul, einen Prozessor, eine Kommunikationsschnittstelle und zumindest einen Sensor zur Erfassung von verhaltensbasierten Daten für eine verhaltensbasierte Authentifizierung eines aktuellen Nutzers gegenüber dem Kommunikationssystem auf.

Das Klassifikationsmodul ist zur Klassifikation des Verhaltens des aktuellen Nutzers unter Verwendung der verhaltensbasierten Daten konfiguriert, wobei die verhaltensbasierten Daten physiologische Daten des aktuellen Nutzers umfassen, welche dazu vorgesehen sind, in dem Speichersystem persistent gespeichert zu werden, falls der aktuelle Nutzer im Zuge der verhaltensbasierten Authentifizierung als der registrierte Nutzer authentifiziert wird.

Das Kommunikationssystem ist dazu konfiguriert über die Kommunikationsschnittstelle mit dem Computersystem zu kommunizieren,

Ferner ist das Kommunikationssystem dazu konfiguriert, gesteuert durch den Prozessor das Verfahren zum Freigeben eines Zugriffs auszuführen, welches umfasst:
- Authentifizieren des Computersystems gegenüber dem Kommunikationssystem unter Verwendung der Kommunikationsschnittstelle des Kommunikationssystems,
- verhaltensbasiertes Authentifizieren des Nutzers gegenüber dem Kommunikationssystem, wobei das verhaltensbasierte Authentifizieren des Nutzers umfasst:
   ∘ Erfassen verhaltensbasierter Daten des aktuellen Nutzers durch den zumindest einen Sensor des Kommunikationssystems,
   ∘ Generieren zumindest eines Klassifikationsergebnisses unter Verwendung des Klassifikationsmoduls und der erfassten verhaltensbasierten Daten,
   ∘ Auswerten des zumindest einen Klassifikationsergebnisses, um den Nutzer zu authentifizieren, wobei das Auswerten ein Prüfen umfasst, ob das Klassifikationsergebnis ein vorgegebenes Prüfungskriterium erfüllt, wobei eine erfolgreiche Authentifizierung des aktuellen Nutzers als den registrierten Nutzer ein Erfüllen des vorgegebenen Prüfungskriteriums umfasst,
- Erzeugen eines von dem Erfolg der Authentifizierung des Computersystems und des Nutzers abhängigen Authentifizierungssignals durch das mobile, tragbare Kommunikationssystem,
- Freigabe des Zugriffs des Computersystems auf die in dem Speichersystem persistent gespeicherten physiologischen Daten des registrierten Nutzers, falls das Authentifizierungssignal eine erfolgreiche Authentifizierung des Computersystems und des aktuellen Nutzers angibt und falls eine Zustimmung des Nutzers zu dem Zugriff vorliegt.

Die verhaltensbasierte Authentifizierung des Nutzers vor der Freigabe des Zugriffs kann nach Ausführungsformen bewirkt, dass der Zugriff auf die physiologischen Daten nur dann erfolgen kann, wenn tatsächlich der registrierte Nutzer das Kommunikationssystem bei sich trägt und/oder verwendet. In Momenten, in denen der Nutzer das Kommunikationssystem nicht bei sich trägt bzw. in denen er das Kommunikationssystem nicht verwendet, kann keine Freigabe erfolgen. Mithin kann sichergestellt werden, dass Freigaben von physiologischen Daten, welche als höchstpersönliche Daten anzusehen sind, tatsächlich nur mit Zustimmung des registrierten Nutzers und nicht irgendeines unautorisierten Nutzers erfolgen.

Zur Authentifizierung des Nutzers wird eine verhaltensbasierte Authentifizierung eines Nutzers gegenüber einem mobilen, tragbaren Kommunikationssystem verwendet. Die Grundlage der verhaltensbasierten Authentifizierung ist ein individuelles intrinsisches Verhalten des Nutzers, welches durch eine natürliche Verhaltensweise des Nutzers definiert ist. Die verhaltensbasierte Authentifizierung ermöglicht es dem Nutzer sich gegenüber seinem mobilen, tragbaren Kommunikationssystem zu authentifizieren, indem er sich so verhält, wie er es gewohnt ist.

Ohne Eingabe eines Nutzernamens, eines PIN oder ähnlichem, kann der Nutzer dadurch authentifiziert werden, dass er das mobilen, tragbaren Kommunikationssystem mit sich führt und verwendet. Da es sich bei physiologischen Daten, welche Informationen über den physiologischen Zustand und insbesondere den Gesundheitszustand des Nutzers umfassen, um hochsensible Daten handelt, kann durch die Anforderung einer expliziten Zustimmung des Nutzers sichergestellt werden, dass ein Zugriff nur mit Einverständnis des Nutzers erfolgen kann.

Eine entsprechende Zustimmung kann beispielsweise in Form einer Bestätigung einer Zustimmungsanfrage durch den authentifizierten Nutzer erfolgen. Beispielsweise sendet das Computersystem eine Leseanfrage zum Lesen der physiologischen Daten an das mobile, tragbare Kommunikationssystem. Vor einer Freigabe des angefragten Lesezugriffs wird dem Nutzer auf einer Nutzerschnittstelle, wie etwa einem Display, eine Zustimmungsanfrage angezeigt. Diese kann der Nutzer bestätigen oder ablehnen. Im Falle einer Bestätigung wird der Zugriff freigegeben, im Falle einer Ablehnung wird der Zugriff verweigert. Dies kann vorteilhaft sein, dass der Nutzer bei jeder einzelnen Leseanfrage individuell entscheiden kann, ob er dieser zustimmt oder nicht. Nach Ausführungsformen gibt die Zustimmungsanfrage an, welche physiologischen Daten bzw. welche Art von physiologischen Daten ausgelesen werden sollen.

Nach Ausführungsformen kann die Zustimmung des Nutzers auch im Vorhinein gegeben und in dem mobilen, tragbaren Kommunikationssystem gespeichert sein, z.B. in einem geschützten Speicherbereich des Speichers des mobilen, tragbaren Kommunikationssystems. Es können beispielsweise Zugriffsrechte für das entsprechende Computersystem in einer Zugriffsrechteverwaltungsdatei festgelegt werden, welche die Zustimmung des Nutzers zu einer Freigabe des Zugriffs auf gespeicherten physiologischen Daten für ein oder mehrere Computersysteme umfassen. Beispielsweise legt die Zugriffsrechteverwaltungsdatei auch fest auf welche physiologischen Daten, etwa welche Klasse von Daten, das entsprechende Computersystem Zugriffsrechte besitzt. Der Vorteil einer gespeicherten Zustimmung kann sein, dass der Nutzer lediglich einmal seine Zustimmung geben muss. Somit kann sichergestellt werden, dass nichts ohne Einverständnis des Nutzers erfolgt. Zugleich kann der Aufwand einer expliziten Zustimmung zu jeder einzelnen Leseanfrage vermieden werden.

Ein mobiles, tragbares Kommunikationssystem kann ein einzelnes eigenständiges Gerät oder mehrere mechanische und/oder kommunikativ miteinander verbundene Geräte umfassen. Ein solches mobiles, tragbares Kommunikationssystem kann zum Beispiel umfassen: ein Smartphone, ein Tablet, ein Personal Digital Assistant, einen Pager, Smartglasses, eine Smartwatch, ein Navigationsgerät, einen Activity Tracker bzw. Fitnesstracker, ein Gerät zur Erfassung medizinischer Daten, insbesondere physiologischer und/oder biometrischer Daten wie ein Pulsmessgerät oder ein Blutdruckmessgerät.

Das mobile, tragbare Kommunikationssystem kann beispielsweise ein Wearable, d.h. ein am Körper des Nutzers tragbares Computersystem, umfassen. Ein Wearable bezeichnet somit ein Computersystem, das während der Anwendung am Körper des Nutzers befestigt ist. Wearables können sich von der Verwendung anderer mobiler Computersysteme dadurch unterscheiden, dass die hauptsächliche Tätigkeit des Benutzers nicht die Benutzung des Computers selbst, sondern eine durch den Computer unterstützte Tätigkeit in der realen Welt ist.

Viele mobile, tragbare Kommunikationssysteme, wie Smartphones oder Smartwatches, sind mit Sensoren ausgestattet, mit welchen sich physiologische Daten des Nutzers erfassen lassen. Drucksensoren erfassen an geeigneten Stellen, wie beispielsweise dem Handgelenk oder der Schläfe, den Puls und den Blutdruck, an einer weiteren Stelle wird die Körpertemperatur durch einen Temperatursensor erfasst. Die Kombination der aktuell erfassten physiologischen Daten kann dabei einen aktuellen physiologischen Zustand des Nutzers repräsentieren. Dieser physiologische Zustand ist dabei bezüglich einer Mehrzahl von Parametern höchst individuell. Beispielsweise kann der Ruhepuls eines jeden Menschen unterschiedlich sein. Andere Parameter wiederum sollten im Allgemeinen für alle Individuen in einem bestimmten Bereich liegen. Die Körpertemperatur sollte beispielsweise bei jedem Menschen um die 37°C liegen.

Biometrischen Daten umfassen Messwerte für eine Mehrzahl von biometrischen Parametern.

Als biometrische Parameter werden Parameter bezeichnet, welche den Körper eines Nutzers und seine Funktionen quantifizieren und zu einer Erkennung bzw. Identifikation des entsprechenden Nutzers verwendet werden können. Dabei kann es sich beispielsweise um Eigenschaften des Körpers handeln, wie beispielsweise den Augenabstand, die Ohrmuschelform, die Schuhgröße oder dem Fingerabdruckmuster. Ferner können biometrische Parameter auch Parameter umfassen, die sich mit der Zeit ändern können. Die Stimmfärbung beispielsweise ändert sich im Laufe des Lebens eines Menschen.

Ferner können die biometrischen Parameter Parameter einer Bewegung, etwa einer grobmotorischen Bewegung umfassen. Ein solcher Parameter kann einen konkreten Parameter, wie beispielsweise die Amplitude der Auf- und Abbewegung des Körpers beim Gehen, oder einen abstrakten Parameter, wie beispielsweise den durchschnittlichen Fehler der Hüftdrehung um die Körperlängsachse beim Laufen, umfassen.

Physiologische Daten umfassen Messwerte für eine Mehrzahl von physiologischen Parametern. Physiologischen Parameter sind Parameter, welche den physiologischen Zustand des Nutzers beschreiben. Physiologische Parameter können biometrische Parameter umfassen. Beispielsweise kann ein physiologischer Parameter durch genau einen biometrischen Parameter eines Nutzers direkt gegeben sein oder eine Kombination aus mehreren biometrischen Parametern oder aus mindestens einem biometrischen und einem nichtbiometrischen Parameter umfassen. Ein nichtbiometrischer Parameter umfasst beispielsweise die Zeit bzw. eine Zeiteinheit. So können beispielsweise die Änderung des Pulses, die Laufgeschwindigkeit und/oder die Änderung der Laufgeschwindigkeit einen physiologischen Parameter bilden.

Aus den physiologischen Daten lässt sich ein physiologischer Zustand bzw. lassen sich Informationen über einem physiologischen Zustand des Nutzers ableiten. Ein physiologischer Zustand bezeichnet den Zustand des Körpers eines Nutzers. Der Nutzer kann ein Mensch oder ein anderes Lebewesen sein. Ein Zustand wird dabei durch N physiologische Parameter charakterisiert, wobei N größer 1 ist. Die verschiedenen Zustände bilden Parameterwolken in einem N-dimensionalen Parameterraum. Diese Wolken können klar unterscheidbar voneinander sein oder einander partiell oder ganz überlappen. Versucht man den physiologischen Zustand eines Nutzers zu charakterisieren, so umfasst die Klassifikation eine Zuordnung der zur Verfügung stehenden physiologischen Parameter zu einem Zustand bzw. zu einer Zustandswolke.

Ausführungsformen können den Vorteil haben, dass das mobile, tragbare Kommunikationssystem zum Sammeln einer Vielzahl physiologischer Daten des Nutzers des entsprechenden Kommunikationssystems verwendet werden kann. Ein solches mobiles, tragbares Kommunikationssystem, wie etwa ein Smartphone, eine Smartwatch oder ein ähnliches Wearable, wird von dem Nutzer im Alltag mit sich geführt und kann über eine Mehrzahl von Sensoren physiologische Daten des Nutzers aufnehmen. Dies kann beispielsweise tagsüber erfolgen, wenn das entsprechende mobile, tragbare Kommunikationssystem vom Nutzer mitgeführt wird. Handelt es sich bei dem mobilen, tragbaren Kommunikationssystem beispielsweise um eine Smartwatch, so kann diese auch während der Nacht, insbesondere während des Schlafs getragen werden, und eine nahezu ununterbrochene 24-Stunden-Überwachung des physiologischen Zustands des Nutzers ermöglichen.

Ferner kann das mobile, tragbare Kommunikationssystem über eine Kommunikationsschnittstelle mit anderen Kommunikationssystemen kommunizieren, welche ebenfalls physiologische Daten des Nutzers des mobilen, tragbaren Kommunikationssystems erfassen können. Bei einem solchen weiteren Kommunikationssystem kann es sich beispielsweise um eine Waage mit einer Elektronik handeln, welches dazu konfiguriert ist, die physiologischen Daten des Nutzers an das mobile, tragbare Kommunikationssystem zu senden. Die entsprechende Elektronik umfasst beispielsweise einen Prozessor, einen Speicher mit Programminstruktionen, welche durch den Prozessor ausführbar und dazu konfiguriert sind, bei Ausführung durch den Prozessor das weitere Kommunikationssystem so zu steuern, dass es erfasste physiologische Daten des Nutzers über eine Kommunikationsschnittstelle an das mobile, tragbare Kommunikationssystem sendet. Zum Zwecke der Datensicherheit kann die entsprechende Kommunikation beispielsweise über einen Ende-zu-Ende-verschlüsselten Kommunikationskanal erfolgen. Dabei authentifiziert sich das mobile, tragbare Kommunikationssystem beispielsweise gegenüber dem weiteren Kommunikationssystem mit einem Berechtigungszertifikat. Voraussetzung für eine Authentifizierung des mobilen, tragbaren Kommunikationssystems gegenüber dem weiteren Kommunikationssystem kann beispielsweise eine erfolgreiche verhaltensbasierte Authentifizierung des aktuellen Nutzers gegenüber dem mobilen, tragbaren Kommunikationssystem sein. Ferner kann sich das weitere Kommunikationssystem gegenüber dem mobilen, tragbaren Kommunikationssystem authentifizieren.

Unter einer Ende-zu-Ende-Verschlüsselung wird hier eine Verschlüsselung einer Verbindung zwischen einem Sender und einem Empfänger verstanden, bei der zu übertragende Daten vom Sender verschlüsselt und erst vom Empfänger wieder entschlüsselt werden. Die Verschlüsselung übertragener Daten erfolgt somit über alle Übertragungsstationen hinweg, sodass Zwischenstationen aufgrund der Verschlüsslung keine Kenntnis vom Inhalt der übertragenen Daten erlagen können. Die Verbindung wird durch die Verschlüsselung kryptografisch abgesichert, um ein Ausspähen und/oder eine Manipulation der Übertragung zu verhindern, wobei hierzu ein sogenanntes Secure-Messaging-Verfahren eingesetzt werden kann. Eine Ende-zu-Ende-Verschlüsslung beruht beispielsweise auf zwei symmetrischen kryptographischen Schlüsseln, wobei ein erster der symmetrischen Schlüssel zum Verschlüsseln von Nachrichten und ein zweite der symmetrischen Schlüssel zum Authentifizieren des Senders der Nachricht dient.

Der Schlüssel zum Authentifizieren des Senders der Nachricht kann beispielsweise zum Erstellen eines Nachrichtenauthentifizierungscodes (Message Authentication Code, MAC) dienen. Mittels eines MAC lässt sich Gewissheit über den Ursprung der Nachrichten erhalten und deren Integrität verifizieren. MAC-Algorithmen erfordern zwei Eingabeparameter, erstens die zu schützenden Daten und zweitens einen geheimen Schlüssel. Aus diesen beiden wird ein Nachrichtenauthentifizierungscode in Form einer eine Prüfsumme berechnet. Der Sender einer Nachricht berechnet für die zu übermittelnden Daten der Nachricht einen MAC und sendet die Nachricht zusammen mit dem MAC an den Empfänger. Der Empfänger berechnet den MAC zu der empfangenen Nachricht mit seinem Schlüssel und vergleicht den berechneten MAC mit dem empfangenen MAC. Aus einer Übereinstimmung beider Werte folgt, dass die Nachricht von einer Partei abgeschickt wurde, welche Zugriff auf den geheimen Schlüssel besitzt und die Nachricht wurde während der Übertragung nicht verändert.

Die von dem mobilen, tragbaren Kommunikationssystem gesammelten physiologischen Daten werden persistent gespeichert. Dabei kann die persistente Speicherung nach Ausführungsformen in dem Speicher des mobilen, tragbaren Kommunikationssystems oder in einem externen Speichersystem erfolgen. Eine Speicherung in dem Speicher des mobilen, tragbaren Kommunikationssystems kann den Vorteil haben, dass die entsprechenden physiologischen Daten nur auf dem Speicher des mobilen, tragbaren Kommunikationssystems vorliegen und somit vor unberechtigten Zugriffen geschützt sind. Eine persistente Speicherung der physiologischen Daten bedeutet, dass die entsprechenden Daten nicht nur kurzzeitig zum Erstellen von Vergleichsparametern bzw. Anpassen von Vergleichsparametern zur verhaltensbasierten Authentifizierung des Nutzers des mobilen, tragbaren Kommunikationssystems gespeichert werden, sondern unabhängig von ihrer Nutzung für eine verhaltensbasierte Authentifizierung längerfristig gespeichert werden. Zur Begrenzung der in dem Speicher des mobilen, tragbaren Kommunikationssystems gespeicherten Datenmengen kann je nach Ausführungsform vorgesehen sein, dass persistent gespeicherte physiologische Daten bei Erreichen einer Höchstspeicherdauer oder Höchstspeicherdatenmenge aus dem Speicher des mobilen, tragbaren Kommunikationssystems gelöscht werden. Nach Ausführungsformen erfolgt eine Löschung psychologischer Daten nur unter der Voraussetzung, dass die entsprechenden Daten an ein externes Speichersystem übertragen wurden, beispielsweise zum Zwecke der Erstellung eines Backups oder zum Zwecke einer Auswertung durch eine qualifizierte Person, wie beispielsweise einen Arzt.

Eine Speicherung in einem externen Speichersystem kann den Vorteil haben, dass große Datenmengen, insbesondere im Falle von Rohdaten, langfristig gespeichert werden können. Somit kann gewährleitet werden, dass die entsprechenden Daten langfristig für Auswertungen zur Verfügung stehen. Insbesondere kann so ermöglicht werden, dass rückwirkend Entwicklungen des physiologischen Zustands des Nutzers rekonstruiert werden können, was das Verständnis eines aktuellen physiologischen Zustands des Nutzers unterstützen kann.

Eine persistente Speicherung umfasst nach Ausführungsformen eine Speicherung in einem persistenten Speicher bzw. Speichermedium, d.h. einem nichtflüchtigen Speicher.

Unter einem Speicher werden hier sowohl flüchtige als auch nicht flüchtige elektronische Speicher bzw. digitale Speichermedien verstanden.
Unter einem nichtflüchtigen Speicher wird hier ein elektronischer Speicher zur dauerhaften Speicherung von Daten verstanden. Ein nichtflüchtiger Speicher kann als nichtänderbarere Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem flüchtigen elektronischen Speicher wird hier ein Speicher zur vorübergehenden Speicherung von Daten, welcher dadurch gekennzeichnet ist, dass alle Daten nach dem Abschalten der Energieversorgung verloren gehe. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem geschützten Speicherbereich wird hier ein Bereich eines elektronischen Speichers verstanden, auf den ein Zugriff, das heißt ein Lesezugriff oder ein Schreibzugriff, nur über einen Prozessor des entsprechenden elektronischen Geräts möglich ist. Nach Ausführungsformen ist der Zugriff von dem mit dem Speicher gekoppelten Prozessor nur dann möglich, wenn eine hierzu erforderliche Bedingung erfüllt ist. Hierbei kann es sich zum Beispiel um eine kryptographische Bedingung, insbesondere eine erfolgreiche Authentisierung und/oder eine erfolgreiche Berechtigungsprüfung, handeln.

Unter einem Prozessor wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem Prozessor ein Mikroprozessor oder ein Mikroprozessorsystem aus mehreren Prozessorkernen und/oder mehreren Mikroprozessoren verstanden.

Unter einem Programm bzw. Programminstruktionen wird hier ohne Einschränkung jede Art von Computerprogramm verstanden, welches maschinenlesbare Instruktionen zur Steuerung einer Funktionalität eines Computers umfasst.

Unter einer Kommunikationsschnittstelle wird hier eine Schnittstelle verstanden, über die Daten empfangen und gesendet werden können, wobei die Kommunikationsschnittstelle kontaktbehaftet oder kontaktlos konfiguriert sein kann, beispielsweise nach einem RFID- und/oder NFC-Standard. Bei der Kommunikationsschnittstelle kann es sich um eine interne Schnittstelle oder um eine externe Schnittstelle handeln, welche beispielsweise mittels eines Kabels oder kabellos mit einem zugeordneten Gerät verbunden ist.

Eine Kommunikation kann beispielsweise über ein Netzwerk erfolgen. Unter einem Netzwerk wird hier jedes Übertragungsmedium mit einer Anbindung zur Kommunikation verstanden, insbesondere eine lokale Verbindung oder ein lokales Netzwerk, insbesondere ein Local Area Network (LAN), ein privates Netzwerk, insbesondere ein Intranet, und ein virtuelles privates Netzwerk (Virtual Private Network - VPN). Beispielsweise kann ein Computersystem eine Standardfunkschnittstelle zur Anbindung an ein WLAN aufweisen. Ferner kann es sich um ein öffentliches Netzwerk, wie beispielsweise das Internet handeln. Je nach Ausführungsform kann diese Verbindung auch über ein Mobilfunknetz hergestellt werden.

Das Freigeben des Zugriffs auf die physiologischen Daten des Nutzers durch das mobile, tragbare Kommunikationssystem kann den Vorteil haben, dass eine qualifizierte Person, d.h. ein Angehöriger eines Heilberufs, wie beispielsweise ein Arzt, die entsprechenden physiologischen Daten dazu verwenden kann, Aussagen über den physiologischen Zustand, insbesondere den Gesundheitszustand, des Nutzers zu machen und beispielsweise Diagnosen zu erstellen.

Ausführungsformen können den Vorteil haben, dass sie ein einfaches und sicheres Verfahren bereitstellen, durch welches Angehörigen eines Heilberufes Zugriff auf die persistent gespeicherten physiologischen Daten des Nutzers gewährt werden kann. Das Gewähren des Zugriffs kann nach Ausführungsformen insbesondere unter der Voraussetzung einer expliziten Zustimmung des Nutzers des mobilen, tragbaren Kommunikationssystems sowie eines Nachweises einer Zugriffsberechtigung seitens des Angehörigen des Heilberufs erfolgen. Somit kann sichergestellt werden, dass physiologische Daten des Nutzers nur dann herausgegeben werden, wenn der Empfänger zu dem Zugriff berechtigt ist und zudem eine explizite Einwilligung des Nutzers zu dem Zugriff vorliegt. Beispielsweise ist das Computersystem, welches den Zugriff auf die physiologischen Daten anfragt einem Angehörigen eines Heilberufs zugeordnet.

Das Verfahren kann beispielsweise verwendet bei einem Arztbesuch des Nutzers angewendet werden, welcher das mobile, tragbare Kommunikationssystem mit sich führt. Bei dem Computersystem kann es sich beispielsweise um ein Computersystem des Arztes handeln. Beispielsweise handelt es sich um einen Computer einer Arztpraxis oder einer Klinik. Das Computersystem authentifiziert sich gegenüber dem mobilen, tragbaren Kommunikationssystem. Eine entsprechende Authentifizierung kann beispielsweise ein Übertragen einer mit einem privaten Signaturschlüssel signierte Nachricht umfassen. Bei dem privaten Signierschlüssel kann es sich um einen privaten, kryptografischen Schlüssel handeln, welchem ein öffentlicher kryptografischer Schlüssel, d.h. ein Signaturprüfschlüssel, zugeordnet ist. Der entsprechende Signaturprüfschlüssel kann beispielsweise zusammen mit einem Berechtigungszertifikat bzw. als Teil des Berechtigungszertifikats des Computersystems bzw. einer Person oder Instanz, welcher das Computersystem zugeordnet ist, bereitgestellt werden. Beispielsweise wird es von dem Computersystem an das mobile, tragbare Kommunikationssystem im Zuge des Authentifizierungsverfahrens gesendet. Das Berechtigungszertifikat kann festlegen, dass der Nutzer des Computersystems Rechte zum Lesen der gespeicherten physiologischen Daten besitzt. Ferner können die physiologischen Daten in unterschiedliche Klassen unterteilt sein. Das Berechtigungszertifikat kann ferner festlegen, auf welche Klasse von physiologischen Daten der Nutzer Zugriffsrechte besitzt bzw. Rechte des Nutzers des Computersystems, d.h. des Arztes, auf bestimmte Klassen von physiologischen Daten beschränken. Beispielsweise ist der private Signaturschlüssel einem Angehörigen eines Heilberufs zugeordnet und in einem geschützten Speicherbereich eines elektronischen Heilberufeausweises gespeichert. Die signierte Nachricht von dem Computersystem in diesem Fall beispielsweise unter Verwendung desentsprechenden elektronischen Heilberufeausweises bereitgestellt. Bei dem Berechtigungszertifikat kann es sich beispielsweise um fachrichtungsabhängiges Berechtigungszertifikat eines Arztes handeln, welches dies Lesezugriffsrechte auf eine fachrichtungsabhängige Auswahl an physiologischen Parameter beschränkt.

Ferner kann der Nutzer des mobilen, tragbaren Kommunikationssystems festlegen, auf welche Klassen von physiologischen Daten einem Arzt Zugriff gewährt werden soll. Beispielsweise kann der Nutzer des mobilen, tragbaren Kommunikationssystems festlegen, dass Ärzten bestimmter Fachrichtungen Lesezugriffsrechte auf eine fachrichtungsabhängige Auswahl an physiologischen Parameter besitzen. Ferner kann der Nutzer festlegen, dass Angehörige bestimmter Heilberufe Zugriffe auf heilberufsabhängige physiologische Daten besitzen. Ferner kann der Nutzer des mobilen, tragbaren Kommunikationssystems festlegen, dass bestimmte individuelle Ärzte und/oder Angehörige von Heilberufen Leserechte für eine individuell festgelegte Auswahl an Klassen von physiologischen Daten besitzen. Diese Festlegungen können somit die Zustimmung des Nutzers zu bestimmten klar definierten Lesezugriffen umfassen. Klar definiert ist ein Lesezugriff, wenn festgelegt wird, wer welche Daten Lesen darf. Beispielsweise wird für einen bestimmten individuellen Arzt festgelegt, welche Klasse von physiologischen Daten dieser bis zum Widerruf der Zustimmung lesen darf.

Bei dem digitalen Zertifikat kann es sich auch um ein Public-Key-Zertifikat handeln. Durch Public-Key-Zertifikate kann eine sogenannte Public Key Infrastructure (PKI) realisiert werden. Bei einem solchen Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Ein Zertifikat kann beispielsweise einen öffentlichen Schlüssel beinhalten und signiert sein. Alternativ sind auch Zertifikate basierend auf zero-knowledge Kryptosystemen möglich. Beispielsweise kann das Zertifikat dem Standard X.509 oder einem anderen Standard entsprechen. Beispielsweise handelt es sich bei dem Zertifikat um ein CV-Zertifikat oder auch Card Verifiable Certificate (CVC). Eine Implementierung von solchen CVCs ist beispielsweise in der ISO/IEC 7816-8 spezifiziert.

Die PKI stellt ein System zum Ausstellen, Verteilen und Prüfen digitaler Zertifikate. Ein digitales Zertifikat dient in einem asymmetrischen Kryptosystem dazu die Authentizität eines öffentlichen Schlüssels und seinen zulässigen Anwendungs- und Geltungsbereich zu bestätigen. Das digitale Zertifikat ist selbst durch eine digitale Signatur geschützt, deren Echtheit mit dem öffentlichen Schlüssel des Ausstellers des Zertifikates geprüft werden kann. Um die Authentizität des Ausstellerschlüssels zu prüfen, wird wiederum ein digitales Zertifikat verwendet. Auf diese Weise lässt sich eine Kette von digitalen Zertifikaten aufbauen, die jeweils die Authentizität des öffentlichen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikats, des sogenannten Wurzelzertifikats, und des durch dieses Zertifikat zertifizierten Schlüssels, müssen sich die Teilnehmer der PKI ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der PKI zurückgeht.

Digitale Zertifikate sind bei der Absicherung elektronischer Kommunikation durch asymmetrische kryptographische Verfahren ein bewährtes Mittel um Berechtigungen nachzuweisen. Zertifikate sind strukturierte Daten, die die Authentizität und/oder weitere Eigenschaften/Berechtigungen des Eigentümers/Inhabers eines öffentlichen Schlüssels (Signaturprüfschlüssel) dokumentieren und durch eine unabhängige, glaubwürdige Instanz (Zertifizierungsdienstanbieter/ZDA), im Allgemeinen die das Zertifikat zuteilende Zertifizierungsstelle, bestätigen. Zertifikate werden in der Regel einem breiten Personenkreis zur Verfügung gestellt um diesem eine Prüfung elektronischer Signaturen auf Authentizität und Gültigkeit zu ermöglichen.

Ein Zertifikat kann einer elektronischen Signatur zugeordnet sein, wenn der zu dem öffentlichen Schlüssel gehörende private Schlüssel zur Generierung der zu prüfenden elektronischen Signatur verwendet wurde. Dadurch, dass ein ZDA ein Zertifikat in Assoziation mit einem öffentlichen Schlüssel der Allgemeinheit zur Verfügung stellt, ermöglicht ein ZDA den Nutzern asymmetrischer Kryptosysteme den öffentlichen Schlüssel einer Identität, beispielsweise einer Person, einer Organisation oder Computersystem, zuzuordnen.

Asymmetrische Schlüsselpaare werden für eine Vielzahl von Kryptosystemen eingesetzt und spielen auch bei der Signatur elektronischer Dokumente eine wichtige Rolle. Ein asymmetrisches Schlüsselpaar besteht aus einem öffentlichen Schlüssel, welcher zur Ver- und/oder Entschlüsselung von Daten verwendet wird und an Dritte, beispielsweise an einen Dienstanbieter und/oder einen ZDA, weitergegeben werden darf sowie einem privaten Schlüssel, welcher zur Ver- und/oder Entschlüsselung von Daten verwendet wird und im Regelfall geheim gehalten werden muss. Der öffentliche Schlüssel ermöglicht es jedermann, Daten für den Inhaber des privaten Schlüssels zu verschlüsseln, digitale Signaturen von dessen Dokumenten zu prüfen oder ihn zu authentifizieren. Ein privater Schlüssel ermöglicht es seinem Inhaber, mit dem öffentlichen Schlüssel verschlüsselte Daten zu entschlüsseln oder digitale Signaturen für elektronische Dokumente zu erstellen. Eine mit einem privaten Schlüssel erstellte Signatur kann mit dem zugehörigen öffentlichen Schlüssel verifiziert werden.

Digitale Signaturen werden zum sicheren elektronischen Datenaustausch, beispielsweise im Internet, eingesetzt und ermöglichen die Prüfung von Identitäten und/oder Berechtigungen und der Unverfälschtheit der ausgetauschten Daten. Um dies zu gewährleisten, ist in der Regel eine Public-Key-Infrastruktur notwendig, die die Gültigkeit der verwendeten Schlüssel durch Zertifikate bestätigt.

Die Erstellung einer digitalen Signatur, im Folgenden auch lediglich als "Signatur" bezeichnet, ist ein kryptographisches Verfahren, bei dem zu beliebigen Daten, zum Beispiel einem elektronischen Dokument, ein weiterer Datenwert, welcher als "Signatur" bezeichnet wird, berechnet wird. Die Signatur kann zum Beispiel ein verschlüsselter Hashwert des elektronischen Dokumentes sein, insbesondere ein mit einem privaten Schlüssel eines einem Zertifikat zugeordneten kryptographischen Schlüsselpaares verschlüsselter Hashwert. Ein entsprechendes Verschlüsseln eines Hashwerts wird mithin als Signieren des Hashwerts bezeichnet. Die Besonderheit einer solchen Signatur besteht darin, dass deren Urheberschaft und Zugehörigkeit zu einer bestimmten Person oder Instanz durch jeden Dritten geprüft werden kann.

Unter einer digitalen Signatur wird hier auch ein digitales Siegel verstanden, welches nicht einer natürlichen Person, sondern einer juristischen Person zugeordnet ist. Ein digitales Siegel dient somit nicht der Abgabe einer Willenserklärung einer einzelnen Person, sondern einer Institution als Herkunftsnachweis. Es kann somit den Ursprung und die Unversehrtheit virtueller Dokumente sicherstellen und nachweisen, dass diese von einer bestimmten juristischen Person stammen.

Nach Ausführungsformen kann die Nachricht zum Authentifizieren des Computersystems eine Anfrage zum Lesen von physiologischen Daten im Speicher des mobilen, tragbaren Kommunikationssystems umfassen. Nach weiteren Ausführungsformen kann eine entsprechende Anfrage zusätzlich zu einer Nachricht zum Zwecke der Authentifizierung gesendet werden.

Beispielsweise betritt der Nutzer mit seinem mobilen, tragbaren Kommunikationssystem im Zuge eines Arztbesuchs eine Arztpraxis. Das mobile, tragbare Kommunikationssystem empfängt eine Anfrage des Computersystems des Arztes zum Auslesen von physiologischen Daten eines Nutzers aus dem Speicher des mobilen, tragbaren Kommunikationssystems. Dabei authentifiziert sich das Computersystem gegenüber dem mobilen, tragbaren Kommunikationssystem und weist Leserechte zum Lesen physiologischer Daten des Nutzers, beispielsweise durch ein entsprechendes Berechtigungszertifikat, nach. Nach Ausführungsformen kann zusätzlich ein Abgleich der von dem im Berechtigungszertifikat nachgewiesenen Leseberechtigungen mit internen, von dem Nutzer des mobilen, tragbaren Kommunikationssystems definierten Leseberechtigungen erfolgen. In diesem Fall kann ein Zugriff auf physiologische Daten nur für solche Daten erfolgen, für welche übereinstimmende interne Leseberechtigungen vom Nutzer des mobilen, tragbaren Kommunikationssystems festgelegt wurden und/oder keine Lesesperren gespeichert sind.

Auf eine entsprechende Leseanfrage hin erfolgt eine Authentifizierung des aktuellen Nutzers durch das mobile, tragbare Kommunikationssystem. Die entsprechende Authentifizierung erfolgt verhaltensbasiert, d.h. dass der Nutzer auf Basis seines aktuellen Verhaltens authentifiziert wird. Ohne dass der Nutzer eine zusätzliche Handlung ausführen muss, erfasst das mobile, tragbare Kommunikationssystem verhaltensbasierte Daten, z.B. grobmotorische Bewegungsdaten, des aktuellen Nutzers des mobilen, tragbaren Kommunikationssystems. Auf Basis der erfassten Daten wird das Verhalten des aktuellen Nutzers erfasst und unter Verwendung des Kommunikationsmoduls geprüft, ob es sich bei dem aktuellen Nutzer um den registrierten Nutzer handelt. So kann etwa anhand des Bewegungsmusters des aktuellen Nutzers beim Betreten der Arztpraxis festgestellt werden, ob es sich bei dem aktuellen Nutzer tatsächlich um den registrierten Nutzer des mobilen, tragbaren Kommunikationssystems handelt, für welchen die physiologischen Daten erfasst und gespeichert wurden.

Nach Ausführungsformen ist das mobile, tragbare Kommunikationssystem dazu konfiguriert, physiologische Daten nur unter der Voraussetzung, zu speichern, dass es sich bei den erfassten physiologischen Daten um Daten eines registrierten Nutzers des mobilen, tragbaren Kommunikationssystems handelt. Mit anderen Worten ist die Voraussetzung zur persistenten Speicherung physiologischer Daten eines aktuellen Nutzers, dass der entsprechend aktuelle Nutzer im Zuge einer verhaltensbasierten Authentifizierung als der registrierte Nutzer authentifiziert ist.

Anhand einer erfolgreichen verhaltensbasierten Authentifizierung des aktuellen Nutzers kann festgestellt werden, dass es sich bei dem aktuellen Nutzer tatsächlich um den registrierten Nutzer handelt, dessen physiologische Daten abgefragt werden. Für eine Freigabe der abgefragten physiologischen Daten kann nach Ausführungsformen eine explizite Zustimmung des aktuellen Nutzers notwendig sein. Diese kann singulär erteilt oder im dem mobilen, tragbaren Kommunikationssystem für eine Mehrzahl von Lesezugriffen hinterlegt sein. Eine hinterlegte Zustimmung kann beispielsweise zeitliche beschränkt sein. Durch die verhaltensbasierte Authentifizierung kann sichergestellt sein, dass eine entsprechende Zustimmung tatsächlich vom registrierten Nutzer stammt.

Auf eine erfolgreiche verhaltensbasierte Authentifizierung des aktuellen Nutzers hin wird die Zustimmung des aktuellen Nutzers zur Freigabe des Zugriffs auf die in dem Speicher persistent gespeicherten physiologischen Daten des registrierten Nutzers abgefragt. Willigt der aktuelle Nutzer des mobilen, tragbaren Kommunikationssystems ein, so werden die angefragten physiologischen Daten an das Computersystem übertragen. Die Übertragung der physiologischen Daten erfolgt nach Ausführungsformen über einen Ende-zu-Ende-verschlüsselten Kommunikationskanal. Beispielsweise sind die physiologischen Daten zudem mit einem privaten kryptografischen Schlüssel eines dem registrierten Nutzer des mobilen, tragbaren Kommunikationssystems zugeordneten öffentlichen Schlüssels signiert.

Aus Sicht des Nutzers wird im Zuge des Arztbesuchs beispielsweise lediglich eine Anfrage auf einem Display des mobilen, tragbaren Kommunikationssystems angezeigt, welche die Einwilligung des Nutzers zur Übertragung physiologischer Daten an das Computersystem des Arztes abfragt. Der Nutzer hat die freie Wahl, dieser Übertragung zuzustimmen oder diese abzulehnen. Willigt der Nutzer ein, werden die angefragten physiologischen Daten übertragen, lehnt der Nutzer ab, so erfolgt keine Übertragung. Die Verfügungsgewalt über die physiologischen Daten liegt somit allein beim registrierten Nutzer des mobilen, tragbaren Kommunikationssystems.

Ist die Zustimmung des Nutzers in dem mobilen, tragbaren Kommunikationssystem hinterlegt, sind für die Freigabe des Zugriffs keinerlei zusätzlichen Aktionen des Nutzers notwendig. Beispielsweise wird der Nutzer durch eine Anzeige auf einem Display des mobilen, tragbaren Kommunikationssystems lediglich darüber in Kenntnis gesetzt, dass eine Freigabe erfolgt ist oder dass eine Freigabe verweigert wurde.

Nach Ausführungsformen können die physiologischen Daten als Rohdaten, d.h. in Form der durch die Sensoren erfassten Messwerte, gespeichert werden. Nach Ausführungsformen wird eine Auswahl der erfassten Messwerte für die physiologischen Daten gespeichert. Die Auswahl kann beispielsweise unter Verwendung eines zeitlichen Auswahlkriteriums oder eines quantitativen Auswahlkriteriums erstellt werde. Beispielsweise werden die physiologischen Daten in vordefinierten zeitlichen Abständen gespeichert. Ferner können Messwerte der physiologischen Daten beispielsweise gespeichert werden, wenn sie außerhalb eines vordefinierten Normbereichs liegen, d.h. einen vordefinierten Schwellenwert unter- oder überschreiten. Nach Ausführungsformen können die physiologischen Daten ein Gesundheitsprofil des Nutzers umfassen. Nach Ausführungsformen können die physiologischen Daten in Form eines Gesundheitsprofils bereitgestellt werden oder es kann zusätzlich zu den physiologischen Daten ein unter Verwendung der entsprechenden Daten erstelltes Gesundheitsprofil bereitgestellt werden.

Nach Ausführungsformen ist das Klassifikationsmodul zusätzlich zur Erkennung einer Mehrzahl von generischen Zuständen einer Mehrzahl von physiologischen Parametern mit Hilfe von Trainingsdatensätzen einer Nutzerkohorte trainiert oder es ist ein entsprechendes zusätzliches Klassifikationsmodul vorgesehen. Das Klassifikationsergebnis umfasst dabei einen oder mehrere physiologische Zustände, welche sogenannte generische Zustände sind. Die generischen Zustände sind bekannt und hinreichend beschrieben, um sie anhand der physiologischen Parameter klassifizieren zu können. Ferner wurden die physiologischen Parameter für jeden dieser Zustände als Datensätze der Nutzerkohorte, sogenannte Trainingsdatensätze, erfasst, wodurch die generischen Zustände in Kombination mit den Trainingsdatensätzen eine Grundlage für die Klassifikation des physiologischen Zustandes bilden.

Unter einem Referenzzustand wird hier ein physiologischer Zustand verstanden, welcher als Bezugspunkt und/oder Bezugsbereich für den Vergleich mit allen klassifizierbaren physiologischen Zuständen verwendet wird. Der Referenzzustand kann beispielsweise dadurch definiert sein, dass eine Mehrzahl von Parametern in einem Normalbereich ist. Der Normalbereich der Parameter ist beispielsweise definiert als ein Bereich in welchem die Parameter einer Mehrheit von Nutzern einer repräsentativen Gruppe von Durchschnittsnutzern liegen. Der Normalbereich kann ferner beispielsweise auf den Nutzer individuell angepasst und/oder unabhängig durch Fachpersonal, beispielsweise einen Arzt, einen Fitnesstrainer etc., festgelegt sein.

Unter einem Anormalzustand wird hier ein physiologischer Zustand verstanden, welcher von dem Referenzzustand abweicht, d.h. bei welchem einer oder mehrere der Parameter der Mehrzahl von Parametern außerhalb des Normalbereichs liegt.

Der klassifizierte physiologische Zustand kann dabei einer Gruppe von Zuständen zugeordnet werden, die entweder akzeptable Zustände umfasst oder der klassifizierte physiologische Zustand kann einer Gruppe von Zuständen zugeordnet werden, die inakzeptable Zustände umfasst. Inakzeptable Zustände können beispielsweise für den Nutzer problematische und/oder schädliche Zustände umfassen. Akzeptable Zustände können beispielsweise für den Nutzer unproblematische und/oder vorteilhafte Zustände umfassen.

Beispielsweise ein Mensch, welcher ein Fitnesstraining absolviert, macht sich zunächst warm. Der Körper befindet sich zunächst in seinem Referenzzustand. Durch die Bewegung steigt der Puls, die Muskulatur wird weicher. Der Körper wechselt in einen "Trainingszustand". Der Trainingszustand kann beispielsweise ein akzeptabler Zustand sein. Je nach Trainingsart wechselt der Körper mit der Zeit in einen Zustand, in dem Fett verbrannt, Kondition aufgebaut und/oder Muskulatur aufgebaut wird. Ein weiteres Beispiel für mögliche Zustände sind Kreislaufstörungen. Bewegt sich der Nutzer sehr plötzlich mit sehr hoher Intensität, beispielsweise weil der Nutzer schnell zu einer Bushaltestelle läuft, um einen gerade anhaltenden Bus nehmen zu können, so kann sich der Körper in einer so kurzen Zeit möglicherweise nicht umstellen und dem Körper kann im Extremfall ein Kreislaufzusammenbruch, beispielsweise aufgrund von Unterzuckerung, drohen. Eine solche Kreislaufstörung kann beispielsweise als ein inakzeptabler Zustand klassifiziert werden. Auch äußere Einflüsse können Auswirkungen auf den physiologischen Zustand des Nutzers haben. Insbesondere an heißen Tagen bzw. in heißer Umgebung kann beispielsweise ein Sonnenstich einen von dem Referenzzustand abweichenden Zustand verursachen. Die Klassifikation eines solchen Zustands kann beispielsweise ein inakzeptabler Zustand sein.

Zur Klassifikation des physiologischen Zustandes führt das System die folgenden Schritte aus:
- Erfassen der Daten durch den mindestens einen Sensor.
- Eingeben der Daten in das Klassifikationsmodul.
- Generieren eines Klassifikationsergebnisses aus den Daten durch das Klassifikationsmodul.
- Speichern des Klassifikationsergebnisses in dem Speicher des Kommunikationssystems.

Das Klassifikationsergebnis umfasst ein aktuelles Gesundheitsprofil des Nutzers. Das Gesundheitsprofil umfasst eine Klassifikation des physiologischen Zustandes des Nutzers hinsichtlich der Mehrzahl von generischen Zuständen der Mehrzahl physiologischer Parameter.

Die Klassifikation des aktuellen physiologischen Zustandes des Nutzers umfasst ein Echtzeitabbild des aktuellen physiologischen Zustandes und mindestens eine Zuordnung des physiologischen Zustandes in eine Klasse von Zuständen und/oder zu einem einzelnen Zustand.

In einer Ausführungsform umfasst mindestens einer der generischen Zustände der Mehrzahl von physiologischen Parametern einen Anormalzustand des Nutzers. Als Anormalzustand wird hierin eine Abweichung des physiologischen Zustandes von dem Referenzzustand betrachtet, welcher eine Schädigung des Körpers des Nutzers, seines Immunsystems, eine Verletzung, eine Erkrankung aufgrund eines Virus, eines Bakteriums und/oder eines Parasiten und/oder einen beliebigen negativen physiologischen Zustand des Nutzers andeutet. Wird gemäß dem Klassifikationsergebnis ein Anormalzustand klassifiziert, so ist dies ein Hinweis darauf, dass der Körper des Nutzers eine Auffälligkeit zeigt. Der Nutzer kann beispielsweise diese Klassifikation als Warnung betrachten und daraufhin einen Arzt aufsuchen, um sich bezüglich des klassifizierten physiologischen Zustandes untersuchen zu lassen. Das Klassifikationsergebnis kann dem Arzt somit Auffälligkeiten aufzeigen, wodurch dieser eine Diagnose eventuell schneller zu stellen vermag.

Bewegt sich beispielsweise ein Nutzer und ein grobmotorisches Bewegungsmusterregistriert dabei kontinuierlich seine Bewegung, so erhöht sich der Puls des Nutzers. Das Klassifikationsmodul erkennt einen erhöhten Puls bei gleichzeitiger Bewegung und klassifiziert den physiologischen Zustand als einen Bewegungszustand. Ist hingegen der Puls erhöht, ohne dass sich der Nutzer bewegt bzw. eine grobmotorische Bewegung erkannt wird, so könnte beispielsweise eine Entzündung im Körper des Nutzers vorliegen Dem Nutzer würde diese Auffälligkeit mittels seines Gesundheitsprofils mitgeteilt werden.

In einer Ausführungsform verwendet das Klassifikationsmodul ältere Daten zur Generierung des Klassifikationsergebnisses. Älter bezeichnet in diesem Zusammenhang, dass die Daten schon für eine vorangegangene Klassifikation des physiologischen Zustandes verwendet wurden.

Durch das Verwenden älterer Daten können einzelne physiologische Parameter in einem zeitlichen Kontext betrachtet werden. Ist der Nutzer beispielsweise gerade am Ende einer Trainingseinheit angelangt, so kann gemäß dieser Ausführungsform eine erhöhte Pulsfrequenz in einem Kontext der Trainingseinheit betrachtet werden. Üblicherweise benötigt der Körper eine gewisse Zeit, um sich wieder in den Referenzzustand zu begeben. Die Betrachtung des zeitlichen Kontexts berücksichtigt dies. Würde der Puls beispielsweise ohne zeitlichen Kontext betrachtet werden, so würde das Klassifikationsergebnis in den ersten Momenten nach einer Trainingseinheit einen viel zu hohen Ruhepuls erfassen, da sich der Nutzer nicht mehr bewegt.

Nach Ausführungsformen weist das Kommunikationssystem einen internen Speicher auf, wobei das Generieren des zumindest einen Klassifikationsergebnisses unter Verwendung zumindest eines ersten Konfidenzwertes erfolgt, wobei das Verfahren ferner zum Bereitstellen des zumindest einen ersten Konfidenzwertes umfasst:
- Wiederholtes Ausführen eines Generierens von ersten Konfidenzwerten, wobei das Generieren der ersten Konfidenzwerte umfasst:
   ∘ Erfassen verhaltensbasierter Daten des Nutzers durch den zumindest einen Sensor des Kommunikationssystems,
   ∘ Eingabe der erfassten Daten in das Klassifikationsmodul,
   ∘ Generieren zumindest eines ersten Konfidenzwertes durch das Klassifikationsmodul,
   ∘ Speichern des zumindest einen ersten Konfidenzwertes in dem Speicher des Kommunikationssystems,
- Zugreifen auf den Speicher des Kommunikationssystems, um zumindest einen der generierten und gespeicherten ersten Konfidenzwerte zum Generieren des zumindest einen Klassifikationsergebnisses aus dem Speicher auszulesen.

Die verhaltensbasierte Authentifizierung eines Nutzers kann in zwei operative Abschnitte unterteilt werden. Abschnitt A umfasst ein wiederholtes Ausführen des Generierens eines Konfidenzwertes, wobei das Generieren des Konfidenzwertes die folgenden Schritte umfasst:
- Erfassen der verhaltensbasierten Daten durch den mindestens einen Sensor des Kommunikationssystems,
- Eingabe der Daten in das Klassifikationsmodul,
- Generieren mindestens eines ersten Konfidenzwertes durch das Klassifikationsmodul,
- Speichern des mindestens einen ersten Konfidenzwertes in dem Speicher des Kommunikationssystems.

Diese Schritte werden wiederholt ausgeführt, wodurch fortlaufend Konfidenzwerte generiert und in dem Speicher des Kommunikationssystems gespeichert werden.

Im zweiten Abschnitt der verhaltensbasierten Authentifizierung reagiert das mobile, tragbare Kommunikationssystem auf eine Authentifizierungsanfrage an ein für die Authentifizierung konfiguriertes Anwendungsprogramm. Eine Anwendung kann beispielsweise ein Anwendungsprogramm bzw. eine Applikation umfassen, welche auf dem mobilen, tragbaren Kommunikationssystem implementiert ist und/oder über das mobile, tragbare Kommunikationssystem gesteuert wird. Unter einem Anwendungsprogramm wird hier ohne Einschränkung jede Art von Computerprogramm verstanden, welches maschinenlesbare Instruktionen zur Steuerung einer Funktionalität eines Computers umfasst. Ein solches Anwendungsprogramm kann beispielsweise dazu konfiguriert sein eine nützliche oder gewünschte, nicht systemtechnische Funktionalität zu bearbeiten oder zu unterstützen.

Auf die Authentifizierungsanfrage hin greift der Prozessor des mobilen, tragbaren Kommunikationssystems auf den internen Speicher des Kommunikationssystems zu und liest mindestens einen ersten Konfidenzwert aus. Der mindestens eine erste Konfidenzwert wird dann verwendet, um ein Klassifikationsergebnis zu generieren. Dieses wird gegen ein bestimmtes, vordefiniertes Prüfungskriterium geprüft. Erfüllt das Klassifikationsergebnis das Prüfungskriterium, so wird gemäß einer Ausführungsform ein Authentifizierungssignal erzeugt, wobei das Authentifizierungssignal die Information des Erfolges der Authentifizierung des Nutzers umfasst und den Zugriff auf das Speichersystem gewährt. Wird das Prüfungskriterium durch das Klassifikationsergebnis nicht erfüllt, so wird dem Nutzer kein Zugriff auf das Speichersystem gewährt.

In einer Ausführungsform wird dem Nutzer so lange Zugriff auf das Speichersystem gewährt, wie er sich erfolgreich authentifizieren kann bzw. authentifiziert wird. Erst wenn das Authentifizierungssignal eine Information einer nicht-erfolgreichen Authentifizierung umfasst, wird dem Nutzer der Zugriff auf das Speichersystem verweigert.

Gemäß einer Ausführungsform werden die Daten durch den mindestens einen Sensor als Datenstrom (Stream) erfasst. Durch die Erfassung der Daten als Stream ergibt sich vorteilhafterweise eine maximal sensible Einteilung der ersten Konfidenzwerte pro Zeiteinheit. Es werden kontinuierlich Daten erfasst, welche kontinuierlich zu ersten Konfidenzwerten verarbeitet werden. Kontinuierlich bedeutet in diesem Zusammenhang, dass die Daten so oft erfasst werden, wie es der Takt des Prozessors und/oder des Sensors zulässt. Durch die kontinuierlich zur Verfügung stehenden Konfidenzwerte kann jederzeit ein Klassifikationsergebnis aus den zeitnah erzeugten Konfidenzwerten generiert werden, ohne dass das Kommunikationssystem erst abwarten muss, bis ein vorbestimmtes Messintervall abgelaufen und aktuelle Daten verarbeitet wurden. Ferner werden kontinuierlich neue erste Konfidenzwerte generiert, so dass bei einer Authentifizierungsanfrage aktuelle erste Konfidenzwerte zur Verfügung stehen, sofern sich der Nutzer in der nahen Vergangenheit bewegt hat.

In einer weiteren Ausführungsform wird der Abstand zwischen zwei oder mehreren Kommunikationsgeräten eines mobilen, tragbaren Kommunikationssystems aufgrund der Signalstärke des Signals der Drahtlosverbindung zwischen den Geräten ermittelt. Ein solches Drahtlosverbindungssignal kann beispielsweise ein Bluetooth-Signal, ein WLAN-Signal oder ein Funksignal sein. Der aus dem Drahtlosverbindungssignal ermittelte Abstand zwischen den Geräten kann gemäß dieser Ausführungsform als Teil der nutzerbezogenen Daten erfasst werden und zur verhaltensbasierten Authentifizierung des Nutzers verwendet werden.

Das Erfassen des Abstandes zweier Geräte eines Kommunikationssystems als Teil der nutzerbezogenen Daten und das Verwenden des Abstandes zur verhaltensbasierten Authentifizierung des Nutzers ermöglicht die Erhöhung der Sicherheit des Verfahrens zur verhaltensbasierten Authentifizierung, da ein weiterer Parameter durch einen unberechtigten Nutzer gefälscht bzw. nachgeahmt werden müsste, um Zugriff auf das Speichersystem zu erlangen.

Nach Ausführungsformen wird der Abstand dazu verwendet, um ein grobmotorisches Bewegungsmuster des Nutzers zu erkennen.

Nach Ausführungsformen umfasst das Verfahren ferner als Voraussetzung zum Erzeugen des Authentifizierungssignals:
- Abfragen der Zustimmung des aktuellen Nutzers zur Freigabe des Zugriffs des Computersystems auf die in dem Speichersystem persistent gespeicherten physiologischen Daten des registrierten Nutzers,
- Empfang der Zustimmung des aktuellen Nutzers.
Die Abfrage kann beispielsweise eine Speicherabfrage umfassen, ob eine Zustimmung des Nutzers hinterlegt ist, und/oder eine Abfrageanzeige auf einem Display des mobilen tragbaren Kommunikationssystems.

Nach Ausführungsformen ist das Klassifikationsmodul auf ein Erkennen eines kritischen Zustands unter Verwendung der erfassten verhaltensbasierten Daten des aktuellen Nutzers trainiert. Ferner umfasst das Verfahren:
- Erkennen des kritischen Zustands des aktuellen Nutzers anhand der erfassten verhaltensbasierten Daten,
- auf das Erkennen des kritischen Zustandes hin, Erzeugen eines Notfallsignals, wobei es, falls das Notfallsignal vorliegt, zur Freigabe des Zugriffs des Computersystems auf die in dem Speichersystem persistent gespeicherten physiologischen Daten des registrierten Nutzers ausreicht, dass das Authentifizierungssignal eine erfolgreiche Authentifizierung des Computersystems angibt.

In einer Ausführungsform ist das mobile, tragbare Kommunikationssystem somit dazu konfiguriert, Notfallsignal zur Freigabe des Zugriffs des Computersystems auf die in dem Speichersystem persistent gespeicherten physiologischen Daten des registrierten Nutzers zu erzeugen. Ferner kann das mobile, tragbare Kommunikationssystem dazu konfiguriert sein auf das Erkennen des kritischen Zustandes einen Notruf abzusetzen. Ein kritischer Zustand des aktuellen Nutzers, d.h. eine kritische Klassifikation des physiologischen Zustandes, umfasst dabei einen Zustand, in dem der Nutzer Hilfe benötigt. Ein solcher Zustand kann beispielsweise einen Zusammenbruch des Herz-Kreislauf-Systems, einen Herzinfarkt, einen Schlaganfall, einen epileptischen Anfall oder eine Situation umfassen, in welcher der Nutzer die Hilfe eines Arztes oder eines vergleichbaren Heilberufes benötigt.

Im Falle eines kritischen Zustands ist ein Zugriff auf die physiologischen Daten somit auch ohne eine Authentifizierung des Nutzers und ohne eine explizite Zustimmung des Nutzers möglich.

Durch das Absetzen eines Notrufs, weil das Klassifikationsergebnis einen kritischen Zustand umfasst, kann frühestmöglich Hilfe gerufen werden. Insbesondere Herzversagen, Schlaganfälle, Herzinfarkte oder allergische Reaktionen können letal sein, falls nicht rechtzeitig Hilfe gerufen wird. Das automatische Absetzen eines Notrufs kann damit das Risiko von letalen Folgen eines derartigen physiologischen Zustandes vermindern.

Der Notruf kann in Ausführungsformen ein akustisches Signal umfassen. Umfasst das Klassifikationsergebnis eine kritische Klassifikation des physiologischen Zustandes, so beginnt beispielsweise eine Sirene oder ein Lautsprecher, einen Alarm auszusenden, um Umstehende und/oder in der Nähe befindliche Personen auf den Nutzer aufmerksam zu machen. In einer weiteren Ausführungsform wird der Notruf über ein Mobilfunknetz abgesetzt. Der Notruf kann beispielsweise direkt an eine Notrufzentrale gerichtet sein, beispielsweise in Form einer Textnachricht, wie etwa einer SMS. In einer weiteren Ausführungsform umfasst der Notruf mindestens die Position des Nutzers, das Klassifikationsergebnis und/oder Informationen bezüglich der Identität des Nutzers.

In einer Ausführungsform ist das Kommunikationssystem dazu konfiguriert, über die Kommunikationsschnittstelle mit einem Computersystem, insbesondere einem mobilen, tragbaren Computersystem eines Helfers, wie etwa einem Smartphone, einem Tablet oder einem Laptop, zu kommunizieren. Nach Ausführungsformen kann ein Angehöriger eines Heilberufs sich mit einem Heilberufeausweis als Authentifizierungsmittel gegenüber dem mobilen, tragbaren Kommunikationssystem authentifizieren. Nach Ausführungsformen kann die Kommunikation zwischen mobilem, tragbarem Kommunikationssystem und Authentifizierungsmittel, beispielsweise einem elektronischen Heilberufsausweis (eHBA), auch direkt erfolgen ohne Zwischenschalten des Computersystems. Mit dem Computersystem kann der Helfer physiologische Daten des Nutzers abfragen.

Das Authentifizierungsmittel, beispielsweise in Form eines eHBA, ist nach ausführungsformen dazu konfiguriert über eine Funkschnittstelle mittels einer Drahtloskommunikation mit dem Computersystem und/oder dem mobilen, tragbaren Kommunikationssystem zu kommunizieren. Nach einer weiteren Ausführungsform ist Authentifizierungsmittel dazu konfiguriert mittels einer Kontaktschnittstelle eine kontaktbasierte Kommunikation mit dem Computersystem auszuführen. Beispielsweise wird das Authentifizierungsmittel auf eine Kontaktfläche des Computersystems zum Ausführen der kontaktbasierten Kommunikation aufgelegt. Nach Ausführungsformen umfasst das Computersystem einen Einzug oder einen Steckkontakt zum vollständigen oder teilweisen Aufnehmen des Authentifizierungsmittels. Ferner kann und/oder ein Zertifikat einer Berechtigungs-PKI (Public Key Infrastruktur), welches dem Eigentümer des Authentifizierungsmittels den Zugriff auf die in dem Speicher des Speichersystems gespeicherten Daten des Nutzers ermöglicht. Dabei kann der Zugriff je nach Konfiguration des Authentifizierungsmittels auf bestimmte Dateien beschränkt sein.

Das Zugreifen eines Inhabers des Authentifizierungsmittels auf die in dem Speicher des Speichersystems gespeicherten Daten des Nutzers, falls die Klassifikation des Zustandes einen kritischen Zustand umfasst, bewirkt in vorteilhafter Weise, dass ein qualifizierter Helfer schnell Zugriff auf hilfreiche Informationen bezüglich des aktuellen Zustandes des Nutzers erlangt. Insbesondere in kritischen Situationen kann das Zugreifen auf Dateien, welche wichtige Informationen enthalten, darüber entscheiden, welche Behandlung des Nutzers anzuwenden ist. Die wichtigen Informationen können beispielsweise Informationen bezüglich Allergien, Unverträglichkeiten, bereits bekannter Vorerkrankungen und/oder Risiken für bestehende Krankheiten, der Blutgruppe, kürzlich eingenommener Medikamente oder Hinweise auf die Identität des Nutzers, beispielsweise seine Adresse und im Notfall zu benachrichtigende Personen, umfassen.

Nach Ausführungsformen umfasst der Zugriff ausschließlich einen Lesezugriff auf das Speichersystem.

Nach Ausführungsformen ist der Zugriff auf eine oder mehrere vordefinierte Kategorien und/oder Gruppen der physiologischen Daten des registrierten Nutzers beschränkt.

Nach Ausführungsformen umfasst das Computersystem ein Terminal mit einer Kommunikationsschnittstelle zur Kommunikation mit einem ID-Token, wobei der ID-Token eine Kommunikationsschnittstelle zur Kommunikation mit dem Terminal, einen Prozessor und einen Speicher umfasst, wobei in einem geschützten Speicherbereich des Speichers ein privater kryptographischer Schlüssel eines dem ID-Token zugeordneten asymmetrischen Schlüsselpaars gespeichert ist und wobei die Authentifizierung des Computersystems unter Verwendung des privaten kryptographischen Schlüssel des ID-Tokens erfolgt.

Der ID-Token, welcher beispielsweise mittels einer Drahtloskommunikation oder kontaktbehaftet mit dem Terminal kommunizieren kann, umfasst beispielsweise ein Zertifikat einer Berechtigungs-PKI (Public Key Infrastruktur), welches den Eigentümer/Inhaber des ID-Tokens für einen Zugriff auf die gespeicherten physiologischen Daten des Nutzers authentifiziert. Dabei kann der Zugriff je nach Konfiguration des ID-Tokens auf bestimmte Dateien beschränkt sein.

Unter einem ID-Token wird im Folgenden ein papier- und/oder kunststoffbasiertes Dokument verstanden, auf dem personenspezifische und/oder dokumentenspezifische Informationen optisch lesbar aufgebracht sind, die eine Identifizierung des Nutzers oder des Dokumentes, beispielsweise für die Freigabe und Nutzung bestimmter Dienste oder Funktionen ermöglicht. Darunter fallen zum Beispiel Ausweisdokumente, insbesondere elektronische Heilberufsausweise, Reisepässe, Personalausweise, Visa sowie Führerscheine, Fahrzeugscheine, Fahrzeugbriefe, Firmenausweise, Gesundheitskarten oder andere ID-Dokumente sowie auch Frachtbriefe oder sonstige Berechtigungsnachweise. Beispielsweise kann das Dokument auch ein Wertgutschein oder eine Zugangskarte sein. Das Dokument umfasst ferner einen Chip oder andere elektronische Bauteile sowie Daten in gespeicherter Form, welche den Inhaber des Authentifizierungsmittels als berechtigte Person, beispielsweise einen Sanitäter, einen Arzt, einen Polizisten, einen Feuerwehrmann und/oder ausgebildete Ersthelfer, identifizieren.

Unter einem Terminal wird hier ein elektronisches Gerät verstanden, welches ein Lesegerät umfasst, das einen Lesezugriff und/oder einen Schreibzugriff auf das Mobilfunkgerät ermöglicht, beispielsweise in Form eines sogenannten Chipkartenterminals. Das Terminal mit dem Lesegerät kann einen integralen Bestandteil eines Nutzer-Computersystems bilden oder als separate Komponente ausgeführt sein, beispielsweise als Peripheriegerät des Nutzer-Computersystems. Insbesondere kann es sich bei dem Lesegerät um ein sogenanntes Klasse 1, 2 oder 3 Chipkartenlesegerät handeln. Das Lesegerät kann mit einer kontaktlosen und/oder kontaktbehafteten Schnittstelle zum Datenaustausch mit einem Mobilfunkgerät ausgestattet ist.

Das Terminal kann nach Ausführungsformen ein Lesegerät bzw. Lesemodul zum Kommunizieren mit dem ID-Token sowie ein Steuermodul zum Steuern der Kommunikation und des Datenaustauschs umfassen. Das Lesemodul kann beispielsweise eine Antenne zur kontaktlosen Kommunikation mit dem ID-Token umfassen. Beispielsweise kann es sich bei dem Lesemodul um ein RIFD-Lesemodul handeln. Dabei kann beispielsweise die Kommunikation zwischen dem Lesemodul und dem ID-Token entsprechend der Norm ISO 14443 drahtlos mit einer Frequenz von 13,56 MHz erfolgen. Nach alternativen Ausführungsformen kann das Terminal einen Einzug oder einen Steckkontakt zum vollständigen oder teilweisen Aufnehmen des ID-Tokens umfassen. Die Kommunikation zwischen Terminal und Computersystem kann über ein Kabel, über eine Funkverbindung und/oder über ein Netzwerk erfolgen. Das Terminal kann nach Ausführungsformen auch in das Computersystem integriert sein, d.h. von einem Gehäuse des Computersystems oder eines Moduls des Computersystems mit umfasst sein.

Nach Ausführungsformen erfolgt die Authentifizierung des Computersystems ferner unter Verwendung eines Berechtigungszertifikats, welches einen öffentlichen kryptographischen Schlüssel des dem ID-Token zugeordneten asymmetrischen Schlüsselpaars umfasst und welches festlegt, auf welche Kategorien und/oder Gruppen von physiologischen Daten des registrierten Nutzers der Zugriff beschränkt ist.

Nach Ausführungsformen handelt es sich bei dem ID-Token um einen elektronischen Heilberufeausweis (eHBA).

Der eHBA umfasst beispielsweise einen Chip, welcher mittels Drahtloskommunikation mit dem Kommunikationssystem kommunizieren kann und/oder ein Zertifikat einer Berechtigungs-PKI (Public Key Infrastruktur), welches dem Inhaber des eHBA den Zugriff auf die Gesundheitsprofile ermöglicht. Dabei kann der Zugriff je nach Konfiguration des eHBA auf bestimmte Parameter beschränkt sein. Der Chip umfasst Daten in gespeicherter Form, welche den Inhaber des eHBA als qualifizierten Helfer identifizieren. Qualifizierte Helfer können beispielsweise Sanitäter, Ärzte, Polizisten, Feuerwehrleute und/oder ausgebildete Ersthelfer umfassen.

Ausführungsformen erlauben einem Angehörigen eines Heilberufs, wie etwa einem Arzt, welcher sich mittels eines ihm zugeordneten eHBA gegenüber dem mobilen, tragbaren Kommunikationssystem authentifiziert einen Zugriff auf die gespeicherten physiologischen Daten. Die entsprechenden Daten kann der Arzt beispielsweise als Grundlage für eine Diagnose verwenden.

Das Zugreifen eines Inhabers eines eHBA auf die physiologischen Daten und/oder Gesundheitsprofile des Nutzers im Falle eines kritischen Zustands kann nach Ausführungsformen bewirken, dass ein qualifizierter Helfer schnell Zugriff auf hilfreiche Informationen bezüglich des aktuellen physiologischen Zustandes des Nutzers erlangt und geeignete Maßnahmen für eine notfallmedizinische Erstversorgung des Nutzers ergreifen kann. Insbesondere in kritischen Situationen kann das Vorhandensein von wichtigen Informationen darüber entscheiden, welche konkreten Maßnahmen anzuwenden sind. Wichtigen Informationen können beispielsweise Informationen bezüglich Allergien, Unverträglichkeiten, bereits bekannten Vorerkrankungen und/oder Risiken für bestehende Krankheiten umfassen.

Das Verwenden eines eHBAs bzw. das Authentifizieren des Nutzers eines eHBAs bewirken in vorteilhafter Weise, dass der Zugriff auf die gespeicherten physiologischen Daten auf Personen eines Heilberufes beschränkt ist. Dadurch werden geltende Bestimmungen des Datenschutzes berücksichtigt und die Daten vor unerlaubten Zugriff geschützt.

Nach Ausführungsformen umfassen die verhaltensbasierten Daten Bewegungsdaten einer grobmotorischen Bewegung des aktuellen Nutzers des Kommunikationssystems. Das Klassifikationsmodul ist zur Erkennung eines generischen grobmotorischen Bewegungsmusters mit Hilfe von Trainingsdatensätzen einer Nutzerkohorte trainiert.

In einer Ausführungsform der Erfindung wird die verhaltensbasierte Authentifizierung von dem mobilen, tragbaren Kommunikationssystem durchgeführt, welches ein Klassifikationsmodul, einen Prozessor und einen internen Speicher aufweist, wobei die nutzerbezogenen Daten Bewegungsdaten einer grobmotorischen Bewegung des aktuellen Nutzers des Kommunikationssystems umfassen, wobei das Klassifikationsmodul zur Klassifikation des Verhaltens des aktuellen Nutzers anhand der nutzerbezogenen Daten konfiguriert ist, wobei das Klassifikationsmodul ferner zur Erkennung eines generischen grobmotorischen Bewegungsmusters mit Hilfe von Trainingsdatensätzen einer Nutzerkohorte trainiert ist, wobei das Klassifikationsmodul durch den Prozessor des Kommunikationssystems ausgeführt wird.

Viele mobile, tragbare Kommunikationssysteme, wie Smartphones, sind heute ohnehin mit Sensoren ausgestattet, welche eine Lage des Geräts im Raum erfassen können, wodurch sich zum Beispiel die Anzeige auf dem Bildschirm in die richtige Position relativ zur räumlichen Orientierung des Geräts drehen kann. Ein solcher Sensor ist üblicherweise ein Beschleunigungssensor, ein Gyroskop oder eine Kombination aus beiden. Es ist nicht nur möglich, mit diesem Sensor die Raumlage des mobilen, tragbaren Kommunikationssystems, sondern auch eine grobmotorische Bewegung des Nutzers zu erfassen, wodurch der Sensor als Bewegungssensor verwendet werden kann.

Eine grobmotorische Bewegung bezeichnet dabei alle Bewegungsfertigkeiten, die ein Mensch mit seinen Gliedmaßen, seinem Rumpf und seinem Kopf erlernen kann. Dabei werden Hauptmuskelgruppen beansprucht. Fertigkeiten der Grobmotorik sind zum Beispiel Gehen, Joggen, Rennen, Hüpfen, Fahrradfahren oder Autofahren. Auch das Bewegen des Armes, um eine Verrichtung, wie beispielsweise ein Heben eines Glases zum Trinken oder Essen, auszuführen kann ebenso wie eine Armbewegung, um ein Mobiltelefon aus der Tasche zu ziehen, als grobmotorische Bewegung aufgefasst werden. Demgegenüber gilt ein Greifen einer Tasse als feinmotorische Bewegung, da die Bewegung zum Greifen mit den Fingern ausgeführt wird und feinere Muskelgruppen beansprucht. Dabei kann eine grobmotorische Bewegung insbesondere auch eine Hüftbewegung des Nutzers umfassen.

Ein jeder Mensch führt diese grobmotorischen Bewegungen, ebenso wie beispielsweise feinmotorische Bewegungen, auf seine eigene Art und Weise aus. Somit kann einem bestimmten Nutzer eines mobilen, tragbaren Kommunikationssystems ein ganz bestimmtes, charakteristisches Bewegungsprofil, d.h. grob- und/oder feinmotorisches Bewegungsprofil, zugeordnet werden. Anhand dieses Bewegungsprofils ist der Nutzer identifizierbar. Die durch den Bewegungssensor erfassten Daten werden einem solchen Bewegungsprofil zugeordnet. Das mobile, tragbare Kommunikationssystem ist ferner mit einem Klassifikationsmodul ausgestattet, welches dazu trainiert ist, die Bewegungsmuster des Nutzers zu erkennen.

Der Sensor des Kommunikationssystems kann ein interner Sensor zur Erfassung einer Bewegung des Kommunikationssystems sein (oder umfassen), wobei die Bewegung des Kommunikationssystems durch eine grob- und/oder feinmotorische Bewegung des aktuellen Nutzers des Kommunikationssystems verursacht wird, z.B. während der Nutzer das Kommunikationsgerät bei sich trägt. Die verhaltensbasierten Daten können Bewegungsdaten der Bewegung des Kommunikationssystems umfassen. Nach Ausführungsformen umfassen die verhaltensbasierten Daten somit Bewegungsdaten einer Bewegung des Kommunikationssystems, wobei die Bewegung des Kommunikationssystems durch eine grob- und/oder feinmotorische Bewegung des aktuellen Nutzers des Kommunikationssystems verursacht wird, während der Nutzer das Kommunikationsgerät bei sich trägt.

Trainieren umfasst in diesem Kontext, dass das Klassifikationsmodul durch Auswertung von Trainingsdatensätzen einerseits die Fähigkeit erlangt generische und andererseits nutzerindividuelle Bewegungsmuster zu erkennen. Ein Training zum Erkennen eines generischen Bewegungsmusters umfasst beispielsweise eine Auswertung mehrerer Trainingsdatensätze einer Nutzerkohorte, wobei jeder der Trainingsdatensätze jeweils einem der Nutzer der Nutzerkohorte zugeordnet ist und Daten zu einer für alle Nutzer der Nutzerkohorte identischen Bewegungsart umfasst. Durch die Auswertung wird ein für die identische Bewegungsart aller Nutzer gemeinsames generisches Bewegungsmuster identifiziert und zum zukünftigen Erkennen extrahiert. Ein Training zum Erkennen eines nutzerindividuellen Bewegungsmusters umfasst beispielsweise eine Auswertung von Bewegungsdaten eines individuellen Nutzers, wobei die Bewegungsdaten Daten zu einer bestimmten Bewegungsart umfassen. Durch die Auswertung wird ein für die entsprechende Bewegungsart nutzerindividuelles Bewegungsmuster identifiziert und zum zukünftigen Erkennen nutzerindividueller Bewegungsmuster extrahiert. Diese Auswertung erfolgt unter Verwendung eines generischen Bewegungsmusters für die bestimmte Bewegungsart, welches zuvor ebenfalls trainiert wurde.

Ein solches mobiles, tragbares Kommunikationssystem weist zur Ausführung der verhaltensbasierten Authentifizierung eines Nutzers mindestens einen Sensor (z.B. einen internen Bewegungssensor des Kommunikationssystems) zur Erfassung von Daten einer grobmotorischen Bewegung des Nutzers, ein Klassifikationsmodul, ein Betriebssystem bzw. eine Anwendung, einen Prozessor und einen internen Speicher auf. Der Sensor zur Erfassung der nutzerbezogenen Daten ist dazu konfiguriert, eine grob- und/oder feinmotorische Bewegung des Nutzers zu erfassen, z.B. mittels einer Erfassung einer Bewegung des Kommunikationssystem, die durch die grob- und/oder feinmotorische Bewegung des Nutzers verursacht wird. Klassifikationsmodul ist für die Klassifikation der nutzerbezogenen Daten konfiguriert, auf das Erkennen einer grob- und/oder feinmotorischen Bewegung des Nutzers trainiert, implementiert ein Maschinenlernverfahren und wird durch den Prozessor des mobilen, tragbaren Kommunikationssystems ausgeführt, wobei das Betriebssystem bzw. die Anwendung dazu in der Lage ist den Zugriff auf das Speichersystem aufgrund des Erfolgs der Authentifizierung zu steuern.

Das durch das Klassifikationsmodul implementierte Maschinenlernverfahren bezeichnet ein Verfahren, mit dem das Klassifikationsmodul in der Lage ist, sich an den Nutzer des Kommunikationssystems anzupassen. Anpassen bezeichnet in diesem Sinne das Justieren und gegebenenfalls Neukonfigurieren von Klassifikationsparametern, anhand derer der Nutzer korrekt identifiziert werden kann. Das Maschinenlernverfahren ist nicht beschränkt auf einen bestimmten Algorithmus. Gemäß Ausführungsformen ist das Maschinenlernverfahren ein speziell für das maschinelle Lernen entwickelter Algorithmus, wie zum Beispiel, ohne darauf beschränkt zu sein, eine dichtenbasierte multidimensionale Ausreißererkennung (engl. "local outlier detection"), ein Random-Forrest-Algorithmus, ein Neuronales Netz, eine Support-Vektor-Maschine, ein Naive-Bayes-Klassifikator oder eine Rückkopplung ähnlich der Rückkopplung eines linearen oder nichtlinearen Reglers.

Nach Ausführungsformen umfassen die physiologischen Daten ferner jeweils biometrische Daten und/oder feinmotorische Bewegungsdaten, wobei das Klassifikationsmodul ferner zur Erkennung eines generischen feinmotorischen Bewegungsmusters mit Hilfe von Trainingsdatensätzen einer Nutzerkohorte trainiert ist.

Eine feinmotorische Bewegung ist eine Bewegung feiner Muskelgruppen, wie beispielsweise die Muskulatur der Finger. Feinmotorik bezeichnet gezielte und koordinierte Bewegungen, beispielsweise von Hand- und/oder Fingermuskulatur, aber auch den Muskeln des Mundes, der Augen und des Gesichtes. Die feinmotorische Bewegung, welche durch einen feinmotorischen Sensor des Kommunikationssystems erfasst wird, kann etwa eine bestimmte Bewegung der Finger umfassen.

Nach Ausführungsformen der Erfindung werden durch den Sensor zur Erfassung einer feinmotorischen Bewegung die Eingabegeschwindigkeit, der Eingabetakt und/oder die Eingabegenauigkeit des Nutzers erfasst, während er die Eingabe in das Kommunikationssystem tätigt. Eine solche Eingabe kann beispielsweise, ohne darauf beschränkt zu sein, das Tippen von Wörtern bzw. Wischen von Wörtern, das heißt einem zum Tippen analogen Eingabeverfahren, bei welchem der oder die Finger bei Auswahl von Buchstaben in Kontakt zur Bildschirmschirmoberfläche jedoch beibehalten wird, auf einer virtuellen Tastatur, das Nachfahren von auf dem Bildschirm gezeigten geometrischen Figuren oder einer anderen Bewegung, mit der der Nutzer eine Eingabe tätigt, umfassen. Ferner können feinmotorische Bewegungen Änderungen der Ausrichtung, wie etwa des Neigungswinkels des Kommunikationssystems während der Nutzung umfassen.

Ein Sensor zur Erfassung einer feinmotorischen Bewegung kann beispielsweise als optisches System oder als ein Touchpad bzw. ein Touchscreen, insbesondere, jedoch ohne darauf beschränkt zu sein, ein resistiver Touchscreen, ein oberflächenkapazitiver Touchscreen, ein projiziert kapazitiver Touchscreen oder ein induktiver Touchscreen ausgebildet sein.

Durch das Verwenden einer feinmotorischen Bewegung eines Nutzers als zusätzlicher Authentifizierungsfaktor erhöht sich die Sicherheit der verhaltensbasierten Authentifizierung, da weitere Parameter zur Authentifizierung des Nutzers geprüft werden.

In einer weiteren Ausführungsform wird nach einem fehlgeschlagenen Authentifizierungsversuch der Nutzer dazu aufgefordert eine Eingabe in das mobile, tragbare Kommunikationssystem zu tätigen, um eine feinmotorische Bewegung des Nutzers erfassen zu können. Die Eingabe kann dabei beispielsweise das Nachmalen einer bestimmten Figur auf dem Bildschirm oder die Eingabe eines vordefinierten Wortes bzw. die Eingabe mehrerer Wörter umfassen. Die Wörter und/oder Muster können durch das System oder den Nutzer vordefiniert oder zufällig ausgewählt sein. Beispielsweise werden die entsprechenden Wörter und/oder Muster auf dem Bildschirm angezeigt.

Durch das Authentifizieren mittels einer feinmotorischen Bewegung im Falle einer fehlgeschlagenen Authentifizierung, ergibt sich vorteilhafterweise für den Nutzer die Möglichkeit sich trotz einer fehlgeschlagenen verhaltensbasierten Authentifizierung zu authentifizieren ohne dabei auf eine PIN oder ein Passwort zurückgreifen zu müssen.

Nach Ausführungsformen umfasst das Kommunikationssystem Anwendungen, wobei die Daten ferner Anwendungsdaten des Nutzers umfassen, wobei aus den Anwendungsdaten Anpassungsparameter bestimmt werden, welche externe Einflussfaktoren der biometrischen Daten beschreiben, wobei die Anpassungsparameter bei der Generierung des Klassifikationsergebnisses zur Anpassung der Klassifikation an die Einflussfaktoren verwendet werden.

Durch das Verwenden der Anwendungsdaten und das damit verbundene Verwenden der Anpassungsparameter zur Generierung des Klassifikationsergebnisses ergibt sich in vorteilhafter Weise, dass das Klassifikationsergebnis an externe Einflussfaktoren angepasst werden kann. Befindet sich der Nutzer beispielsweise in einer Umgebung mit einer hohen oder niedrigeren Lufttemperatur und wird die Körpertemperatur mittels eines Sensors an einem Handgelenk gemessen, so kann die Messung durch die Lufttemperatur beeinflusst werden. Die gemessene Temperatur an dem Handgelenk kann beispielsweise unter einem Durchschnittswert liegen, falls sich der Nutzer in einer kalten Umgebung befindet. Durch das Verwenden von beispielsweise Wetterdaten, welche die aktuelle Lufttemperatur umfassen, kann die gemessene Temperatur unter Korrektur der Wetterdaten mit der Temperatur des Referenzzustandes verglichen werden. In einem weiteren Beispiel ändert sich der Blutdruck des Nutzers, wenn er sich in einer anderen Höhe über dem Meeresspiegel als gewöhnlich aufhält. Dies kann beispielsweise durch ein Barometer erfasst oder durch einen GPS- oder Galileo-Signal bestimmt werden und somit die Auswertung des Blutdrucks des Nutzers korrigieren.

Je nachdem welche Anwendungen ausgeführt werden, lassen sich eine Mehrzahl von physiologischen Parametern korrigieren. Insbesondere kann die Kombination von verschiedenen Einflussfaktoren einzelne und/oder eine Mehrzahl von physiologischen Parametern korrigieren. Beispielsweise können Luftfeuchtigkeit und Luftdichte, wobei letztere durch die aktuelle Höhe über dem Meeresspiegel errechnet wird, das Verhältnis von Puls und Atemfrequenz zur Bewegungsgeschwindigkeit beeinflussen. Ist der Einfluss bekannt, kann eine entsprechende Korrektur vorgenommen werden.

Nach Ausführungsformen umfassen die verhaltensbasierten Daten ferner:
- Positionsdaten des Kommunikationssystems, welche durch ein Verfahren zur Positionsbestimmung durch einen Sensor zur Bestimmung der Position des Kommunikationssystems erfasst werden, und/oder
- Anwendungsnutzungsdaten des aktuellen Nutzers, wobei die Anwendungsnutzungsdaten Informationen über ein Nutzen von Anwendungsprogrammen durch den Nutzer umfassen, und/oder
- Verbindungsdaten des Kommunikationssystems mit anderen Geräten und/oder
- Kalender- und/oder Uhrzeitdaten einer im Kommunikationssystem implementierten Uhr oder einer externen Uhr, deren Signal durch einen Sensor des Kommunikationssystems empfangen wird, und/oder
- Umgebungsdaten, welche mittels mindestens einem internen Umgebungssensor oder mittels mindestens einem externen Umgebungssensor erfasst werden, dessen Signal durch einen Sensor des Kommunikationssystems empfangen wird.

Die Positionsdaten des Kommunikationssystems werden durch ein Verfahren zur Positionsbestimmung durch einen Positionssensor des Kommunikationssystems erfasst. Ein solches Verfahren kann zum Beispiel ein Erfassen eines GPS-Signals, eines Galileo-Signals oder einer triangulierten Position aus WLAN-Verbindungsdaten oder Verbindungsdaten eines sonstigen Funknetzes umfassen, welches Funkzellen aufweist, wie etwa ein Mobilfunknetz.

Die Positionsdaten können beispielsweise dazu verwendet werden, den Luftdruck bzw. die lokalen Wetterdaten bei der Klassifikation des physiologischen Zustandes zu berücksichtigen. Beispielsweise können sich die Außentemperatur und/oder die Höhe der Position des Nutzers über dem Meeresspiegel auf den physiologischen Zustand des Nutzers auswirken.

Die Positionsdaten können beispielsweise dazu verwendet werden die Umgebungsdaten, wie beispielsweise den Luftdruck bzw. die lokalen Wetterdaten bei der Klassifikation des physiologischen Zustandes zu berücksichtigen. Beispielsweise können sich die Außentemperatur und/oder die Höhe der Position des Nutzers über dem Meeresspiegel auf den physiologischen Zustand des Nutzers auswirken. Ferner kann durch die Kombination von Positionsdaten mit der Uhrzeit beispielsweise eine Bewegungsgeschwindigkeit ermittelt werden oder durch die Kombination von Positionsdaten mit Kalenderdaten beispielsweise ein Wechsel der umgebenden Klimazone festgestellt werden, welcher sich ebenfalls auf den Körper auswirken kann.

Durch das Verwenden der Positionsdaten zur verhaltensbasierten Authentifizierung des Nutzers ergibt sich in vorteilhafter Weise, dass ein regelmäßiger Aufenthaltsort des Nutzers (zum Beispiel zu Hause, bei der Arbeit oder an anderen Orten, die er regelmäßig aufsucht) erfasst wird. Ein unberechtigter Nutzer, insbesondere ein Dieb, der das mobile, tragbare Kommunikationssystem benutzt, wird sich in der Regel nicht an den Orten aufhalten, welche der registrierte Nutzer regelmäßig aufsucht. Dadurch ist das Kommunikationssystem in der Lage zu erkennen, ob der Nutzer der registrierte Nutzer ist. Damit können die Positionsdaten zur Verbesserung der verhaltensbasierten Authentifizierung beitragen.

Die Anwendungsnutzungsdaten umfassen ein Anwendungsnutzungsverhalten des Nutzers, wobei das Anwendungsnutzungsverhalten Informationen umfasst, welche beschreiben, wann welche Anwendungen bzw. Anwendungsprogramme von dem Nutzer auf dem Kommunikationssystem gestartet und/oder ausgeführt werden. So kann zum Beispiel erfasst werden, wann bzw. wie oft der Nutzer unter Verwendung welcher Anwendung Radio hört und/oder welchen Radiosender er hört, Nachrichten liest oder seine Kamera bedient. Insbesondere im Alltag oft verwendete Anwendungen können ein nutzerspezifisches Anwendungsnutzungsprofil ergeben, anhand dessen der Nutzer identifiziert werden kann.

Durch das Miteinbeziehen der Anwendungsnutzungsdaten des Nutzers in das verhaltensbasierte Authentifizierungsverfahren steigt die Sicherheit des Verfahrens, da ein unberechtigter Nutzer, insbesondere ein Dieb, welcher das Kommunikationssystem gestohlen hat, auch das Anwendungsnutzungsverhalten des Nutzers imitieren müsste, um Zugriff auf das Speichersystem, welches einer Authentifizierung bedarf, zu erlangen.

Die biometrischen Daten können durch einen Sensor zur Erfassung von biometrischen Daten erfasst werden. Dabei können die biometrischen Daten unter anderem die Maße des Gesichts, die Stimmfrequenzen des Nutzers, die Fingerform, die Ohrmuschelform, das Retina- oder Irismuster, der Fingerabdruck eines Fingers oder physiologische Daten, wie zum Beispiel der Blutdruck oder der Puls des Nutzers, insbesondere bei spezifischen Aktivitäten wie dem Laufen, sein.

In einer Ausführungsform können die biometrischen Daten, insbesondere die Maße des Gesichts, das Iris- und/oder Retinamuster und die Ohrmuschelform, erfasst werden, wenn der Nutzer ohnehin sein Kommunikationssystem benutzt und/oder sich authentifizieren möchte. In dem Moment, in dem der Nutzer sein Kommunikationssystem benutzt und/oder sich authentifizieren möchte, kann je nach ausgeführter Anwendung davon ausgegangen werden, dass der Nutzer auf den Bildschirm des Kommunikationssystems schaut. Dies ist beispielsweise bei einer Chat- oder Nachrichtenanwendung der Fall. Da handelsübliche Smartphones und andere Systeme mit Kameras ausgestattet sind, welche auch auf der Seite des Bildschirms auf dem Kommunikationssystem positioniert sind, ist es möglich, dass eine Hintergrundanwendung des Kommunikationssystems ein Foto des Nutzers aufnimmt, während er das Kommunikationssystem benutzt. Dieses Foto kann ausgelesen und somit die biometrischen Daten des Nutzers erfasst werden. Sollte der Nutzer auf sein System zugreifen wollen, wird ein Foto erstellt oder es werden ein oder mehrere der zuletzt gespeicherten Fotos herangezogen und die biometrischen Daten, welche aus dem erstellten Foto bzw. den gespeicherten Fotos errechnet werden, zur Authentifizierung verwendet.

In einer weiteren Ausführungsform umfasst das mobile, tragbare Kommunikationssystem beispielsweise einen Drucksensor oder einen optischen Sensor zur Erfassung eines Pulsschlages, mit dem der Puls und der Blutdruck des Nutzers bestimmt werden können.

Durch die Verwendung eines direkt am Körper getragenen biometrischen Sensors, insbesondere einem biometrischen Sensor einer Smart-Watch, etwa einem Drucksensor oder optischem Sensor, ergibt sich in vorteilhafterweise, dass die biometrischen Daten ähnlich wie die grobmotorischen Bewegungsdaten kontinuierlich erfassbar sind, da der Nutzer die Smart-Watch während des regulären Gebrauchs an seinem Handgelenk trägt.

In einer weiteren Ausführungsform umfasst das Kommunikationssystem einen Sensor zur Erfassung eines Fingerabdrucks des Nutzers. In vorteilhaften Ausführungsformen ist der Sensor an Stellen des Kommunikationssystems positioniert, an denen der Nutzer mit seinen Fingerspitzen das Kommunikationssystem festhält und/oder zu Steuerung von Funktionen regelmäßig berührt.

Durch die Verwendung eines Fingerabdrucksensors, insbesondere an einer Stelle, an der sich während des regulären Gebrauchs die Fingerspitzen des Nutzers befinden, ergibt sich in vorteilhafter Weise, dass der Fingerabdruck, welcher für jeden Menschen einzigartig ist, als Identifikationsmerkmal des Nutzers zur Authentizitätsprüfung des Nutzers beiträgt und somit die Sicherheit des Verfahrens erhöht.

Durch die Verwendung der biometrischen Daten des Nutzers zur verhaltensbasierten Authentifizierung des Nutzers ergibt sich in vorteilhafter Weise, dass die Daten, welche zur Authentifizierung herangezogen werden, in hohem Maße von dem Nutzer abhängig sind. Insbesondere biometrische Daten bieten eine hohe Fälschungssicherheit, wodurch die Sicherheit der Authentifizierung gesteigert wird.

Die Verbindungsdaten des Kommunikationssystems mit anderen kommunikationsfähigen Geräten wie zum Beispiel Computern, kommunikationsfähigen Haushaltsgeräten oder einzelnen, mobilen, tragbaren Kommunikationsgeräten und -systemen können dazu verwendet werden, ein typisches Verbindungsmuster des Nutzers aufzuzeigen. So können zum Beispiel einzelne Geräte über WLAN, Bluetooth, Radio Frequency Identification (RFID), Near Field Communication (NFC) oder ein Kabel mit dem mobilen, tragbaren Kommunikationssystem verbunden werden. So kann für den Nutzer ein Verbindungsprofil angelegt werden, welches Informationen über die regelmäßigen Verbindungen des Kommunikationssystems mit weiteren Geräten enthält.

Beispielsweise kann ein Nutzer das Kommunikationssystem mit dem privaten WLAN einer Wohnung oder einem öffentlichen WLAN verbinden. In einer weiteren Ausführungsform verbindet der Nutzer das Kommunikationssystem mit Haushaltsgeräten und/oder einem Computer über das Internet oder ein Intranet, wodurch sich ein nutzerspezifisches Verbindungsprofil ergibt. Dieses Nutzungsprofil kann beispielsweise, ohne darauf beschränkt zu sein eine Waschmaschine, einen Trockner, einen Kühlschrank oder ähnliche Haushaltsgeräte, sowie Geräte eines Smart-Home-Systems, wie etwa Beleuchtung, Alarmanlage, Klimaanlage, Heizung, Audioanlage(n), Video- bzw. Fernsehanlage(n), und/oder einen PC umfassen, welche der Nutzer zu Hause über das Internet, ein Intranet oder individuelle Funkverbindungen ansteuert.

Durch die Verwendung der Verbindungsdaten des Nutzers zur verhaltensbasierten Authentifizierung des Nutzers ergibt sich in vorteilhafter Weise, dass ein unberechtigter Nutzer die Geräte kennen und ggf. Zugriff auf die Geräte besitzen muss, mit denen der registrierte Nutzer normalerweise das Kommunikationsgerät verbindet.

Kalender- und/oder Uhrzeitdaten können durch eine in dem Kommunikationssystem implementierte Uhr oder eine externe Uhr, deren Signal durch einen Sensor, insbesondere ein Funksignal durch einen Funksensor, des Kommunikationssystems empfangen wird, erfasst werden.

Durch die Verwendung der Kalender- und/oder Uhrzeitdaten zur verhaltensbasierten Authentifizierung des Nutzers ergibt sich in vorteilhafter Weise, dass insbesondere durch die Kommunikation mit den vorherigen Anwendungen ein zeitspezifisches Anwendungsverhalten des Nutzers erstellt werden kann. So kann zum Beispiel erkannt werden, dass sich von Montag bis Freitag der Nutzer auf dem Weg zur Arbeit befindet und dabei einen bestimmten Radiosender hört und am Wochenende einen Spaziergang unternimmt und dabei ausgewählte Musik über eine Musikanwendung abspielt oder, dass der Nutzer jeden Abend zu einer festen Uhrzeit, beispielsweise um 20 Uhr, die Nachrichten über sein Kommunikationssystem liest. Die Verwendung der Kalender- und/oder Uhrzeitdaten haben somit eine erhöhte Sicherheit des Verfahrens zur Folge, indem sie zu einem zeitlich strukturierten Anwendungsnutzungsprofil des Nutzers beitragen, welches gegenüber einem zeitlich unstrukturierten Anwendungsnutzungsprofil schwerer zu imitieren ist.

In einer weiteren Ausführungsform der Erfindung werden die biometrischen Daten mit den Kalender- und/oder Uhrzeitdaten oder anderen nicht-biometrischen Daten, wie beispielsweise den Verbindungsdaten, dem Umgebungsdaten und/oder den Positionsdaten korreliert. Bei einer Korrelation der biometrischen Daten mit den Kalenderdaten kann beispielsweise eine Ursache für einen erhöhten Puls und/oder Blutdruck in Form eine Stresssituation identifiziert werden.

Umgebungsdaten, welche mittels mindestens einem internen Umgebungssensor oder mittels mindestens einem externen Umgebungssensor erfasst werden, dessen Signal durch einen Sensor des Kommunikationssystems empfangen wird, können beispielsweise die Umgebungstemperatur, die Windstärke, ein umgebendes Strahlungsniveau und/oder die lokale Beschleunigung umfassen.

Nach Ausführungsformen sind in dem internen Speicher des Kommunikationssystems zumindest ein Muster in Form einer Musterfunktion und zumindest ein Vergleichsdatensatz gespeichert. Der Vergleichsdatensatz umfasst eine Mehrzahl der verhaltensbasierten Daten des registrierten Nutzers, wobei aus der Mehrzahl der verhaltensbasierten Daten des ersten Vergleichsdatensatzes zumindest ein erster Vergleichsparameter errechnet wird. Das Klassifikationsmodul führt auf die Eingabe der verhaltensbasierten Daten des aktuellen Nutzers hin die folgenden Schritte aus:
- Bestimmen zumindest eines Klassifikationsparameters für die erfassten verhaltensbasierten Daten, wobei das Bestimmen des zumindest einen Klassifikationsparameters ein Vergleichen der erfassten verhaltensbasierten Daten mit der zumindest einen Musterfunktion, ein Zuordnen der erfassten verhaltensbasierten Daten zu dem der Musterfunktion zugeordneten ersten Muster und ein Erhalten von zumindest einem dem ersten Muster entsprechenden Klassifikationsparameter umfasst, falls die Bewegungsdaten dem zumindest einen, ersten Muster zugeordnet werden können,
- Berechnen eines der ersten Konfidenzwerte für jeden Klassifikationsparameter durch einen Vergleich des zumindest einen Klassifikationsparameters mit dem jeweiligen Vergleichsparameter des Vergleichsdatensatzes.

Durch das Generieren des Klassifikationsergebnisses aus dem mindestens einen Konfidenzwert des mindestens einen Klassifikationsparameters ergibt sich vorteilhafterweise ein Verfahren, welches durch fest definierte Schritte für den Nutzer wiederholbar, jedoch für einen unberechtigten Nutzer sehr schwer zu umgehen ist. Ein Angreifer, welcher versucht mittels eines elektronischen Angriffs auf das Speichersystem zuzugreifen, in dem der Angreifer versucht die nutzerbezogenen Daten, den mindestens einen Klassifikationsparameter oder den mindestens einen Konfidenzwert zu erraten, um dem Speichersystem ein gefälschtes Klassifikationsergebnis vorzutäuschen, müsste die mindestens eine Musterfunktion kennen oder wissen, welche Klassifikationsparameter zu Konfidenzwerten verarbeitet werden und welche Werte diese aufweisen müssen, damit ein Zugriff auf das Speichersystem gewährt wird.

Das Kommunikationssystem vergleicht die erfassten Daten mit dem Vergleichsdatensatz und bestimmt somit, ob der Nutzer das Kommunikationssystem nutzt und/oder bei sich trägt. Nutzt eine Person das Kommunikationssystem, welche nicht der registrierte Nutzer ist, beispielsweise weil der Nutzer das Kommunikationssystem der Person ausgehändigt hat oder weil die Person dem Nutzer das Kommunikationssystem entwendet hat, so unterscheiden sich die erfassten Daten ebenfalls von den Daten des Vergleichsdatensatzes.

Der Vergleichsdatensatz umfasst Daten des Nutzers, welche das Verhalten und/oder die individuelle Eigenschaft des Nutzers charakterisieren. Die Daten des Vergleichsdatensatzes und die erfassten Daten umfassen mindestens einen Parameter, welcher mindestens eine Eigenschaft des Nutzers und/oder seines Verhaltens quantifiziert. Der Vergleichsdatensatz umfasst die Daten des in dem Kommunikationssystem registrierten Nutzers. Die erfassten Daten umfassen die Daten des aktuellen Nutzers. Das Klassifikationsmodul generiert aus dem Vergleich der erfassten Daten mit dem Vergleichsdatensatz einen ersten Konfidenzwert, welcher den quantitativen Unterschied zwischen Klassifikationsparametern, generiert aus den erfassten Daten, und Vergleichsparametern, generiert aus dem Vergleichsdatensatz, ausdrückt. Der quantitative Unterschied lässt sich in eine Wahrscheinlichkeit übersetzen, mit der der Nutzer als der registrierte Nutzer identifiziert wird. Ist die bestimmte Wahrscheinlichkeit größer als ein vorgegebener Schwellenwert, so geniert das Klassifikationsmodul das Klassifikationsergebnis, da sich der Nutzer mittels der erfassten Daten authentifiziert hat. Über ein Festlegen des Schwellenwertes kann ein Kriterium für die Akzeptanz des Nutzers als registrierter Nutzer festgelegt werden.

Besonders vorteilhaft ist diese Ausführungsform, da die erfassten Daten eine doppelte Verwendung finden. Sie werden einerseits dazu verwendet den Nutzer gegenüber seinem Kommunikationssystem zu authentifizieren und andererseits dazu verwendet physiologische Daten des Nutzers zu erfassen und zu protokollieren.

Nach Ausführungsformen generiert das Kommunikationssystem aus den einzelnen ersten Konfidenzwerten der Klassifikationsparameter einen gemeinsamen ersten Konfidenzwert, welcher zur Generierung des Klassifikationsergebnisses verwendet wird und eine Wahrscheinlichkeit angibt, mit der die Identität des aktuellen Nutzers mit der Identität des registrierten Nutzers übereinstimmt.

In einer Ausführungsform muss sich der Nutzer nach einer Erstinbetriebnahme des Kommunikationssystems gegenüber dem Kommunikationssystem authentifizieren.

Das Authentifizieren des Nutzers nach der Erstinbetriebnahme bewirkt, dass nur ein Nutzer, welcher eine Berechtigung der Nutzung des Kommunikationssystems aufweist, das Kommunikationssystem auch tatsächlich nutzen kann. Die Authentifizierung nach der Erstinbetriebnahme kann beispielsweise durch eine Eingabe eines Passwortes, eines Codes und/oder einer PIN erfolgen. Der Nutzer kann die Berechtigung beispielsweise durch einen Kauf des Kommunikationssystems erwerben.

Nach Ausführungsformen werden die einzelnen ersten Konfidenzwerte der Klassifikationsparameter bei der Auswertung mit jeweils einem Gewichtungsfaktor versehen, wobei die Gewichtungsfaktoren dem jeweiligen ersten Konfidenzwert zugeordnet werden.

In einer weiteren Ausführungsform der Erfindung sind die einzelnen physiologischen Parameter bei der Klassifikation des physiologischen Zustandes und/oder die einzelnen Klassifikationsparameter bei der Auswertung der verhaltensbasierten Authentifizierung mit jeweils einem Gewichtungsfaktor gewichtet. Die Gewichtungsfaktoren sind dabei dem jeweiligen physiologischen Parameter bzw. Klassifikationsparameter zugeordnet.

Durch das Verwenden von Gewichtungsfaktoren für die jeweiligen physiologischen Parameter bei der Generierung des Klassifikationsergebnisses bzw. die jeweiligen Klassifikationsparameter bei der Errechnung des Konfidenzwertes ergibt sich in vorteilhafter Weise eine Erhöhung der Genauigkeit des Klassifikationsergebnisses bzw. Konfidenzwertes bei einer Prüfung gegen ein Prüfungskriterium. Die einzelnen Parameter, können nach Wichtigkeit und/oder Genauigkeit Ihrer Bestimmbarkeit gewichtet werden. Da jeder Nutzer anders ist, spielen auch die einzelnen Parameter unterschiedlich starke Rollen bei der Klassifikation des physiologischen Zustandes und/oder der verhaltensbasierten Authentifizierung des Nutzers.

In einer weiteren Ausführungsform der Erfindung sind die einzelnen Gewichtungsfaktoren der jeweiligen Parameter fest vorgegeben. Fest vorgegeben meint in diesem Zusammenhang, dass die Gewichtungsfaktoren von vornerein bei der Erstinbetriebnahme des Kommunikationssystems festgelegt werden und keine Änderung der Gewichtungsfaktoren während des bestimmungsmäßigen Betriebes des Kommunikationssystems vorgegeben ist.

Durch das Vorgeben der Gewichtungsfaktoren für die Parameter ergibt sich in vorteilhafter Weise ein reduzierter Rechenaufwand, welcher insbesondere für mobile, tragbare Kommunikationssysteme einen niedrigen Batterieverbrauch zufolge hat. Das Kommunikationssystem muss nicht überprüfen, welcher Gewichtungsfaktor für welchen Parameter festzulegen ist, sondern letztendlich nur in seinem Speicher die entsprechenden Gewichtungsfaktoren auslesen.

In einer weiteren Ausführungsform der Erfindung legt der Nutzer in einem Initiierungsprozess die Gewichtungsfaktoren der einzelnen Klassifikationsparameter für die verhaltensbasierte Authentifizierung in dem Kommunikationssystem selbst fest. Die festgelegten Gewichtungsfaktoren werden dann in einer Konfigurationsdatei in dem Speicher des Kommunikationssystems gespeichert.

Durch das Festlegen der Gewichtungsfaktoren durch den registrierten Nutzer selbst ergibt sich in vorteilhafter Weise, dass der registrierte Nutzer selbst bestimmen kann, wie viel sein Verhalten bzw. sein Verhaltensmuster zur verhaltensbasierten Authentifizierung beträgt. Dies erhöht die Freiheit des registrierten Nutzers bei der Konfiguration des Systems, da der Nutzer selbst entscheiden kann, welche Klassifikationsparameter von seinem Verhaltensmuster umfasst werden. Zum Beispiel kann der Nutzer festlegen, dass das Verwenden der Radioanwendung nicht oder nur sehr schwach in die Generierung des Konfidenzwertes miteingehen soll, da er die Radioanwendung üblicherweise nur unregelmäßig nutzt. Der gleiche Nutzer könnte hingegen die Klassifikationsparameter der Positionsbestimmung stärker in die Generierung des Konfidenzwertes miteinfließen lassen, da er einen sehr strukturierten Tagesablauf hat und sich mit hoher Regelmäßigkeit an bestimmten Orten aufhält.

Nach Ausführungsformen umfasst die verhaltensbasierte Authentifizierung ferner das Trainieren des Klassifikationsmoduls mit den verhaltensbasierten Daten des aktuellen Nutzers, wobei das Klassifikationsmodul auf das Verhalten des aktuellen Nutzers unter der Voraussetzung trainiert wird, dass die verhaltensbasierte Authentifizierung den aktuellen Nutzer als den registrierten Nutzer authentifiziert, wobei das Trainieren ein Hinzufügen der verhaltensbasierten Daten des aktuellen Nutzers zu dem Vergleichsdatensatz umfasst, wobei das Trainieren ferner ein Entfernen von verhaltensbasierten Daten des registrierten Nutzers, welche ein vorgegebenes Mindestalter überschreiten, aus dem ersten Vergleichsdatensatz umfasst.

Das Trainieren des Klassifikationsmoduls bewirkt vorteilhafterweise, dass die verhaltensbasierte Authentifizierung auch dann angewendet werden kann, wenn sich das Verhalten des Nutzers ändert. Beispielsweise erleidet der Nutzer eine Verletzung im Bein oder in der Hand. Die Verletzung beeinflusst das Gehen bzw. das Schreiben und/oder Tippen des Nutzers, wodurch sich die diesen Vorgängen zugeordneten Parameter bzw. die entsprechenden Daten verändern. Ferner kann sich die Gangart oder das Tippverhalten des Nutzers über einen gewissen Zeitraum ohnehin auch ohne Verletzung ändern. Bei dem Vergleich der Daten mit dem Vergleichsdatensatz würden diese Änderungen mit der Zeit dazu führen, dass der Konfidenzwert sinkt, da der quantitative Unterschied zwischen den Daten und dem Vergleichsdatensatz zunimmt. Das Anpassen des Vergleichsdatensatzes an die aktuell erfassten Daten verhindert dies.

Das Trainieren des Klassifikationsmoduls kann sich in Ausführungsformen hinsichtlich der Klassifikation des physiologischen Zustandes des Nutzers von der Klassifikation hinsichtlich der Authentifizierung des Nutzers unterscheiden. Beispielsweise kann eine Beinverletzung die Authentifizierung beeinflussen, wobei sich durch das anpassen des Vergleichsdatensatzes der Nutzer trotz seiner Beinverletzung authentifizieren kann. Die Klassifikation des physiologischen Zustandes sollte sich demgegenüber nicht an den neuen Zustand anpassen. So lange der Nutzer eine Beinverletzung hat, wird ihm diese auch als Abweichung vom Referenzzustand angezeigt. Das Klassifikationsmodul wird in Bezug auf den physiologischen Zustand nicht mit dieser Abweichung auf eine Änderung des Referenzzustandes trainiert.

Würde hingegen beispielsweise der Nutzer an einem Langzeitkonditionstraining teilnehmen und mit der Zeit seine Kondition verbessern, so würde beispielsweise der Ruhepuls sinken. Diese Änderung würde ein Training des Klassifikationsmoduls bezüglich der Klassifikation des physiologischen Zustandes zur Folge haben. In Ausführungsformen wird das Klassifikationsmodul nur dann bezüglich des physiologischen Zustandes trainiert, wenn bestimmte physiologische Zustände klassifiziert wurden. Welche physiologischen Zustände dies umfasst, kann beispielsweise durch einen Arzt, einen Fitnesstrainer und/oder den Nutzer festgelegt werden.

Um den Vergleichsdatensatz an Veränderungen der Eigenschaften des Nutzers bzw. seines Verhaltens anzupassen, werden die aktuell erfassten Daten zu dem Vergleichsdatensatz hinzugefügt, und Daten, welche ein bestimmtes Schwellenalter erreicht haben, aus dem Vergleichsdatensatz entfernt. Durch das Entfernen der Daten aus dem Vergleichsdatensatz wird sichergestellt, dass alle Daten, welche das Verhalten und/oder Eigenschaften des Nutzers nicht mehr repräsentieren, nicht zur verhaltensbasierten Authentifizierung beitragen. Das Schwellenalter kann beispielsweise eine Woche, einen Monat, drei Monate oder ein Jahr umfassen.

Nach Ausführungsformen werden die aus dem Vergleichsdatensatz entfernten verhaltensbasierten Daten des registrierten Nutzers in dem Speichersystem persistent gespeichert. Ausführungsformen können den Vorteil haben, dass die aus dem Vergleichsdatensatz entfernten Daten nicht mehr zur Authentifizierung des Nutzers verwendet werden, aber immer noch für eine Auswertung, beispielsweise physiologischer Daten, zur Verfügung stehen. Beispielsweise werden die von den verhaltensbasierten Daten umfassten physiologischen Daten nach dem Entfernen aus dem Vergleichsdatensatz in dem Speichersystem persistent gespeichert. Nach Ausführungsformen erfolgt das Entfernen der verhaltensbasierten Daten des registrierten Nutzers aus dem Vergleichsdatensatz und das persistente Speichern in dem Speichersystem periodisch.

Nach Ausführungsformen werden auf eine erfolgreiche verhaltensbasierte Authentifizierung des aktuellen Nutzers hin die zur Authentifizierung verwendeten verhaltensbasierten Daten in dem Speichersystem persistent gespeichert.

Nach Ausführungsformen ist das Prüfungskriterium erfüllt, falls:
- zumindest ein Klassifikationsergebnis einen durch das Prüfungskriterium vorgegebenen Schwellenwert überschreitet und/oder
- ein durch das Prüfungskriterium vorgegebenes Höchstalter des zumindest einen Klassifikationsergebnisses nicht überschreiten.

In einer weiteren Ausführungsform der Erfindung sind auf dem Kommunikationssystem mehrere Nutzer registriert und das Klassifikationsergebnis wird für jeden registrierten Nutzer generiert. Ein Nutzererkennungsmodul entscheidet dann, welcher Nutzer gerade aktiv ist, wobei das Nutzererkennungsmodul ebenfalls von dem Prozessor des Kommunikationssystems ausgeführt wird.

Nach umfasst die verhaltensbasierte Authentifizierung ferner:
- Wiederholtes Ausführen der Schritte:
   - Generieren mindestens eines zweiten Konfidenzwertes durch das Klassifikationsmodul),
   - Speichern des mindestens einen zweiten Konfidenzwertes in dem Speicher des Kommunikationssystems,
- auf eine Authentifizierungsanfrage hin, Zugreifen auf den Speicher des Kommunikationssystems, um mindestens einen der gespeicherten zweiten Konfidenzwerte aus dem Speicher auszulesen,
- Auswerten des mindestens einen zweiten Konfidenzwertes, um zu überprüfen, ob ein Nutzerwechsel stattgefunden hat,
- Verwerfen der bisherigen Konfidenzwerte, falls ein Nutzerwechsel stattgefunden hat.

In einer weiteren Ausführungsform der Erfindung wird die Identifikation des Nutzers durch das Nutzererkennungsmodul mittels eines Entscheidungsbaums getroffen.

Durch die Möglichkeit, mehrere Nutzer zu identifizieren, ergibt sich in vorteilhafter Weise, dass beispielsweise auch Dienstgeräte bzw. Dienstsysteme, wie mitgeführte Dosimeter in einem durch Radioaktivität belasteten Bereich, die von einem Arbeitgeber an eine Mehrzahl von Mitarbeitern ausgegeben werden, wobei die Mehrzahl von Mitarbeitern, welche das jeweilige Kommunikationssystem abwechselnd benutzen, das Verfahren zur Klassifikation des physiologischen Zustandes anwenden können.

In einer weiteren Ausführungsform der Erfindung ist das Nutzererkennungsmodul so konfiguriert, dass es einen Wechsel des Nutzers anhand von grob- und/oder feinmotorischen Daten erkennt. Das Nutzererkennungsmodul generiert einen zweiten Konfidenzwert, welcher angibt, welcher der registrierten Nutzer gerade der aktuelle Nutzer ist. Der zweite Konfidenzwert wird dann gebildet, wenn das Nutzererkennungsmodul eine Bewegung erkennt, die typisch für einen Nutzerwechsel des Kommunikationssystems ist. Eine typische Bewegung kann dabei das Ab- und Wiederanlegen einer Smartwatch, das Übergeben eines Mobiltelefons oder eine vergleichbare Bewegung umfassen.

In einer weiteren Ausführungsform der Erfindung ist das Nutzererkennungsmodul so konfiguriert, dass es eine zumindest vorübergehende Beendigung der Nutzung des Kommunikationssystems durch den aktuellen Nutzer anhand von grob- und/oder feinmotorischen Daten erkennt. Dazu ist das Nutzererkennungsmodul beispielsweise auf ein Erkennen einer grob- und/oder feinmotorischen Bewegung des Ablegens des Kommunikationssystems konfiguriert. Wird eine solche Beendigung erkannt, werden beispielsweise der bisherige Konfidenzwert verworfen, um sicherzustellen, dass bei einem möglichen Nutzerwechsel ein nicht authentifizierter Nutzer das Kommunikationssystem verwendet. Dieser nicht authentifizierte Nutzer muss sich dann authentifizieren.

Nach Ausführungsformen ist das Speichersystem ein internes Speichersystem des Kommunikationssystems. Ausführungsformen können den vorteilhaben

Nach Ausführungsformen ist das Speichersystem ein externes Speichersystem. Um eine permanente Verfügbarkeit und Speicherbarkeit von Daten zu ermöglichen kann das mobile, tragbare Kommunikationssysteme dazu konfiguriert sein mit einem externen Speichersystem bzw. Speicherdienst zu kommunizieren, um auf dort gespeicherte physiologische Daten von einem beliebigen Standpunkt aus zuzugreifen bzw. zusätzliche physiologische daten dort zu speichern. Um die Verfügbarkeit von Daten zu erhöhen, wird beispielsweise ein sogenannter Cloud-Dienst in Anspruch genommen. Ein Cloud-Dienst ist ein Speicherdienst, welcher einen elektronischen Datenspeicher über ein Netzwerk zur Verfügung stellt. Beispielsweise sind ein oder mehrere Speicher innerhalb eines Cloud-Speichersystems über das mobile, tragbare Kommunikationssystem ansteuerbar. Das mobile, tragbare Kommunikationssystem dient dabei als eine Art Schlüssel, der den Nutzer dazu befähigt den Speicherdienst in Anspruch zu nehmen.

Die Authentifizierung des Nutzers gegenüber dem Speichersystem kann dabei über die Authentifizierung des Nutzers gegenüber dem mobilen, tragbaren Kommunikationssystem oder gegenüber dem Speichersystem selbst erfolgen. Bei der Authentifizierung des Nutzers gegenüber dem mobilen, tragbaren Kommunikationssystem ist das mobile, tragbare Kommunikationssystem mit dem Speichersystem verbunden, sodass eine Authentifizierung des Nutzers gegenüber dem mobilen, tragbaren Kommunikationssystem gleichzeitig eine Authentifizierung gegenüber dem Speichersystem darstellt, ohne dass der Nutzer sich explizit gegenüber dem Speichersystem authentifizieren muss. Findet eine Authentifizierung des Nutzers gegenüber dem Speichersystem über das mobile, tragbare Kommunikationssystem statt so werden beispielsweise über das mobile, tragbare Kommunikationssystem ein Passwort, eine PIN oder ähnliche Authentifizierungsmittel eingegeben, die dem Nutzer den Zugriff auf das Speichersystem ermöglichen.

Ein externes Speichersystem kann beispielsweise durch einen Speicherdienstanbieter bereitgestellt sein. Ein Speichersystem kann ferner mehrere Speicher umfassen, welche durch mehrere Speicherdienstanbieter bereitgestellt werden. Die kommunikative Verbindung kann beispielsweise als Drahtlosverbindung oder als kabelgebundenen Verbindung ausgebildet sein. Der Zugriff des Kommunikationssystems auf das Speichersystem kann dabei beispielsweise über ein Netzwerk erfolgen, wobei das Netzwerk beispielsweise das Internet, ein Intranet und oder ein lokales Netzwerk umfasst.

Das Speichersystem kann beispielsweise einen eigenständigen Speicher, eine Mehrzahl von Speichern oder eine zu einem System zusammengeschaltete Mehrzahl von Speichern (RAID/ engl. "Redundant Array of Independent Disks"/ Redundante Anordnung unabhängiger Festplatten) umfassen. Ein RAID-System dient zur Organisation mehrerer physischer Massenspeicher wie beispielsweise Festplattenlaufwerke oder Solid-State-Drives zu einem logischen Laufwerk. Es kann im Vergleich zu einem einzelnen physischen Speichermedium eine höhere Ausfallsicherheit oder einen größeren Datendurchsatz ermöglichen. Die Mehrzahl von Speichern kann beispielsweise derart geschaltet sein, dass ein zweiter Speicher der Mehrzahl von Speichern einen ersten Speicher der Mehrzahl von Speichern spiegelt (RAID 1). In dieser Ausführungsform wird eine in dem ersten Speicher gespeicherte Datei automatisch auch in dem zweiten Speicher gespeichert. Der Speicherinhalt des ersten und des zweiten Speichers sind in diesem Fall identisch und können einander ersetzen. In einem zweiten Beispiel kann die Mehrzahl von Speichern derart geschaltet sein, dass eine zu speichernde Datei auf zwei oder mehr Speicher der Mehrzahl von Speichern aufgeteilt wird (RAID 0) und jeder Speicher einen Teil der Schreiboperationen übernimmt. Dadurch können zu speichernde Dateien schneller in das Speichersystem geschrieben werden, da die Teile bzw. Fragmente der Datei parallel geschrieben werden können.

Nach Ausführungsformen ist das Speichersystem ein externes Speichersystem, welches eine Mehrzahl von unabhängigen Speichern mit jeweils zumindest einem nichtflüchtigen Speichermedium und einen Dateimanagementserver umfasst. Das persistente Speichern der verhaltensbasierten Daten des registrierten Nutzers durch das Kommunikationssystem in dem Speichersystem umfasst ein verteiltes Speichern zumindest einer Datei mit physiologischen Daten, welche die verhaltensbasierten Daten umfassen, auf mehreren unabhängigen Speichern der Mehrzahl von unabhängigen Speichern. Das verteilte Speichern umfasst:
- automatische Generierung eines Verteilungsplans, der Instruktionen zur Generierung von Dateifragmenten der Datei mittels eines Fehlerkorrekturverfahrens und Identifikatoren der mehreren unabhängigen Speicher, in denen die generierten Dateifragmente gespeichert werden sollen, enthält, durch den Dateimanagementserver oder durch das Kommunikationssystem,
- Durchführung des in dem Verteilungsplan spezifizierten Fehlerkorrekturverfahrens zur Generierung der Dateifragmente aus der Datei durch das Kommunikationssystem,
- Senden des Authentifizierungssignals des Kommunikationssystems zum Speichern der Dateifragmente in den im Verteilungsplan identifizierten mehreren unabhängigen Speicher an den Dateimanagementserver über ein Netzwerk,
- in Antwort auf den Empfang des Authentifizierungssignals, Anforderung eines Berechtigungstokens durch den Dateimanagementserver von jedem der in dem Verteilungsplan identifizierten unabhängigen Speicher und Weiterleitung der in Antwort auf die Anforderung erhaltenen Berechtigungstoken durch den Dateimanagementserver an das Kommunikationssystem, und
- Speichern der generierten Dateifragmente durch das Kommunikationssystem in den mehreren unabhängigen Speichern des Speichersystems über das Netzwerk mittels Berechtigungsnachweis durch die Berechtigungstoken unter Umgehung des Dateimanagementservers.

Dieses Verfahren kann vorteilhaft sein, da die Speicherung von mittels eines Fehlerkorrekturverfahrens erzeugten Dateifragmenten in verschiedenen Speicherdiensten die Verfügbarkeit der zu speichernden Daten erhöhen kann. Außerdem kann dadurch auch die Sicherheit der Daten vor einem unberechtigten Zugriff durch den Speicherdienst erhöht werden: Fehlerkorrekturverfahren generieren Dateifragmente, die Korrekturbits enthalten und somit, je nach Anteil der Korrekturbits in den Fragmenten und je nach der Anzahl der generierten Dateifragmente, eine Rekonstruktion der ursprünglichen Datei erlauben, sollte einer oder mehrere der Speicherdienste temporär oder permanent ausfallen.

Jedoch kann keiner der Speicherdienste die Daten rekonstruieren, selbst wenn der Speicherdienst eine etwaige Verschlüsselung der Dateifragmente "knacken" sollte, da kein Speicherdienst sämtliche Dateifragmente erhält. Die Sicherheit durch unberechtigten Zugriff durch den Betreiber des Speicherdienst kann in synergistischer Weise dadurch erhöht werden, dass eine strikte Trennung des Zugriffsmanagements durch den Dateimanagementserver in Form der Anforderung der Berechtigungstoken und deren Weiterleitung einerseits und dem Datenmanagement durch die einzelnen Speicherdienste andererseits erfolgt: die Dateifragmente werden unter Umgehung des Dateimanagementservers von dem Nutzersystem direkt in den Speicherdiensten gespeichert. Der Dateimanagementserver agiert also nicht als Router, sondern vermittelt lediglich die Berechtigungstoken, welche dem Kommunikationssystem die Speicherung der Dateifragmente über die Speicherdienste erlaubt. Der Dateimanagementserver hat also keinen Zugriff auf den Inhalt der übertragenen Dateifragmente.

Die Speicherdienste wiederum verfügen nicht über die Metadaten, die zur Rekonstruktion der Datei benötigt werden. Diese Metadaten sind lediglich dem Kommunikationssystem und/oder dem Dateimanagementserver zugänglich. Zudem kann das Verfahren deutlich schneller extern speichern als herkömmliche Verfahren: um zumindest eine Sicherheitskopie einer Datei extern verfügbar zu haben, musste bisher eine Kopie dieser Datei an einen externen Speicherdienst übertragen werden. Im Falle eines Ausfalls dieses externen Dienstes war die Sicherheitskopie verloren oder zumindest temporär nicht mehr verfügbar. Gemäß dieser Ausführungsform werden aber Dateifragmente mittels mehrerer Speicherdienste gespeichert. Dies ermöglicht die parallele Übertragung der Dateifragmente über das Netzwerk. Bei paralleler Übertragung der Dateifragmente kann der gesamte Informationsgehalt der Datei einschließlich der Fehlerkorrekturbits innerhalb eines Bruchteils der Zeit erfolgen, die zur Übertragung einer ganzen Dateikopie an einen einzelnen Speicherdienst notwendig wäre.

Nach Ausführungsformen generiert das Kommunikationssystem die Metadaten, die die Rekonstruktion der Datei aus den gespeicherten Dateifragmenten erlauben. Das Kommunikationssystem ist einem Nutzer zugeordnet. Die Metadaten können ein oder mehrere der folgenden Elemente beinhalten:
- Pfade zu allen Speicherorten in den Speichermedien der Speicherdienste, in welchen die Dateifragmente der Datei gemäß dem Verteilungsplan gespeichert werden sollen oder bereits gespeichert wurden; und/oder
- einen symmetrischen Schlüssel, der eine Entschlüsselung des mit diesem symmetrischen Schlüssel verschlüsselten Dateifragments erlaubt; der symmetrische Schlüssel kann zum Beispiel ein für die zu speichernde dateispezifischer Schlüssel sein, was die Sicherheit weiter erhöhen kann; der symmetrische Schlüssel kann beispielsweise ein Hashwert der zu speichernden Datei sein; Zumindest der symmetrische Schlüssel kann von einem öffentlichen kryptographischen Schlüssel des Kommunikationssystems, das die Datei zum Zwecke der Speicherung fragmentierte, oder von einem öffentlichen kryptographischen Schlüssel eines anderen Kommunikationssystems, das von dem Dateimanagementserver als berechtigt zum Zugriff auf die bereits verteilt gespeicherte Datei erkannt wurde, verschlüsselt worden sein. Dies kann bewirken, dass der Dateimanagementserver den symmetrischen Schlüssel nicht zur Entschlüsselung der Dateifragmente verwenden kann, sodass der Inhalt der Dateifragmente vor Zugriff durch den Dateimanagementserver geschützt ist; und/oder
- für jedes der Dateifragmente einen von dem Kommunikationssystem berechneten Hash-Wert des Dateifragments; und/oder
- den ursprünglichen Dateinamen der verteilt gespeicherten Datei; und/oder
- Konfigurationsdaten des Fehlerkorrekturverfahren; die Spezifikation kann insbesondere einen Identifikator (ID) und/oder Konfigurationsparameter des zur Erzeugung der Dateifragmente verwendeten Fehlerkorrekturverfahrens (z.B. die später erläuterten Parameter Wortlänge, Anzahl K der generierten Dateipartitionen und/oder Anzahl M der verlustkompensierbaren Dateipartitionen;
- ein Mapping des ursprünglichen Dateinamens zu den Hashwerten und Pfaden der generierten Dateifragmente.

Zudem ist die Datei dank der Fehlerkorrekturbits nicht verloren, sollte einer der Speicherdienste ausfallen, sondern kann sofort und automatisch aus den übrigen Dateifragmenten mit den Fehlerkorrekturbits und den Metadaten rekonstruiert werden. Dies kann insbesondere für Dateien relevant sein, die hochverfügbar sein müssen, da z.B. diese für die Arbeitsfähigkeit eines Unternehmens erforderlich sind. Der Umstand, dass der Verteilungsplan für die Datei generiert wird, kann eine feingranulare und für die jeweilige Datei optimierte Generierung des Verteilungsplans ermöglichen.

Ein "Verteilungsplan" im Sinne der vorliegenden Erfindung ist eine Spezifikation, welche zumindest Angaben über die Identität derjenigen Speicherdienste enthält, über welche Fragmente einer Datei gespeichert werden sollen sowie Angaben enthält, die einen Fehlerkorrekturverfahren festlegen, welches zur Generierung dieser Dateifragmente aus der besagten Datei verwendet werden soll. Ein Verteilungsplan kann z.B. als XML Datei oder binäre Datei ausgebildet sein.

Ein "Dateimanagementserver" ist beispielsweise ein Computersystem, welches eine Schnittstelle zur Kommunikation mit einem oder mehreren Kommunikationssystemen und zur Kommunikation mit mehreren Speicherdiensten besitzt, um dem einen oder mehreren Kommunikationssystemen Zugriffsrechte auf von diesen Speicherdiensten verwaltete Speichermedien zu vermitteln. Der Dateimanagementserver stellt dabei selbst keinen Speicherdienst bereit und ist vorzugsweise auch von den Speicherdiensten durch sicherheitstechnische Maßnahmen getrennt, welche dafür sorgen, dass keiner dieser Speicherdienste Zugriff auf von dem Dateimanagementserver verwaltete Daten, insbesondere z.B. Nutzerprofile und Metadaten, hat. Der Dateimanagementserver kann aus einem Datenverarbeitungsgerät bestehen oder aus mehreren Datenverarbeitungsgeräten, insbesondere Computern, bestehen, die zusammenwirken und gemeinsam verwaltet werden um die Funktionalität des Dateimanagementservers gemäß den oben beschriebenen Ausführungsformen bereitzustellen.

Ein "Berechtigungstoken" ist eine Datenstruktur, beispielsweise eine Datei, welche Informationen beinhaltet, die einer Instanz, die im Besitz dieses Berechtigungstokens ist, eine Berechtigung zum Zugriff auf Speicherbereiche externer Speichermedien einräumt. Die externen Speichermedien können z.B. von einem Speicherdienst über ein Netzwerk wie z.B. das Internet bereitgestellt werden. Nach Ausführungsformen kann das Berechtigungstoken sowohl einen Zeiger als auch einen Berechtigungsausweis enthalten. Der Zeiger kann z.B. aus einer Kombination aus einer IP-Adresse eines Speicherdienstes und einem Dateipfad eines von diesem Speicherdienst verwalteten Speichermediums bestehen. Der Berechtigungsausweis kann z.B. ein oder mehrere Datenwerte beinhalten, die den Besitzer des Berechtigungstokens als zugriffsberechtigt ausweisen, z.B. einen von dem Speicherdienst generierten Zufallswert der mit einem Referenzwert verglichen werden kann. Die besagten Datenwerte können auch eine Signatur umfassen.

Nach Ausführungsformen sind die Berechtigungstoken für das Schreiben von Dateifragmenten als URLs (engl. "Uniform Resource Locator"/einheitlicher Ressourcenzeiger) ausgebildet, die jeweils einen direkten Schreibzugriff auf einen durch die URL identifizierten Speicherplatz auf dem Speichermedium eines der Speicherdienste ermöglicht. Die URL identifiziert und lokalisiert einen Speicherbereich innerhalb des Speichersystems und den Ort des Speicherbereichs in Computernetzwerken, beispielsweise dem Internet. In analoger Weise sind Berechtigungstoken für das Lesen von Dateifragmenten als URLs ausgebildet, die jeweils einen direkten Lesezugriff auf einen durch die URL identifizierten Speicherbereich auf dem Speichermedium eines der Speicherdienste ermöglichen.

Dies kann vorteilhaft sein, da der Dateimanagementserver nicht als Router fungiert, was den Schutz der Daten vor unberechtigtem Zugriff durch den Dateimanagementserver gewährleisten kann. Dass die Berechtigungstoken nur eine temporäre Gültigkeit haben, kann die Sicherheit des Verfahrens ebenfalls erhöhen. Nach Ablauf einer voreingestellten bzw. vordefinierten Zeit, zum Beispiel einigen Sekunden, Minuten oder Tagen, wird das Berechtigungstoken, zum Beispiel eine URL, automatisch ungültig. Die Verwendung von Berechtigung-URLs hat zudem den Vorteil, dass auch Nutzern, die sich nicht bei den einzelnen Speicherdiensten registriert haben, Zugriff auf die Datei gewährt werden kann, da der Dateimanagementserver zentral die Zugriffsrechte verwaltet. Der Eigentümer der Datei kann spezifisch festlegen, ob die Zugriffsrechte rein lesend und/oder auch schreibend sind. Dies kann die Flexibilität und Zahl der Anwendungsszenarien des Verfahrens enorm erhöhen, da weitere Nutzer sich nur bei dem Dateimanagementserver registrieren müssen um beispielsweise eine Datei ansehen zu können.

Ein "Speicherdienst" ist ein über ein Netzwert bereitgestellter Dienst, der es einem oder mehreren Kommunikationssystemen ermöglicht, Daten über das Netzwerk an den Dienst zu senden damit diese von dem Speicherdienst auf ein oder mehreren von dem Speicherdienst verwalteten Speichermedien gespeichert werden, und/oder der es den Kommunikationssystemen ermöglicht, auf bereits von diesem oder einem anderen Kommunikationssystemen gespeicherte Daten über das Netzwerk - z.B. lesend oder schreibend - zuzugreifen. Ein einzelner Speicherdienst ist dabei von jedem anderen Speicherdienst vorzugsweise technisch und organisatorisch getrennt. Nach Ausführungsformen ist jeder der Speicherdienste dazu konfiguriert, über eine Schnittstelle Daten von dem Kommunikationssystem über das Netzwerk zu empfangen und diese in seinem nicht flüchtigen Speichermedium zu speichern.

Ein "Fehlerkorrekturbit" ist ein Bit, welches zusätzlich zu ein oder mehreren Bits der eigentlichen Nutzdaten generiert und ggf. an einen Empfänger übertragen wird, und welches zur Kontrolle der Integrität der besagten ein oder mehreren Bits der Nutzdaten während der Übertragung an den Empfänger dient.

Ein "Fehlerkorrekturverfahren" ist ein Verfahren, welches dazu dient, Fehler bei der Speicherung und Übertragung von Daten zu erkennen und zu korrigieren, wobei ein Fehler auch darin bestehen kann, dass Teile einer logisch zusammenhängenden Datenmenge (z.B. eine Datei) temporär oder dauerhaft nicht verfügbar sind, z.B. wegen Ausfalls eines Speichermediums, das diese Teile gespeichert hatte. Um dies zu erreichen fügen Fehlerkorrekturverfahren vor der Speicherung oder Übertragung von Nutzdaten diesen Nutzdaten zusätzliche Redundanz in Form zusätzlicher Fehlerkorrekturbits hinzu, die zur Bestimmung von Fehlern und Fehlerpositionen und auch zur Rekonstruktion fehlender Teile der Nutzdaten genutzt werden können.

Nach manchen Ausführungsformen umfasst das Verfahren:
- Bereitstellung einer editierbaren Konfiguration, die Anforderungen eines Nutzers hinsichtlich der Geschwindigkeit, der geographischen Lage, der Sicherheit und/oder der Kosten einer für die Speicherung von Daten zu nutzenden IT-Infrastruktur sowie Anforderungen des Nutzers hinsichtlich der Verfügbarkeit der zu speichernden Daten enthält;
- Bereitstellung eines Speicherdienst-Katalogs, der Spezifikationen einer Vielzahl von zur Verfügung stehenden Speicherdiensten umfasst, wobei die Spezifikation jedes der Speicherdienste Angaben hinsichtlich der Geschwindigkeit, der geographischen Lage, der Sicherheit und/oder der Kosten einer für die Speicherung der Daten genutzten IT-Infrastruktur des Speicherdienstes enthalten;
- um den Verteilungsplan zu generieren, automatische Auswertung der Konfiguration und des Speicherdienst-Katalogs, um in Abhängigkeit von den Spezifikationen der verfügbaren Speicherdienste und in Abhängigkeit der Anforderungen des Nutzers ein Fehlerkorrekturverfahren aus einer Vielzahl von Fehlerkorrekturverfahren zu identifizieren, das den Anforderungen hinsichtlich der Verfügbarkeit der zu speichernden Daten genügt und um die im Verteilungsplan identifizierten Speicherdienste aus der Vielzahl der zur Verfügung stehenden Speicherdienste zu identifizieren, die zu einer verteilten Speicherung der Datei gemäß den nutzerspezifischen Anforderungen hinsichtlich der Geschwindigkeit, geographischen Lage, Sicherheit und/oder Kosten der für die Speicherung von Daten zu nutzenden IT-Infrastruktur geeignet sind; und
- Verwenden des identifizierten Fehlerkorrekturverfahrens als das Fehlerkorrekturverfahren des Verteilungsplans.

Beispielsweise umfasst die Konfiguration Konfigurationsregeln, die von dem Nutzer erstellt und angepasst werden können. Bei Ausführungsformen in welchen der Verteilungsplan von dem Kommunikationssystem generiert wird erfolgt auch die automatische Auswertung durch das Kommunikationssystem. Wird der Verteilungsplan von dem Dateimanagementserver generiert, erfolgt auch die automatische Auswertung durch den Dateimanagementserver. Vorzugsweise wird jedoch in beiden Ausführungsformen sowohl der Speicherdienst-Katalog als auch die Nutzer-Konfiguration zur Nutzung durch eine Vielzahl von Kommunikationssystemen zentral gespeichert, zum Beispiel auf dem Dateimanagementserver oder einem mit diesem verbundenen Datenbankserver. Dies kann die Aktualisierung des Speicherdienst-Katalogs erleichtern. Nach manchen Ausführungsformen hat der Dateimanagementserver eine Schnittstelle, die mit Schnittstellen der Speicherdienste interoperabel ist und bewirkt, dass bei einer Änderung bezüglich der Sicherheit, geographischen Lage, Verfügbarkeit oder Kosten der IT-Infrastruktur eines der Speicherdienste eine automatische Aktualisierung der in dem Speicherdienst-Katalog enthaltenen Spezifikation dieses Speicherdienstes bewirkt wird.

Nach Ausführungsformen umfasst ein Zugriff auf die zumindest eine Datei mit physiologischen Daten des registrierten Nutzers, welche gemäß dem Verteilungsplan mittels des Fehlerkorrekturverfahrens in Dateifragmente aufgeteilt ist und deren resultierende Dateifragmente auf mehreren unabhängigen Speichern der Mehrzahl von unabhängigen Speichern des Speichersystems verteilt gespeichert sind:
- nach erfolgreicher Authentifizierung über den Dateimanagementserver unter Verwendung des Authentifizierungssignals, Empfangen eines Berechtigungstoken für jeden der unabhängigen Speicher zumindest einer Auswahl der mehreren unabhängigen Speicher des Speichersystems, in deren nichtflüchtigen Speichermedien die Dateifragmente gemäß dem Verteilungsplan gespeichert sind, über den Dateimanagementserver, wobei die von der Auswahl der unabhängigen Speicher umfassten Dateifragmente ausreichend für eine Rekonstruktion der Datei mit den physiologischen Daten des registrierten Nutzers sind,
   wobei die Berechtigungstoken den angeforderten Zugriff auf die durch die unabhängigen Speicher der Auswahl jeweils gespeicherten Dateifragmente unter Umgehung des Dateimanagementservers ermöglichen,

- Herunterladen der Dateifragmente von den einzelnen unabhängigen Speichern der Auswahl über das Netzwerk unter Verwendung der Berechtigungstoken,
- Rekonstruieren der Datei aus den heruntergeladenen Dateifragmenten.

Nach Ausführungsformen erfolgt das Empfangen der Berechtigungstoken, das Herunterladen der Dateifragmente und die Rekonstruktion der Datei durch das Kommunikationssystem, welches die rekonstruierte Datei über eine kryptographisch gesicherte Kommunikationsverbindung an das Computersystem sendet, oder das Empfangen der Berechtigungstoken, das Herunterladen der Dateifragmente und die Rekonstruktion der Datei erfolgt durch das Computersystem.

In einer Ausführungsform werden die Zugriffsrechte für die gespeicherte Datei individuell oder anhand eines Dateityps und/oder einer Dateigruppe festgelegt.

Das Festlegen von individuellen und/oder dateitypabhängigen Zugriffsrechten bewirkt in vorteilhafter Weise, dass für Dateien mit unterschiedlicher Sensibilität unterschiedliche Prüfungskriterien mit unterschiedlichen Schwellenwerten für das Klassifikationsergebnis vergeben werden können. Beispielsweise kann auf sehr persönliche Dateien dann zugegriffen werden, wenn das Klassifikationsergebnis einen höheren Schwellenwert überschreitet, als das Klassifikationsergebnis bei weniger persönlichen Dateien überschreiten muss. Der Nutzer kann beispielsweise selbst festlegen, welchen Dateien er welche Zugriffsrechte zuweist. Der Nutzer ist somit frei bei der Vergabe von Zugriffsrechten auf die in dem Speicher des Speichersystems gespeicherten Dateien. Ferner können Dateien eines Dateityps generell mit unterschiedlichen Rechten versehen werden. Beispielsweise kann für .exe Dateien ausschließlich ein Lesezugriff bestehen, um die Gefahr von Viren und/oder Trojanern in dem Speicher des Speichersystems zu vermindern. Sind die Zugriffsrechte für Dateitypen vergeben, so muss der Nutzer nicht für jede Datei einzeln festlegen. Insbesondere wenn viele Dateien des gleichen Dateityps in dem Speicher des Speichersystems gespeichert sind ist diese Ausführungsform vorteilhaft.

Der Nutzer kann beispielsweise die Zugriffsrechte für unterschiedliche Dateitypen vergeben. Ferner können die Zugriffsrechte beispielsweise durch das Kommunikationssystem, das Speichersystem oder auf eine andere Art bestimmt sein.

In einer Ausführungsform umfasst das Authentifizierungssignal Informationen bezüglich der Zugriffsrechte, wobei die Zugriffsrechte dateiindividuelle oder gruppenspezifische Zugriffsrechte umfassen.

Umfasst das Authentifizierungssignal die Zugriffsrechte, so kann das Ergebnis der Prüfung des Klassifikationsergebnisses gegen das Prüfungskriterium Einfluss auf die Zugriffsrechte nehmen. Beispielsweise kann ein Nutzer aufgrund eines ersten Klassifikationsergebnisses nur eingeschränkten Zugriff auf die Dateien haben, da Prüfungskriterium mehrere Teilkriterien umfasst. Beispielsweise umfasst ein Teilkriterium einen ersten Schwellenwert und ein weiteres Teilkriterium einen zweiten Schwellenwert, wobei der zweite Schwellenwert einen höheren Wert als der erste Schwellenwert darstellt. Ist das Teilkriterium mit dem ersten Schwellenwert erfüllt, das Teilkriterium mit dem zweiten Schwellenwert jedoch nicht, so kann der Zugriff des Nutzers auf das Speichersystem beispielsweise beschränkt sein. Zu einem zweiten Zeitpunkt kann derselbe Nutzer vollen Zugriff auf die Dateien erlangen, da ein zweites Klassifikationsergebnis den Nutzer mit einer höheren Wahrscheinlichkeit als den registrierten Nutzer identifiziert hat, und das zweite Klassifikationsergebnis beide Teilkriterien erfüllt.

Ferner können unterschiedlichen Nutzern unterschiedliche Prüfungskriterien vorgegeben sein, um auf denselben Speicher eines Speichersystems zuzugreifen. Beispielsweise ist ein erster Nutzer als Administrator und/oder Eigentümer registriert. Ein zweiter Nutzer ist beispielsweise als Gast registriert. Das Authentifizierungssignal des Administrators/Eigentümers liegt beispielsweise dem gleichen oder einem ähnlichen Klassifikationsergebnis zu Grunde, wie das Authentifizierungssignal des Gastes. Trotzdem kann der Administrator/Eigentümer mehr Zugriffsrechte besitzen, als der Gast, da das Authentifizierungssignal des Administrators von vornherein mehr Zugriffsrechte umfasst, als das Authentifizierungssignal des Gastes.

Ausführungsformen betreffen ein mobiles, tragbares Kommunikationssystem zum Freigeben eines Zugriffs eines Computersystems auf physiologische Daten eines registrierten Nutzers eines mobilen, tragbaren Kommunikationssystems, welche in einem Speichersystem persistent gespeichert sind, wobei das Kommunikationssystem ein Klassifikationsmodul, einen Prozessor, einen Speicher, eine Kommunikationsschnittstelle und zumindest einen Sensor zur Erfassung von verhaltensbasierten Daten für eine verhaltensbasierte Authentifizierung eines aktuellen Nutzers gegenüber dem Kommunikationssystem aufweist,
wobei das Klassifikationsmodul zur Klassifikation des Verhaltens des aktuellen Nutzers unter Verwendung der verhaltensbasierten Daten konfiguriert ist, wobei die verhaltensbasierten Daten physiologische Daten des aktuellen Nutzers umfassen, welche dazu vorgesehen sind, in dem Speichersystem persistent gespeichert zu werden, falls der aktuelle Nutzer im Zuge der verhaltensbasierten Authentifizierung als der registrierte Nutzer authentifiziert wird,
wobei das Kommunikationssystem dazu konfiguriert ist über die Kommunikationsschnittstelle mit dem Computersystem zu kommunizieren,
wobei der Speicher Programminstruktionen umfasst und ein Ausführen der Programminstruktionen durch den Prozessor das Kommunikationssystem dazu veranlasst das Verfahren auszuführen, welches umfasst:
- Authentifizieren des Computersystems gegenüber dem Kommunikationssystem unter Verwendung der Kommunikationsschnittstelle des Kommunikationssystems,
- verhaltensbasiertes Authentifizieren des Nutzers gegenüber dem Kommunikationssystem, wobei das verhaltensbasierte Authentifizieren des Nutzers umfasst:
   o Erfassen verhaltensbasierter Daten des aktuellen Nutzers durch den zumindest einen Sensor des Kommunikationssystems,
   ∘ Generieren zumindest eines Klassifikationsergebnisses unter Verwendung des Klassifikationsmoduls und der erfassten verhaltensbasierten Daten,
   ∘ Auswerten des zumindest einen Klassifikationsergebnisses, um den Nutzer zu authentifizieren, wobei das Auswerten ein Prüfen umfasst, ob das Klassifikationsergebnis ein vorgegebenes Prüfungskriterium erfüllt, wobei eine erfolgreiche Authentifizierung des aktuellen Nutzers als den registrierten Nutzer ein Erfüllen des vorgegebenen Prüfungskriteriums umfasst,
- Erzeugen eines von dem Erfolg der Authentifizierung des Computersystems und des Nutzers abhängigen Authentifizierungssignals durch das mobile, tragbare Kommunikationssystem,
- Freigabe des Zugriffs des Computersystems auf die in dem Speichersystem persistent gespeicherten physiologischen Daten des registrierten Nutzers, falls das Authentifizierungssignal eine erfolgreiche Authentifizierung des Computersystems und des aktuellen Nutzers angibt und falls eine Zustimmung des Nutzers zu dem Zugriff vorliegt.

Ausführungsformen betreffen ein System, welches ein mobiles, tragbares Kommunikationssystem nach einer der vorangehenden Ausführungsformen und ein Speichersystem zum persistenten Speichern physiologischer Daten des registrierten Nutzers des Kommunikationssystems umfasst, wobei es sich bei den physiologischen Daten um verhaltensbasierte Daten des registrierten Nutzers handelt, welche im Zuge einer erfolgreichen verhaltensbasierten Authentifizierung des registrierten Nutzers gegenüber dem Kommunikationssystem durch zumindest einen Sensor des Kommunikationssystems erfasst wurden.

Nach Ausführungsformen umfasst das System ferner ein Computersystem zum Zugreifen auf physiologische Daten eines registrierten Nutzers des Kommunikationssystems, welche persistent in dem Speichersystem gespeichert sind.

Nach Ausführungsformen umfasst das Computersystem ein Terminal mit einer Kommunikationsschnittstelle zur Kommunikation mit einem ID-Token, wobei der ID-Token eine Kommunikationsschnittstelle zur Kommunikation mit dem Terminal, einen Prozessor und einen Speicher umfasst, wobei in einem geschützten Speicherbereich des Speichers ein privater kryptographischer Schlüssel eines dem ID-Token zugeordneten asymmetrischen Schlüsselpaars gespeichert ist und wobei die Authentifizierung des Computersystems unter Verwendung des privaten kryptographischen Schlüssel des ID-Tokens erfolgt.

Nach Ausführungsformen handelt es sich bei dem ID-Token um einen elektronischen Heilberufeausweis.

Im Weiteren werden Ausführungsformen mit Bezugnahme auf die Zeichnungen näher erläutert. Es zeigen:
- Figur 1: einen schematischen Aufbau eines beispielhaften mobilen, tragbaren Kommunikationssystems zur verhaltensbasierten Authentifizierung eines Nutzers,
- Figur 2: einen schematischen Aufbau eines beispielhaften Systems zur Freigabe eines Zugriffs auf physiologische Daten,
- Figur 3: einen schematischen Ablauf einer Freigabe eines Zugriffs auf physiologische Daten,
- Figur 4: einen schematischen Ablauf einer verhaltensbasierten Authentifizierung in einem Ablaufdiagramm,
- Figur 5a: Schritte der verhaltensbasierten Authentifizierung in einem Ablaufdiagramm,
- Figur 5b: Schritte eines Trainings eines Klassifikationsmoduls in einem Ablaufdiagramm,
- Figur 6: ein schematisches Verfahren zur Abarbeitung von Daten, die das mobile, tragbare Kommunikationssystem verarbeitet,
- Figuren 7: jeweils einen schematischen Aufbau einer beispielhaften Ausführungsform eines Kommunikationssystems und eines Speichersystems,
- Figur 8: Schritte des schematischen Ablaufs eines exemplarischen Verfahrens zum Speichern von Daten in dem Speichersystem,
- Figur 9: Schritte des schematischen Ablaufs eines exemplarischen Verfahrens zum Auslesen von Daten aus dem Speichersystem,
- Figur 10: Schritte des schematischen Ablaufs eines exemplarischen Verfahrens zur Freigabe eines Zugriffs im Fall eines kritischen Zustands, und
- Figuren 11: beispielhafte physiologische Parameter und ihre Einteilung.

Elemente der nachfolgenden Ausführungsformen, die einander entsprechen, werden mit denselben Bezugszeichen gekennzeichnet.

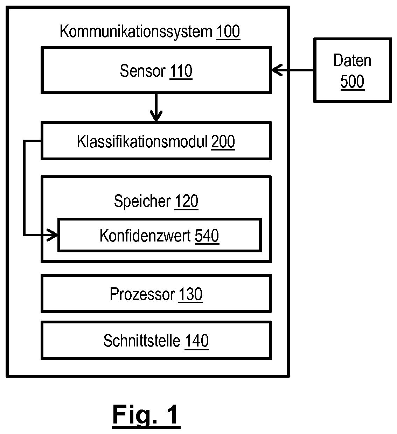

Figur 1 zeigt den schematischen Aufbau einer Ausführungsform eines mobilen, tragbaren Kommunikationssystems 100, welches von einem Nutzer mitgeführt wird. Das Kommunikationssystem 100 kann in verschiedenen Ausführungsformen ein einzelnes mobiles, tragbares Kommunikationsgerät oder mehrere mobile, tragbare Kommunikationsgeräte umfassen. Beispielsweise handelt es sich bei dem mobilen, tragbaren Kommunikationsgerät 100 um ein Smartphone. Das Kommunikationssystem 100 dazu konfiguriert eine verhaltensbasierte Authentifizierung eines aktuellen Nutzers des Kommunikationssystems auszuführen. Das tragbare Kommunikationssystem 100 weist einen Sensor auf, welcher dazu geeignet ist, nutzerbezogene Daten 500 zu erfassen. Insbesondere ist der Sensor dazu konfiguriert verhaltensbasierte daten des Nutzers zu erfassen, welche physiologische Daten des Nutzers umfassen. Ferner weist das Kommunikationssystem 100 ein Klassifikationsmodul 200 auf, welches geeignet ist, die nutzerbezogenen Daten 500 des Sensors zu verarbeiten. Das Kommunikationssystem 100 weist ferner einen internen Speicher 120 auf, in dem die Daten 500 in verarbeiteter Form als Konfidenzwert 540 gespeichert werden können. Das Kommunikationssystem 100 weist ferner einen Prozessor 130 auf, welcher das Klassifikationsmodul 200 ausführt.

Zudem können in dem Speicher 120 die erfassten Daten 500 oder zumindest die physiologischen Daten persistent gespeichert sein. Bei dem Speicher 120 handelt es sich beispielsweise um einen nichtflüchtigen Speicher.

In einer weiteren Ausführungsform implementiert das Kommunikationssystem 100 eine Anwendung, welche ausgebildet ist, Anwendungsdaten als nutzerbezogene Daten 500 zu erfassen. Das Klassifikationsmodul ist ferner dazu ausgebildet die Anwendungsdaten einer Anwendung zu verarbeiten.

Führt der Nutzer beispielsweise eine grobmotorische Bewegung aus und trägt dabei das mobile Kommunikationssystem 100 bei sich (z.B. in einer Tasche eines Bekleidungsstücks des Nutzers, wie z.B. in seiner Jacken- oder Hosentasche, oder direkt am Körper), so kann der Sensor diese Bewegung in Form von grobmotorischen Bewegungsdaten erfassen, und zwar aufgrund der Bewegung des Kommunikationssystems, die mittelbar (über das Bekleidungsstück) oder unmittelbar (wenn der Nutzer das Kommunikationssystem am Körper trägt) durch die grobmotorische Bewegung des Nutzers verursacht wurde. Der Sensor kann beispielsweise als ein Beschleunigungssensor oder ein Gyroskop oder eine Kombination aus beidem ausgebildet sein. Die Bewegung des Nutzers kann beispielsweise ein Gehen, ein Joggen, ein Rennen oder eine Bewegung des Armes sein, falls das Kommunikationsgeräts, welches den Sensor aufweist, am Arm befestigt ist.

Unter einer grobmotorischen Bewegung können beispielsweise Bewegungsabläufe wie zum Beispiel Gehen, Joggen, Rennen, Hüpfen, Klettern, Balancieren, Fahrradfahren, Autofahren oder eine Bewegung des Armes etwa beim Trinken, beim Schauen auf eine Armbanduhr oder beim Herausziehen des mobilen, tragbaren Kommunikationssystems 100 aus einer Tasche verstanden werden.

Nutzt der Nutzer eine Anwendung, welche auf seinem Kommunikationssystem 100 implementiert ist, so erfasst das Kommunikationssystem 100 die Anwendungsdaten als nutzerbezogene Daten 500.

Führt der Nutzer eine feinmotorische Bewegung aus, so kann der Sensor diese Bewegung in Form von feinmotorischen Bewegungsdaten erfassen. Der Sensor kann beispielsweise als ein Touchdisplay, eine Tastatur oder eine Kombination aus beidem ausgebildet sein. Die feinmotorische Bewegung des Nutzers kann beispielsweise als Tippgeschwindigkeit, Eingabefrequenz oder Eingabegenauigkeit erfasst werden.

Das Klassifikationsmodul 200 empfängt die nutzerbezogenen Daten 500 und klassifiziert die Daten 500 als ein Muster. Das Klassifikationsmodul 200 wird dabei von einem Prozessor 130 des Kommunikationssystems 100 ausgeführt. Aus der Klassifikation generiert das Klassifikationsmodul 200 den mindestens einen Konfidenzwert 540. Dieser mindestens eine Konfidenzwert 540 wird in dem internen Speicher 120 des Kommunikationssystems 100 gespeichert.

Muss sich der Nutzer authentifizieren, wird der mindestens eine Konfidenzwert 540 aus dem Speicher 120 des Kommunikationssystems ausgelesen und verarbeitet. Dabei wird ein Klassifikationsergebnis 600 generiert.

Ist der Nutzer gemäß dem Klassifikationsergebnis 600 authentifiziert, so werden die Daten 500, die zu der erfolgreichen Authentifizierung beigetragen haben, in dem Speicher 120 des Kommunikationssystems 100 gespeichert bzw. zu einem in dem Speicher 120 gespeicherten Vergleichsdatensatz hinzugefügt, um für zukünftige Authentifizierungsversuche bei der Generierung der zukünftigen Konfidenzwerte 540 verwendet zu werden.

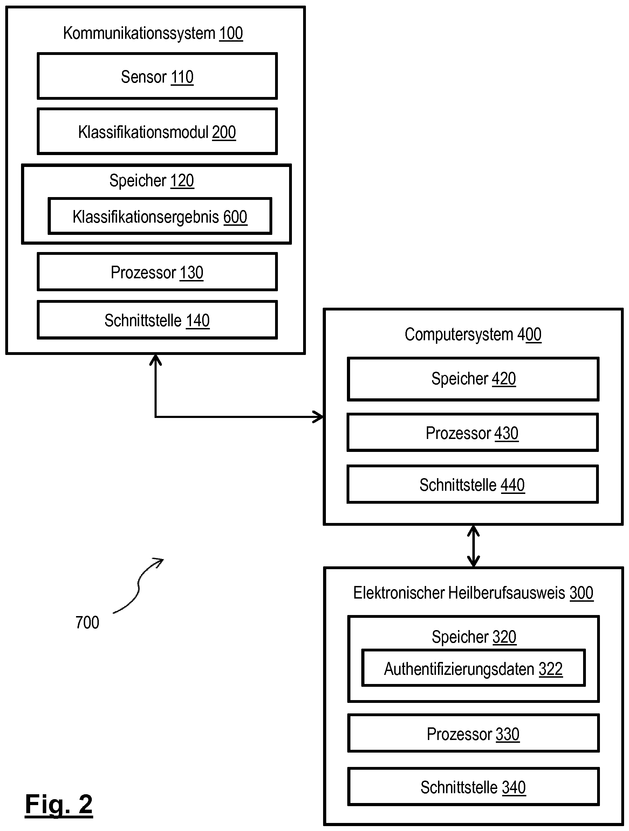

Figur 2 zeigt eine schematische Kommunikationsverbindung zwischen dem mobilen, tragbaren Kommunikationssystem 100 und dem Computersystem 400 über eine Kommunikationsschnittstelle 140 des Kommunikationssystems 100 und eine Kommunikationsschnittstelle 140 des Computersystems 400. Bei der Kommunikationsverbindung zwischen dem mobilen, tragbaren Kommunikationssystem 100 und dem Computersystem 400 handelt es sich beispielsweise um eine kabellose Funkverbindung. Das Computersystem 400 umfasst ferner einen Speicher 420 und einen Prozessor 430. Bei dem Computersystem handelt es sich beispielsweise um einen Computer einer Arztpraxis oder eines Klinikums. Das Kommunikationssystem 100 umfasst, analog zu Figur 1, das Klassifikationsmodul 200, den Speicher 120 und einen Prozessor 130, wobei in dem Speicher 120 das Klassifikationsergebnis 600 gespeichert ist.

Um dem Computersystem 400 den Zugriff auf gespeicherte physiologische Daten des Nutzers des mobilen, tragbaren Kommunikationssystem 100 zu gewähren führen die Prozessoren 130, 430 des mobilen, tragbaren Kommunikationssystems 100 und des Computersystem 400 eine gegenseitige Authentifizierung von mobilem, tragbarem Kommunikationssystem 100 und Computersystem 400 durch. Die Authentifizierung des Computersystem 400 gegenüber dem mobilen, tragbaren Kommunikationssystem 100 erfolgt beispielsweise unter Verwendung eines ID-Token. Bei dem ID-Token handelt es sich beispielsweise um einen elektronischen Heilberufeausweis 300 (eHBA). Der eHBA 300 umfasst einen Speicher 320 und einen Prozessor 330. In dem Speicher 320 sind Authentifizierungsdaten 322 gespeichert. Die Authentifizierungsdaten authentifizieren den eHBA 300 gegenüber dem Kommunikationssystem. In einer Ausführungsform umfassen die Authentifizierungsdaten 322 ferner Informationen über den Inhaber des eHBAs. In einer weiteren Ausführungsform sind die Authentifizierungsdaten durch eine unabhängige und vertrauenswürdige Instanz, wie beispielsweise ein Trust Center, die Ärztekammer oder ein anderes vertrauenswürdiges Institut, signiert und/oder zertifiziert. Der eHBA 300 liegt beispielsweise in Form einer Chipkarte. Die Kommunikation zwischen Computersystem 400 und dem eHBA 300 erfolgt beispielsweise über Kommunikationsschnittstellen 440, 340 von Computersystem 400 und eHBA 300. Bei der Kommunikationsverbindung kann es sich um eine kabelgebundene oder eine kabellose Kommunikationsverbindung handeln. Beispielsweise umfasst das Computersystem 400 ein Terminal zum Lesen des eHBA 300. Ferner kann die Kommunikation zwischen Computersystem 400 und eHBA 300 verschlüsselt erfolgen.

Beispielweise authentifiziert sich das Computersystem 400 unter Verwendung der Authentifizierungsdaten 322 gegenüber dem mobilen, tragbaren Kommunikationssystem 100. Beispielsweise umfassen die Authentifizierungsdaten 322 einen Signaturschlüssel, d.h. einen privaten kryptographischen Schlüssel, welcher dem Inhaber des eHBA 300 zugeordnet ist. Der privaten kryptographischen Schlüssel bildet mit einem zugehörigen öffentlichen kryptographischen Schlüssel ein asymmetrisches Schlüsselpaar. Der öffentliche kryptographische Schlüssel wird beispielsweise von einem Zertifikat, etwa einem Berechtigungszertifikat, umfasst. Dieses Berechtigungszertifikat identifiziert den Inhaber des eHBA 300 eines Heilberufes und weist diesem Leserechte zum Lesen physiologischer Daten zu. Der öffentliche kryptographische Schlüssel dient als Signaturprüfschlüssel mit dessen Hilfe sich unter Verwendung des privaten kryptographischen Schlüssels erstellte Signaturen verifizieren lassen. Beispielsweise ist eine von dem Computersystem 400 an das mobile, tragbare Kommunikationssystem 100 gesendete Leseanfrage zum Lesen von physiologischen Daten, welche beispielsweise in dem Speicher 120 des mobilen, tragbaren Kommunikationssystem 100 oder einem externen Speichersystem gespeichert sind, mit dem Signaturschlüssel des eHBA 300 signiert. Beispielsweise sendet das Computersystem die Leseanfrage oder einen Prüfwert der leseanfrage, etwa einen Hashwert, vordem Senden an das mobilen, tragbaren Kommunikationssystem 100 zunächst an den eHBA 300, welcher die empfangenen Daten mit dem Signaturschlüssel signiert.

Nach Ausführungsformen erfolgt die Kommunikation zwischen mobilem, tragbarem Kommunikationssystem 100 und Computersystem 400 unter Verwendung einer Ende-zu-Ende-Verschlüsselung. Nach Ausführungsformen erfolgt die Kommunikation zwischen mobilem, tragbarem Kommunikationssystem 100 und eHBA 300 über das Computersystem 400 unter Verwendung einer Ende-zu-Ende-Verschlüsselung.

Wird die von dem eHBA 300 erstellte Signatur von dem mobilen, tragbaren Kommunikationssystem 100 erfolgreich verifiziert, gilt das Computersystem 400 gegenüber dem Kommunikationssystem 100 als authentifiziert. Authentifiziert sich der Nutzer des mobilen, tragbaren Kommunikationssystems 100 zusätzlich durch sein Verhalten gegenüber dem mobilen, tragbaren Kommunikationssystem 100 und stimmt der authentifizierte Nutzer der Freigabe des Lesezugriffs für das Computersystem 400, so erhält das Computersystem 400 einen Lesezugriff auf die persistent gespeicherten physiologischen Daten des Nutzers des mobilen, tragbaren Kommunikationssystems 100. Beispielsweise kann das Computersystem 400 die physiologischen Daten aus dem Speicher 120 des mobilen, tragbaren Kommunikationssystems 100 über die Kommunikationsverbindung zwischen den Kommunikationsschnittstellen 140, 440 auslesen. Nach alternativen Ausführungsformen empfängt das Computersystem 400 von dem mobilen, tragbaren Kommunikationssystems 100 ein oder mehrere Berechtigungstoken, mit welchen das Computersystem 400 seine Berechtigung zum Auslesen der physiologischen Daten gegenüber ein oder mehreren externen Speichersystemen nachweisen kann, in welchen die physiologischen Daten gespeichert sind. Auf eine erfolgreiche Prüfung der Berechtigungstoken kann das Computersystem 400 die physiologischen Daten aus den ein oder mehreren externen Speichersystemen auslesen bzw. empfängt diese z.B. über ein Netzwerk.

Ferner kann das mobilen, tragbaren Kommunikationssystem 100 nach Ausführungsformen dazu konfiguriert sein unter Verwendung des Klassifikationsmoduls 200 den physiologischen Zustand des Nutzers zu klassifizieren. Umfasst das Klassifikationsergebnis ein kritisches Klassifikationsergebnis, so kann gemäß einer Ausführungsform der Inhaber eines eHBAs 300 unter Verwendung des Computersystems 400 und des eHBAs 300 Zugriff auf die physiologischen Daten auch ohne verhaltensbasierte Authentifizierung oder Zustimmung des Nutzers des mobilen, tragbaren Kommunikationssystems 100 erlagen. In diesem Fall handelt es sich bei dem Computersystem 400 beispielswiese um ein tragbares Computersystem wie etwa ein Laptop, ein Tablet oder ein Smartphone. Dabei wird zunächst geprüft, ob sich der Inhaber des eHBAs gegenüber dem eHBA authentifizieren kann. Die Prüfung erfolgt dabei unter Verwendung der Authentifizierungsdaten 322. Dabei kann die Prüfung beispielsweise das Eingeben einer PIN und/oder eines Passwortes umfassen und/oder ein weiteres Authentifizierungsmittel verwenden. Beispielsweise kann die Authentifizierung auch verhaltensbasiert erfolgen. Beispielsweise kann es sich bei dem Computersystem 400 um ein mobiles, tragbares Kommunikationssystem wie das Kommunikationssystem 100 handeln. Der eHBA 300 wird von dem Computersystem 400 zur Authentifizierung gegenüber dem Kommunikationssystem 100 verwendet. Beispielsweise kann die Authentifizierung mittels eines Challenge-Response-Verfahrens und/oder mittels einer Überprüfung einer Signatur bzw. eines Zertifikats durchgeführt werden.

Unter einem Challenge-Response-Verfahren wird hier ein Authentifizierungsverfahren zur Authentifizierung eines zweiten Teilnehmers durch einen ersten Teilnehmer verstanden. Der erste Teilnehmer eine Aufgabe (engl. challenge), welche der zweite lösen und korrekt beantworten muss (engl. response), um zu beweisen, dass er sich im Besitz einer bestimmten Information, eines gemeinsamen Geheimnisses, befindet, ohne das Geheimnis selbst zu übertragen. Da das gemeinsame Geheimnis im Zuge des Verfahrens nicht übertragen wird, kann das Verfahren einen effektiven Schutz dagegen bieten, dass das Geheimnis in die Hände eines die Kommunikation zwischen den beiden Teilnehmern mithörenden Angreifer (Man-in-the-Middle-Angriff) fallen kann.

Beispielsweise sendet der erste Teilnehmer als Challenge eine Zufallszahl N, auch Nonce genannt, an den zweiten Teilnehmer. Der zweite Teilnehmerkombiniert die empfangene Zufallszahl mit dem gemeinsamen Geheimnis, wendet beispielsweise eine Hashfunktion oder eine Verschlüsselung auf die Kombination an und sendet das Ergebnis als Response an den ersten Teilnehmer. Der erste Teilnehmer, welcher sowohl die Zufallszahl als auch das gemeinsame Geheimnis und die verwendete Hashfunktion bzw. Verschlüsselung kennt, führt dieselbe Berechnung durch und vergleicht sein Ergebnis mit der Response, welche er vom zweiten Teilnehmer erhalten hat. Sind das Ergebnis und die empfangene Response identisch, so ist der zweite Teilnehmer erfolgreich gegenüber dem ersten Teilnehmer authentifiziert.

In der Kryptographie wurde die Bezeichnung Nonce beispielsweise zum Identifizieren einer Zahlen- oder Buchstabenkombination verwendet, welche nur ein einziges Mal in dem jeweiligen Kontext verwendet wird. Ein Nonce wird hierzu beispielsweise unter Verwendung einer Zufallszahl erzeugt, die ausreichend groß ist, so dass die Wahrscheinlichkeit einer doppelten Benutzung vernachlässigbar ist. Nonces können den Vorteil haben, dass sie einen effektiven Schutz gegen Replay-Angriffe bieten.

Konnte sich der Inhaber des eHBAs 300 gegenüber dem Kommunikationssystem 100 authentifizieren, so gewährt das mobile, tragbare Kommunikationssystem 100 dem Computersystem 400 Zugriff auf das in dem Speicher 120 gespeicherten Klassifikationsergebnis 600 und/oder physiologische Daten des Nutzers des mobilen, tragbaren Kommunikationssystems 100. Diese physiologischen Daten können beispielsweise in dem Speicher 120 oder einem externen Speichersystem gespeichert sein. Nach Ausführungsformen, erlangt der Inhaber des eHBAs 300 Zugriff auf mehrere Klassifikationsergebnisse oder auf Teile davon, je nachdem, welcher Zugriff ihm durch sein eHBA gestattet ist. Nach Ausführungsformen, erlangt der Inhaber des eHBAs 300 Zugriff auf alle gespeicherten physiologischen Daten oder auf Teile der physiologischen Daten, je nachdem, welcher Zugriff ihm durch sein eHBA gestattet ist.

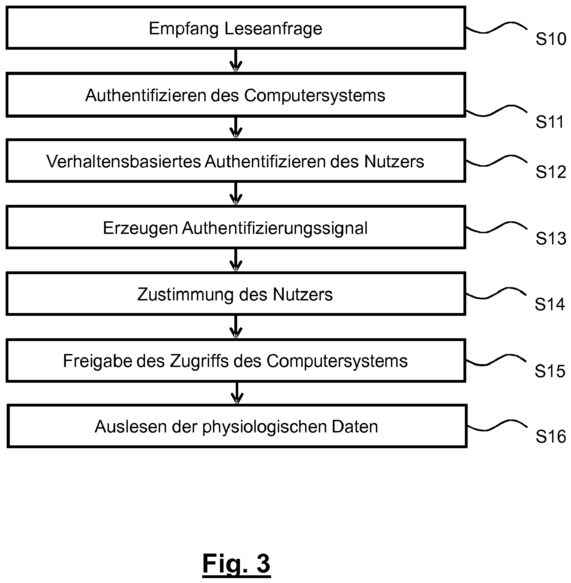

Figur 3 zeigt ein Ablaufdiagramm des Verfahrens zur Freigabe des Zugriffs des Computersystems 400 auf physiologische Daten des Nutzers des mobilen, tragbaren Kommunikationssystems 100. In Schritt S10 empfängt das Kommunikationssystem 100 beispielsweise eine Leseanfrage zum Lesen von physiologischen Daten des Nutzers des mobilen, tragbaren Kommunikationssystems 100 von dem Computersystem 400. In Schritt S11 authentifiziert sich das Computersystem 400 gegenüber dem mobilen, tragbaren Kommunikationssystem 100. Die Authentifizierung erfolgt beispielsweise unter Verwendung des eHBA 300. Beispielsweise signiert der eHBA 300 die Leseanfrage aus Schritt S10 mit einem Signaturschlüssel. In diesem Fall werden die Schritte S10 und S11 parallel ausgeführt. Nach Ausführungsformen erfolgt die Authentifizierung unter Verwendung eines Challenge-Response-Protokolls. Nach Ausführungsformen erfolgt zusätzlich eine Authentifizierung des mobilen, tragbaren Kommunikationssystems 100 gegenüber dem Computersystem 400. In Schritt S12 erfolgt eine verhaltensbasierte Authentifizierung des Nutzers des mobilen, tragbaren Kommunikationssystems 100 durch das mobile, tragbare Kommunikationssystem 100. In Schritt S13 wird ein Authentifizierungssignal erzeugt, welches die erfolgreiche Authentifizierung von Computersystem 400 und Nutzer des mobilen, tragbaren Kommunikationssystems 100 bestätigt. In Schritt S14 stimmt der Nutzer des mobilen, tragbaren Kommunikationssystems 100 der leseanfrage zu. Diese Zustimmung kann durch aktive Bestätigung einer Zustimmungsanfrage, welche beispielsweise auf einem Display des Kommunikationssystems 100 angezeigt wird, durch den Nutzer erfolgen oder die Zustimmung kann bereits im Vorhinein erfolgt und in dem Speicher 120 gespeichert sein. In Schritt S15 erfolgt die Freigabe des Computersystem 400 zum Lesen der physiologischen Daten unter der Voraussetzung, dass das Authentifizierungssignal erfolgreiche Authentifizierungen des Computersystems 400 und des Nutzers des mobilen, tragbaren Kommunikationssystems 100 bestätigt und der Nutzer der Leseanfrage zugestimmt hat bzw. zugestimmt hat, dass das Computersystem bzw. der Inhaber des eHBAs 300 die angefragten physiologischen Daten lesen darf. Nach Ausführungsformen umfasst die Freigabe ein Senden eines Berechtigungstokens von dem mobilen, tragbaren Kommunikationssystem 100 an das Computersystem 400, welcher das Computersystem 400 zu Lesen der physiologischen Daten berechtigt. Beispielsweise umfasst das Berechtigungstoken eine Adresse, etwa eine URL, eines externen Speichersystems unter welcher die physiologischen Daten abgerufen werden können. In Schritt S16 liest das Computersystem 400 die angefragten physiologischen Daten aus dem Speicher 120 des mobilen, tragbaren Kommunikationssystems 100 oder einem externen Speichersystem aus.

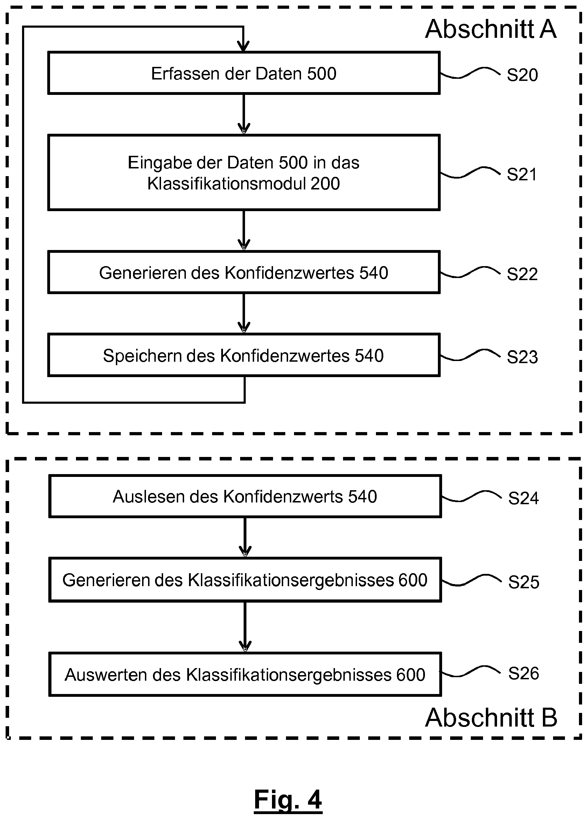

Figur 4 zeigt die verhaltensbasierte Authentifizierung eines Nutzers in einem Ablaufdiagramm. Die verhaltensbasierte Authentifizierung kann dabei in zwei Abschnitte A und B unterteilt werden. Abschnitt A wird wiederholt ausgeführt, und bildet so eine schleifenartige Ausführungsstruktur. Das Kommunikationssystem 100 erfasst in Schritt S20 die nutzerbezogenen Daten 500. Die Daten 500 werden in Schritt S21 in das Klassifikationsmodul 200 eingegeben. Aus den Daten 500 generiert das Klassifikationsmodul 200 in Schritt S22 den mindestens einen Konfidenzwert 540. Der mindestens eine generierte Konfidenzwert 540 wird in Schritt S23 in dem Speicher 120 des Kommunikationssystems 100 gespeichert. Das Kommunikationssystem 100 erfasst dann neue Daten 500. Das ganze Verfahren gemäß Abschnitt A wird wiederholt ausgeführt.

In einer Ausführungsform erfasst das Kommunikationssystem 100 die Daten 500 als Datenstrom (Stream), wobei das Klassifikationsmodul 200 die Daten 500 als Stream empfängt und verarbeitet. Die Konfidenzwerte 540 werden dabei in sehr kurzen zeitlichen Abständen, die durch die Taktrate des Prozessors und/oder des Sensors vorgegeben werden, im Speicher 120 des Kommunikationssystems 100 abgespeichert.

Abschnitt B wird dann ausgeführt, wenn sich der Nutzer authentifizieren muss und eine Authentifizierungsanfrage an das Betriebssystem gesendet wurde. Die Authentifizierungsanfrage umfasst eine Anforderung zum Auslesen von mindestens einem Konfidenzwert 540 aus dem Speicher 120 des Kommunikationssystems. Der mindestens eine Konfidenzwert 540 wird dann aus dem Speicher 120 des Kommunikationssystems 100 in Schritt S24 ausgelesen.

Aus dem mindestens einen Konfidenzwert 540 wird in Schritt S25 das Klassifikationsergebnis 600 generiert. Anschließend wird das Klassifikationsergebnis 600 in Schritt S26 ausgewertet. Eine Auswertung des Klassifikationsergebnisses 600 umfasst beispielsweise das Prüfen des Klassifikationsergebnisses 600 gegen ein Prüfungskriterium. Erfüllt das Klassifikationsergebnis 600 das Prüfungskriterium 800, so wird gemäß einer Ausführungsform ein Authentifizierungssignal erzeugt. Erfüllt das Klassifikationsergebnis 600 das Prüfungskriterium 800 nicht, so wird kein Authentifizierungssignal erzeugt.

Ist der Nutzer gemäß dem Klassifikationsergebnis 600 authentifiziert, wodurch ein Senden eines Authentifizierungssignals veranlasst wurde, so werden die Daten 500, die zu der erfolgreichen Authentifizierung beigetragen haben, in dem Speicher 120 des Kommunikationssystems 100 gespeichert bzw. zu einem Vergleichsdatensatz hinzugefügt, um für zukünftige Authentifizierungsversuche bei der Generierung zukünftiger Klassifikationsergebnisse 600 verwendet zu werden.

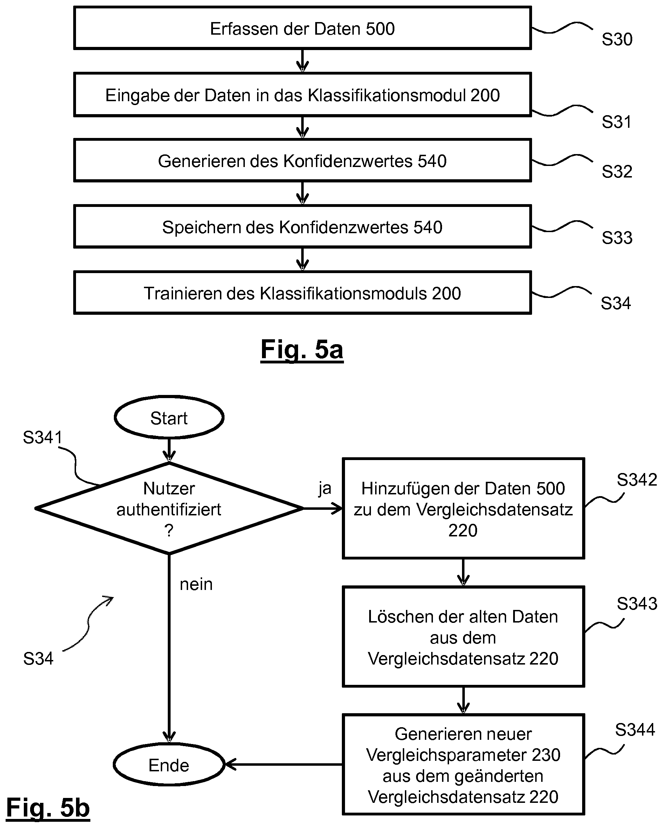

Figur 5a zeigt ein Ablaufdiagramm, welches die Verfahrensschleife A gemäß Figur 2 darstellt. In Schritt S30 werden die Daten 500 erfasst. Die erfassten Daten 500 werden in Schritt S31 in das Klassifikationsmodul 200 eingegeben. In Schritt S32 generiert die Klassifikationsmodul 200 mindestens einen Konfidenzwert 540. Der mindestens eine generierte Konfidenzwert 540 wird in Schritt S33 in dem Speicher 120 des Kommunikationssystems 100 gespeichert. Schließlich wird das Klassifikationsmodul 200 in Schritt S34 trainiert, wobei das Training von dem Klassifikationsergebnis 600 abhängt.

Figur 5b zeigt das Training gemäß Schritt S34 der Figur 3a im Detail. Zunächst wird in Schritt S341 geprüft, ob sich der Nutzer durch das Klassifikationsergebnis 600 authentifizieren konnte. Ist dies nicht der Fall, so werden die erfassten Daten 500 verworfen und es findet kein Training statt.

War die Authentifizierung des Nutzers erfolgreich, werden die Daten 500 in Schritt S342 einem entsprechenden Vergleichsdatensatz 220 hinzugefügt und somit in dem Speicher 120 des Kommunikationssystems gespeichert.

In einer Ausführungsform wird nun geprüft, ob der Vergleichsdatensatz 220 Daten 500 enthält, welche älter als ein bestimmtes Schwellenalter sind. Das Schwellenalter ist beispielsweise durch den Nutzer, das System 150 oder das Kommunikationssystem 100 festgelegt. Beispielsweise kann dieses Schwellenalter einige Tage, eine Woche, mehrere Monate oder Jahre betragen. Beispielsweise beträgt es vier Wochen, drei Monate oder ein Jahr. Sind die Daten älter als das Schwellenalter, werden sie in Schritt S343 aus dem Vergleichsdatensatz gelöscht. Dieser Schritt kann nach Ausführungsformen vor dem Löschen aus dem Vergleichsdatensatz ein Speichern der Daten in dem Speicher des Speichersystems umfassen.

Haben sich die Vergleichsdatensätze 220 durch das Hinzufügen neuer Daten 500 und/oder durch das Löschen alter Daten 500 verändert, werden die jeweiligen Vergleichsparameter 230 in Schritt S344 erneut bestimmt. Diese neuen Vergleichsparameter 230 werden beispielsweise in dem Speicher 120 des Kommunikationssystems 100 gespeichert und stehen bei einem nächsten Authentifizierungsversuch dem Klassifikationsmodul 200 zur Verfügung. Alternativ werden die Vergleichsparameter 230 bei jedem Authentifizierungsversuch neu berechnet, so dass sichergestellt werden kann, dass stets aktuelle auf den registrierten Nutzer trainierte Vergleichsparameter 230 für die Authentifizierung verwendet werden.

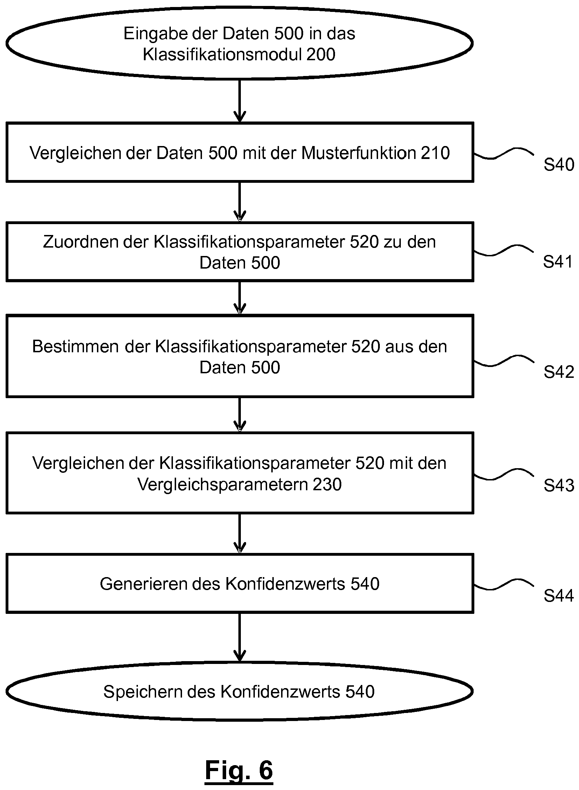

Figur 6 zeigt den schematischen Ablauf zur Generierung des Konfidenzwertes 540 aus den Daten 500. Zunächst erfasst ein Sensor oder eine Anwendung die nutzerbezogenen Daten 500. Die Daten 500 werden dann an das Klassifikationsmodul 200 gesendet. Das Klassifikationsmodul 200 ruft aus dem Speicher 120 des Kommunikationssystems 100 eine Musterfunktion 210 ab und vergleicht in Schritt S40 die Musterfunktion 210 mit den Daten 500. Die Daten 500 werden in Schritt S41 einer Musterfunktion 210 zugeordnet. Auf das Zuordnen der Musterfunktion 210 hin, werden in Schritt S42 die der Musterfunktion 210 zugeordneten Klassifikationsparameter 520 aus den Daten 500 bestimmt.

In dem Speicher 120 des Kommunikationssystems 100 ist ein Vergleichsdatensatz 220 gespeichert, welcher Daten umfasst, wobei die Daten des Vergleichsdatensatzes 220 die Struktur der Daten 500 aufweisen. Dem Vergleichsdatensatz 220 sind Vergleichsparameter 230 zugeordnet, welche aus den Daten des Vergleichsdatensatzes 220 errechnet wurden. Das Klassifikationsmodul 200 liest die Vergleichsparameter 230 aus dem Speicher 120 des Kommunikationssystems aus und vergleicht die Vergleichsparameter 230 mit den Klassifikationsparametern 520 in Schritt S43. Aus dem Unterschied generiert das Klassifikationsmodul 200 in Schritt S44 mindestens einen Konfidenzwert 540, wobei jeder Konfidenzwert 540 einem Klassifikationsparameter 520 zugeordnet ist und somit die Anzahl der Klassifikationsparameter 520 gleich der Anzahl der Konfidenzwerte 540 ist.

Die Konfidenzwerte 540 werden dann gemäß einer Ausführungsform, zum Beispiel durch Bildung des Mittelwerts, des Medians, des Modus oder durch eine komplexere Berechnung, zu einem resultierenden Konfidenzwert zusammengefasst. Der resultierende Konfidenzwert wird in dem Speicher 120 des mobilen, tragbaren Kommunikationssystems 100 gespeichert. Bei einer Authentifizierungsanfrage wird der resultierende Konfidenzwert aus dem Speicher 120 des Kommunikationssystems 100 ausgelesen.

In einer weiteren Ausführungsform wird der mindestens eine Konfidenzwert 540 im Speicher 120 des Kommunikationssystems 100 gespeichert und kann bei einer Authentifizierungsanfrage ausgelesen werden.

Ist der Nutzer gemäß dem Klassifikationsergebnis 600 authentifiziert, so werden die Daten 500, die zu der erfolgreichen Authentifizierung beitrugen, dem Speicher 120 des Kommunikationssystems hinzugefügt, um für zukünftige Authentifizierungsversuche bei der Generierung der zukünftigen Konfidenzwerte 540 verwendet zu werden.

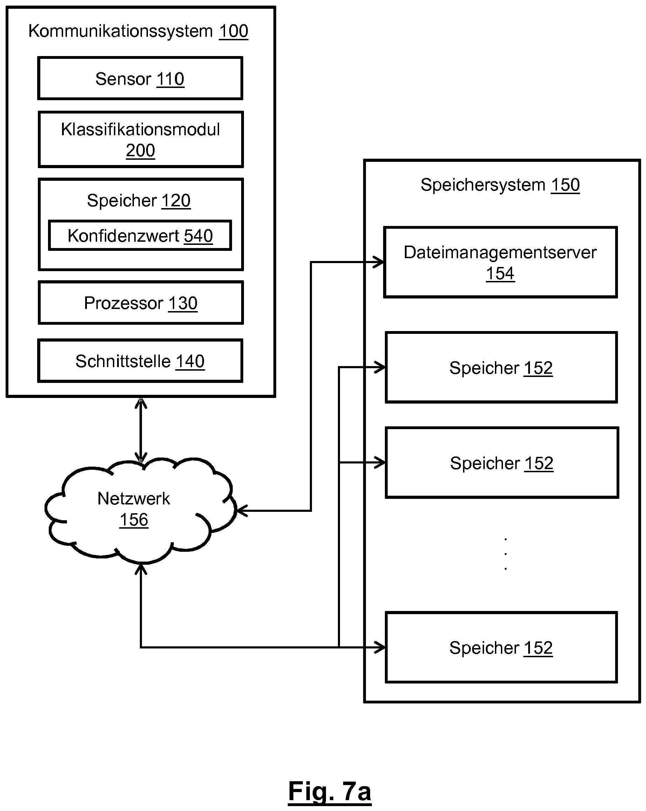

Figur 7c zeigt den schematischen Aufbau einer beispielhaften Ausführungsform des Kommunikationssystems 100 und des externen Speichersystems 150. Das Kommunikationssystem 100 ist mit dem Speichersystem 150 kommunikativ über ein Netzwerk 156 verbunden. Das Netzwerk kann beispielsweise das Internet, ein Intranet und oder ein lokales Netzwerk umfassen. Die Verbindung kann beispielsweise als eine kabelgebundene Verbindung, eine drahtlose Verbindung, insbesondere ein WLAN, eine RFID- oder eine Funkverbindung, oder eine Kombination der vorhergenannten umfassen.

Das Speichersystem 150 umfasst einen Dateimanagementserver 154 und eine Mehrzahl von Speichern 152. Die Anzahl der Speicher 152 ist beliebig, da das Verfahren von der Anzahl der Speicher unabhängig ist. Jeder Speicher 152 ist in einer Ausführungsform einem Speicherdienstanbieter zugeordnet, wobei einem Speicherdienstanbieter mehrere Speicher 152 zugeordnet sein können.

Die Speicher 152 und der Dateimanagementserver 154 können nach Ausführungsformen jeweils physikalisch eigenständige Geräte umfassen. In weiteren Ausführungsformen werden mehrere Speicher und/oder der Dateimanagementserver von einem Gerät umfasst. Die Speicher sind jeweils mit dem Dateimanagementserver 154 und dem Netzwerk 156 kommunikativ verbunden. Der Dateimanagementserver 154 ist ebenfalls mit dem Netzwerk verbunden.

Das Kommunikationssystem kann je nach Zugriffsart über das Netzwerk 156 und den Dateimanagementserver 154 auf die Speicher 152 zugreifen oder über das Netzwerk 156 direkt auf die Speicher 154 zugreifen.

In dem externen Speichersystem 150 sind physiologische Daten des Nutzers des mobilen, tragbaren Kommunikationssystems 100 gespeichert. Beispielsweise umfasst eine Freigabe eines Zugriffs des Computersystems 400 auf die gespeicherten physiologischen Daten eine Freigabe eines Lesezugriffs des Computersystems 400 auf das externe Speichersystem 150. Dieser Zugriff wird dem Computersystem 400 beispielsweise durch das mobile, tragbare Kommunikationssystem 100 unter Verwendung eines Berechtigungstokens gewährt.

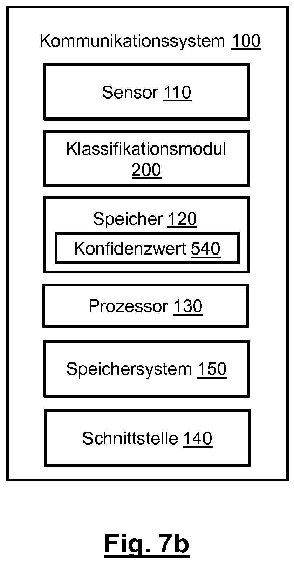

Figur 7b zeigt den schematischen Aufbau einer Ausführungsform des Kommunikationssystems 100 und des Speichersystems 150, welches als internes Speichersystem des Kommunikationssystems 100 konfiguriert ist. Das Speichersystem 150 ist in dieser Ausführungsform ein integraler Bestandteil des Kommunikationssystems 100 und in diesem verbaut. In dieser Ausführungsform werden die Daten beispielsweise von einem Speichermanagementmodul, insbesondere einem Software-Modul und/oder einem Hardware-Modul verwaltet. Das Speichermanagementmodul regelt beispielsweise den Zugriff auf die in dem Speichersystem 150 gespeicherten Daten. Nach Ausführungsformen kann das Speichersystem 150 von dem Speicher 120 umfasst sein oder als zusätzliches Speichersystem konfiguriert sein.

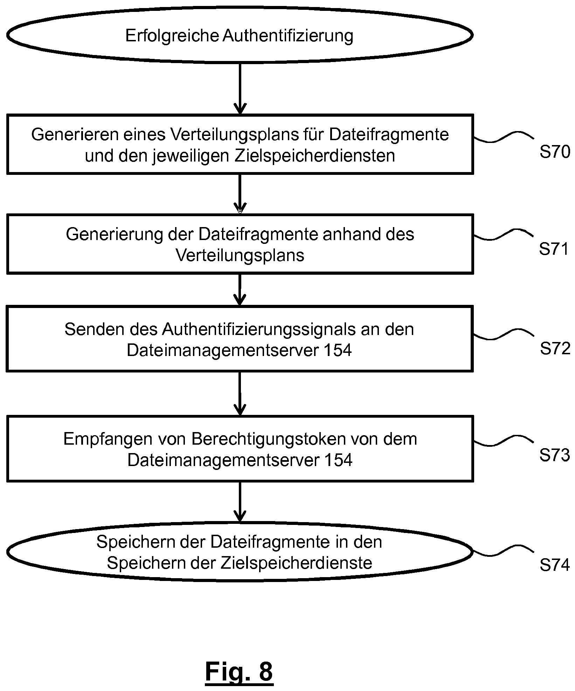

Figur 8 zeigt den schematischen Ablauf, um eine Datei in dem Speichersystem 150 zu speichern. Zunächst muss sich der Nutzer erfolgreich mittels seines mobilen, tragbaren Kommunikationssystems 100 authentifizieren, um Zugriff auf das Speichersystem 150 zu erlangen. In Schritt S70 wird dann ein Verteilungsplan für eine Mehrzahl von Dateifragmenten generiert. Jedes Dateifragment wird einem bestimmten Zielspeicherdienst zugewiesen, auf dessen Speicher es später gespeichert wird. Der Verteilungsplan kann beispielsweise von dem Kommunikationssystem 100 oder von dem Dateimanagementserver 154 erstellt werden.

In einer Ausführungsform wird die zu speichernde Datei vor dem Fragmentieren in Dateifragmente mit einem symmetrischen und/oder asymmetrischen kryptographischen Schlüssel verschlüsselt. Selbst wenn eine unberechtigte Person Zugriff auf alle zu einer Datei gehörenden Fragmente erlangt, müsste die unberechtigte Person zusätzlich im Besitz des richtigen Schlüssels sein, um die Datei öffnen bzw. ihren Inhalt auslesen zu können.

In einer weiteren Ausführungsform wird die Datei vor dem Fragmentieren mit einem symmetrischen Schlüssel verschlüsselt. Der symmetrische Schlüssel wird dabei mit in den Metadaten gespeichert. Diese Metadaten sind lediglich dem Kommunikationssystem 100 und/oder dem Dateimanagementserver 154 zugänglich. Die Metadaten werden zusätzlich mit dem öffentlichen Schlüssel eines asymmetrischen Schlüsselpaars verschlüsselt.

Die zu speichernde Datei wird in Schritt S71 anhand des Verteilungsplans in Dateifragmente zerlegt. Nun wird in Schritt S72 das Authentifizierungssignal an den Dateimanagementserver 154 gesendet, welcher als Antwort auf den Empfang des Authentifizierungssignals Berechtigungstoken an das Kommunikationssystem 100 sendet. Das Kommunikationssystem 100 empfängt für jedes Dateifragment einen Berechtigungstoken (S73). Die Dateifragmente werden entsprechend des Verteilungsplans und unter Verwendung der Berechtigungstoken in den in dem Verteilungsplan festgelegten Speichern 152 der Zielspeicherdienste gespeichert (S74).

Unter Verwendung entsprechende Berechtigungstoken in Kombination mit den Metadaten können die verteilt gespeicherten Daten wieder ausgelesen werden. Nach Ausführungsformen stellt das mobile, tragbare Kommunikationssystem die entsprechenden Berechtigungstoken in Kombination mit den entschlüsselten Metadaten dem Computersystem 400 auf eine Freigabe des Zugriffs hin zum Auslesen der physiologischen Daten zur Verfügung.

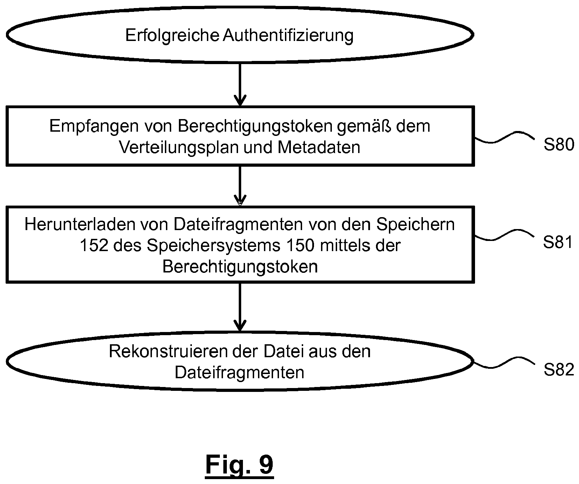

Figur 9 zeigt den schematischen Ablauf des Lesens von Dateien aus einem Speicher 152 des Speichersystems 150. Das Computersystem 400 empfängt in Schritt S80 die Berechtigungstoken sowie die entschlüsselten Metadaten von dem Kommunikationssystems 100. Die Berechtigungstoken können beispielsweise als URL ausgebildet sein, welche die Pfade von Dateifragmenten auf den jeweiligen Speichern 152 des Speichersystems 150 gemäß einem Verteilungsplan umfasst. Das Computersystem 400 greift beispielsweise über die Berechtigungstoken auf die jeweiligen Speicher 152 des Speichersystems 150 zu.

Mittels der Berechtigungstoken werden die Dateifragmente von den Speichern 152 der Speichersystems 150 in den Speicher des Computersystem 400 heruntergeladen (S81). Schließlich wird in Schritt S82 aus den Dateifragmenten die Datei mit den angefragten physiologischen Daten rekonstruiert. In einer Ausführungsform wird eine Auswahl der Dateifragmente heruntergeladen, wobei die von der Auswahl umfassten Dateifragmente ausreichend für eine Rekonstruktion der Datei sind. Der Zugriff kann beispielsweise auf die Dateifragmente direkt erfolgen. Die Metadaten können beispielsweise einen symmetrischen Schlüssel umfassen, mit welchem die Dateifragmente verschlüsselt sind.

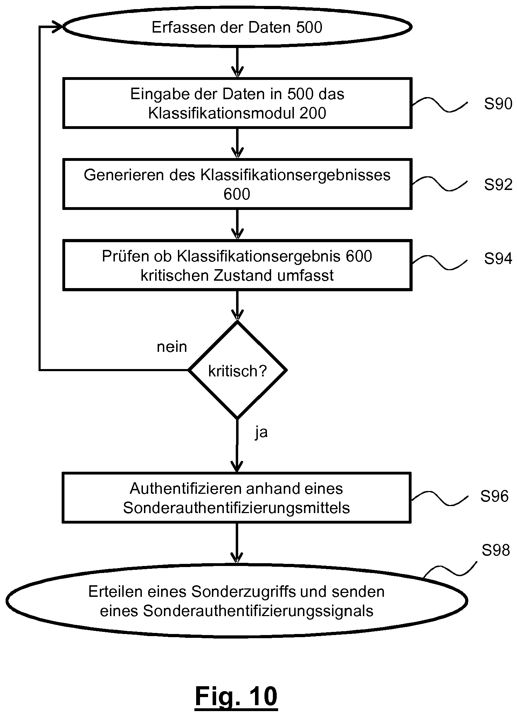

Figur 10 zeigt das schematische Verfahren zum Erlangen von Sonderzugriffsrechten unter Verwendung eines für den Sonderzugriff berechtigten Authentifizierungsmittel wie etwa einem eHBA 300. Auf das Erfassen der nutzerbezogenen Daten 500 hin werden die Daten 500 in das Klassifikationsmodul 200 eingegeben (S90). Aus den Daten 500 wird in Schritt S92 (und analog zu Figur 4) das Klassifikationsergebnis 600 generiert. In Schritt S94 wird durch das Klassifikationsmodul 200 überprüft, ob ein kritischer Zustand des Nutzers erkannt wurde.

Ein kritischer Zustand umfasst beispielsweise ein Versagen des Herz-KreislaufSystems, einen Herzinfarkt oder einen epileptischen Anfall. Ein kritischer Zustand kann beispielsweise anhand der nutzerbezogenen Daten, insbesondere von biometrischen und/oder physiologischen Daten, wie beispielsweise dem Puls, dem Blutdruck und oder anhand von grob- und/oder feinmotorischen Bewegungen erfasst werden. Beispielsweise kann eine Fallbewegung, also wenn der Nutzer auf den Boden fällt, als grobmotorische Bewegung unter Verwendung eines Beschleunigungssensors erkannt werden.

Liegt ein kritischer Zustand des Nutzers vor, so kann sich ein Inhaber des eHBAs 300 gegenüber dem Kommunikationssystem 100 und/oder dem Speichersystem 150 anhand des eHBAs 300 authentifizieren (S96). Diese Authentifizierung kann beispielsweise über eine kryptographisch gesicherte Verbindung erfolgen. Der eH-BA 300 kann beispielsweise ein Zertifikat und/oder eine Signatur umfassen. Nach erfolgreicher Authentifizierung des Inhabers des eHBAs 300 erlangt dieser - unter Umständen eingeschränkten - Zugriff auf die in dem Speichersystem gespeicherten physiologischen Daten des Nutzers. Dieser Zugriff erfolgt beispielsweise ohne eine sonst zwingend notwendige Authentifizierung des Nutzers und/oder ohne eine Zustimmung des Nutzers. Der Zugriff umfasst beispielsweise einen Lesezugriff auf den Speicher des Speichersystems. Die gespeicherten Daten können neben den physiologischen Daten beispielsweise Informationen bezüglich des Nutzers, seiner Allergien, Unverträglichkeiten, Vorerkrankungen umfassen oder Hinweise auf die Identität des Nutzers, beispielsweise seine Adresse und im Notfall zu benachrichtigende Personen, beinhalten.

Der Inhaber des eHBAs 300 kann auf verschiedene Weisen Zugriff auf die in dem Speichersystem gespeicherten Daten erlangen ohne dass eine Authentifizierung oder eine Zustimmung des Nutzers notwendig ist. Beispielsweise zeigt das Kommunikationssystem den Inhalt der für den kritischen Zustand relevanten Daten an oder der Inhaber des Authentifizierungsmittels erlangt über das Kommunikationssystem des Nutzers Zugriff auf die entsprechenden Daten. Auf das Erkennen eines kritischen Zustands hin wird beispielsweise der Zugriff unter Verwendung des Authentifizierungssignals auf die Daten gewährt und/oder einschränkt. Eine Einschränkung erfolgt, falls der Zugriff auf die Daten grundsätzlich gewährt und erst auf eine fehlgeschlagene Authentifizierung hin verwehrt wird. Beispielsweise wird in Abhängigkeit von dem Authentifizierungssignal der Zugriff auf bestimmte Daten verweigert. Nach Ausführungsformen kann der Inhaber des eHBAs 300 die Daten auf ein Computersystem 400 auslesen, auswerten und/oder sich anzeigen lassen.

Beispielsweise kann der Zugriff auf die Daten direkt innerhalb des Speichersystems erfolgen indem der Inhaber des eHBAs 300 das Computersystem 400 mit dem Speichersystem verbindet. Dazu können beispielsweise Verbindungsdaten verwendet werden, die auf eine erfolgreiche Authentifizierung mittels des eHBAs 300 gegenüber dem Kommunikationssystem 100 des hilfsbedürftigen Nutzers hin zur Verfügung gestellt werden. Ferner kann dem Inhaber des eHBAs 300 beispielsweise der Verteilungsplan und/oder die entschlüsselten Metadaten zur Verfügung gestellt werden, sodass er selbst auf die Daten des Nutzers in dem Speichersystem zugreifen kann, diese aus den entsprechenden Dateifragmenten zusammensetzt und gegebenenfalls entschlüsselt.

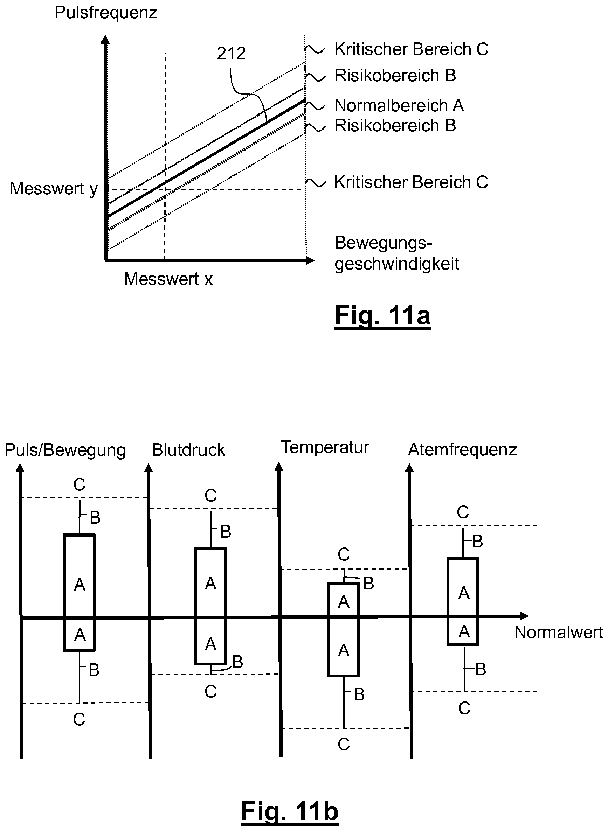

Nach Ausführungsformen ist das Klassifikationsmodul 200 ferner dazu konfiguriert einen physiologischen Zustand des Nutzers des mobilen, tragbaren Kommunikationssystems 100 unter Verwendung der erfassten physiologischen Daten zu klassifizieren und das Klassifikationsergebnis dem Computersystem 400 zusammen mit den physiologischen Daten zur Verfügung zu stellen. Figur 11a und Figur 11b zeigen beispielhafte physiologische Parameter und ihre Einteilung.

In Figur 11a ist schematisch ein Diagramm dargestellt, welches die Pulsfrequenz des Nutzers in Abhängigkeit der Bewegungsgeschwindigkeit darstellt. Der Puls kann beispielsweise mittels eines Drucksensors erfasst werden, welcher an einer geeigneten Stelle getragen wird. Eine solche Stelle kann beispielsweise das Handgelenk, den Hals oder die Schläfe umfassen. Die Bewegungsgeschwindigkeit kann beispielsweise, ohne darauf beschränkt zu sein, aus den physiologischen Parametern von grobmotorischen Bewegungen, insbesondere der Schrittlänge des Nutzers, bestimmt werden oder aus den Positionsdaten des Kommunikationssystems ermittelt werden. Die Positionsdaten umfassen beispielsweise die Positionsdaten eines GPS- oder Galileo-Signals oder werden aus umliegenden WLAN-Signalen ermittelt.

Typischerweise steigt die Pulsfrequenz mit wachsender Bewegungsgeschwindigkeit. In Ausführungsformen wird die Pulsfrequenz im Verhältnis zur Bewegungsintensität betrachtet. Das in Figur 11a dargestellte lineare Verhältnis zwischen Pulsfrequenz und Bewegungsgeschwindigkeit dient hier lediglich der Erläuterung und erhebt keinen Anspruch auf Korrektheit. Das Diagramm dient der Veranschaulichung, dass die Pulsfrequenz mit der Bewegungsgeschwindigkeit ansteigt.

In der Mitte des Diagramms ist der Normalwert 212 der Pulsfrequenz (durchgezogene Linie) dargestellt. Direkt um den Normalwert 212 erstreckt sich der Normalbereich A. Der Normalbereich A richtet sich nach den erfassten Messdaten im Referenzzustand. In einer Ausführungsform wird der Normalbereich A in einem Kalibrierungsverfahren durch den Nutzer bestimmt, indem sich der Nutzer im Referenzzustand befindet und die Daten des entsprechenden Parameters erfasst werden. Wird beispielsweise die Pulsfrequenz im Verhältnis zu einer Bewegung erfasst, wird der Nutzer aufgefordert sich zu bewegen, während der Puls gemessen wird. Die Daten werden erfasst und als Teil des Vergleichsdatensatzes gespeichert. In einer weiteren Ausführungsform ist der Normalbereich A durch Trainingsdatensätze einer Nutzerkohorte bestimmt. Der Parameter, dessen Normalbereich A bestimmt werden soll, wird für eine Mehrzahl von Personen erfasst. Aus den erfassten Daten aller Trainingspersonen wird der Normalbereich A generiert.

Aus den Messwerten des Normalbereichs A wird der Normalwert 212 des Nutzers generiert. Das Generieren des Normalwerts 212 kann beispielsweise die Bildung eines Mittelwerts, eines Medians oder eines Modalwertes umfassen. Die Grenzen des Normalbereichs A können symmetrisch um den Normalwert 212 verteilt sein, wie in Figur 11A dargestellt. Die Grenzen des Normalbereichs A können ferner auch asymmetrisch um den Normalwert 212 verteilt sein (siehe unten, Figur 11b). In einer Ausführungsform werden die Grenzen des Normalbereichs A aus den Fehlerwerten des Normalwerts 212 bestimmt.

Befindet sich ein Parameter außerhalb des Normalbereichs A, so sucht das Klassifikationsmodul nach physiologischen Zuständen, welche eine entsprechende Abweichung des Parameters von dem Normalwert 212 aufweisen. Kann ein solcher physiologischer Zustand gefunden werden, so ist der aktuelle physiologische Zustand des Nutzers klassifiziert.

Ober- und unterhalb des Normalbereichs A liegen der obere und der untere Risikobereich B. Die Grenzen des Risikobereichs B können beispielsweise analog zu den Grenzen des Normalbereichs A bestimmt werden. In einer weiteren Ausführungsform werden die Grenzen des Risikobereichs B manuell festgelegt. Beispielsweise ein Arzt oder ein geschulter Fitnesstrainer legt die Grenzen des Risikobereichs B für einen oder mehrere Parameter fest.

Ein oder mehrere Parameter innerhalb des Risikobereichs B haben jedoch nicht zwangsweise zur Folge, dass das Klassifikationsmodul aus den Daten einen Anormalzustand klassifiziert. Ein Trainingszustand umfasst beispielsweise einen oder mehrere Parameter innerhalb des Risikobereichs B. So sind beispielsweise der Puls und die Atemfrequenz während des Trainings erhöht.

Zusammen mit den Daten einer grobmotorischen Bewegung können die erhöhte Atemfrequenz und die erhöhte Pulsfrequenz als Trainingszustand klassifiziert werden. Sind die Atemfrequenz und die Pulsfrequenz erhöht, ohne dass sich der Nutzer bewegt oder bewegt hat, so deutet dies darauf hin, dass tatsächlich ein negativer physiologischer Zustand vorliegt.

Um dies zu verdeutlichen zeigt Figur 11a die gemessene Pulsfrequenz (waagrechte, gestrichelte Linie, Messwert y). Betrachtet man die gemessene Pulsfrequenz im Vergleich zum Ruhepuls (y-Achsenabschnitt des Normalwertes 212), so liegt die gemessene Pulsfrequenz in dem Risikobereich B. Das Klassifikationsmodul vergleicht die erfasste Pulsfrequenz auch mit dem Normalwert 212 der entsprechenden Bewegungsgeschwindigkeit (senkrechte, gestrichelte Linie, Messwert x). Unter Berücksichtigung der Bewegungsgeschwindigkeit befindet sich die erfasste Pulsfrequenz in dem Normalbereich A.

In Ausführungsformen signalisiert das Kommunikationssystem, falls das Klassifikationsergebnis eine kritische Klassifikation des physiologischen Zustandes umfasst. Eine kritische Klassifikation des physiologischen Zustandes wird dann klassifiziert, wenn der Wert einer der Parameter oberhalb der oberen Grenze des oberen Risikobereichs B oder unterhalb der unteren Grenze des unteren Risikobereichs B liegt. Diese beiden Bereiche sind der kritische Bereich C. Nimmt ein Parameter einen Wert innerhalb des kritischen Bereichs C an, so ist dieser Wert ein Extremwert, welcher eine derartige Abweichung eines Parameters von dem entsprechenden Normalwert ergibt, dass daraus eine ernsthafte Gefahr für den Nutzer zu schließen ist. Eine Pulsfrequenz bei ruhendem und seit einiger Zeit in Ruhe befindlichen Körper von 200 oder 10 Schlägen pro Minute, eine Körpertemperatur von 42,7°C oder 13°C oder aber eine obere Blutdruckgrenze von 220 mmHg stellen beispielhafte Extremwerte dar.

Ferner kann beispielsweise auch eine relativ starke Änderung eines Parameters in einem relativ kurzen Zeitraum eine kritische Klassifikation des physiologischen Zustandes zur Folge haben. Beispielsweise, wenn der Blutdruck innerhalb weniger Sekunden rapide fällt, oder die Pulsfrequenz in einem kurzen Zeitraum, wie etwa wenige Sekunden, auf einen für den Nutzer hohen Wert ansteigt.

Kann ein Extremwert nicht durch einen weiteren Parameter relativiert werden, beispielsweise eine Pulsfrequenz von 180 durch eine intensive Bewegung oder eine Körpertemperatur von 18°C - gemessen am Handgelenk - durch eine Außentemperatur von 4°C, so wird ein kritisches Klassifikationsergebnis generiert.

In der Realität bestimmen viele Parameter gemeinsam den physiologischen Zustand eines Nutzers. Diese Parameter wechselwirken teilweise miteinander, sodass sie allein für sich genommen eine relativ geringe Aussagekraft besitzen. In Ausführungsformen wird deshalb eine Mehrzahl von Parametern als Daten erfasst. Die Parameter selbst und/oder die Kombination der Parameter untereinander werden dann in das Klassifikationsmodul eingegeben. Figur 11b zeigt beispielhaft vier solcher Parameter.

Die einzelnen Parameter bzw. ihre Korrelationen können unterschiedliche Bereiche A, B und C aufweisen, wobei die Grenzen zwischen den einzelnen Bereichen jeweils symmetrisch oder antisymmetrisch sein können. In Ausführungsformen wird das Ergebnis der Einteilung der physiologischen Parameter in die Bereiche A, B und C in das Klassifikationsmodul eingegeben. Beispielsweise würde eine Puls- zu Bewegung-Verhältnis im oberen Normalbereich A, ein Blutdruck im unteren Normalbereich A, eine Körpertemperatur im oberen Risikobereich B und eine Atemfrequenz im oberen Normalbereich A erfasst werden. Durch die Eingabe dieser Werte könnte beispielsweise der physiologische Zustand als "leichtes Fieber" oder "erhöhte Körpertemperatur" klassifiziert werden.

In einer weiteren Ausführungsform werden die Werte der physiologischen Parameter direkt in das Klassifikationsmodul eingegeben. Um die Genauigkeit der Klassifikation zu erhöhen, kann aus den physiologischen Parametern direkt das Klassifikationsergebnis bestimmt werden. Beispielsweise kann ein erster physiologischer Zustand dadurch klassifiziert werden, dass der Wert eines der Parameter in einem kleinen ersten Bereich innerhalb des Risikobereichs B liegt und ein zweiter physiologischer Zustand dadurch klassifiziert werden, dass der Wert in einem kleinen zweiten Bereich innerhalb des Risikobereichs B liegt. Dem ersten und dem zweiten Bereich sind dabei unterschiedliche Grenzen zugeordnet, wobei sich die beiden Bereiche teilweise überlappen können. Die Körpertemperatur kann beispielsweise einen Normalwert von 37°C umfassen. Der Normalbereich sei somit von 36,2°C bis 37,2°C festgelegt. Der obere Risikobereich B reicht beispielsweise von 37,2°C bis 41,5°C. Demzufolge reicht der kritische Bereich C ab 41,5°C aufwärts. Nun können beispielsweise innerhalb des Risikobereichs B ein oder mehrere Bereiche verschiedenen physiologischen Zuständen zugeordnet sein. Bei einer Körpertemperatur von beispielsweise 37,2°C - 38,5°C kann zum Beispiel der physiologische Zustand als "leicht fiebrig" klassifiziert werden. Bei einer Körpertemperatur von 38,5°C - 41,5°C hingegen würde das Klassifikationsergebnis zum Beispiel "hohes Fieber" umfassen.

Überlappen zwei Bereiche einander, zum Beispiel, weil "leicht fiebrig" von 37,2°C bis 39°C definiert ist und "hohes Fieber" von 38° - 41 °C reicht, so kann aufgrund des entsprechenden physiologischen Parameters, in diesem Fall eine Körpertemperatur von beispielsweise 38,5°C, keine eindeutige Aussage über den physiologischen Zustand getroffen werden, da der Wert des Parameters in dem Überlappbereich liegt. In Ausführungsformen wird die Mehrdeutigkeit durch eine Betrachtung eines oder mehrerer physiologischer Parameter aufgelöst, sodass eine eindeutige Aussage über den physiologischen Zustand getroffen werden kann. In einer weiteren Ausführungsform wird die Klassifikation des physiologischen Zustandes durch das Bilden einer Mahalanobis-Distanz, einer Euklidischen Distanz und/oder mittels eines Maschinenlernverfahrens bestimmt.

Die Überwachung des Körpers und das permanente Klassifizieren des physiologischen Zustandes kann ferner in vorteilhafter Weise zu einer Früherkennung von Krankheiten, insbesondere schweren Erkrankungen, wie etwa Hirnhautentzündung, Krebs oder ähnlichem beitragen. Die kontinuierlich bzw. regelmäßig erfassten Daten können Indizien für eben diese Krankheiten umfassen und beispielsweise einen Arzt bei einer Voruntersuchung bei der Diagnose unterstützen.

Mögliche vorteilhafte Ausführungsformen umfassen die folgenden Merkmalskombinationen:
1. Verfahren zum Freigeben eines Zugriffs eines Computersystems auf physiologische Daten eines registrierten Nutzers eines mobilen, tragbaren Kommunikationssystems, welche in einem Speichersystem persistent gespeichert sind, wobei das Kommunikationssystem ein Klassifikationsmodul, einen Prozessor, eine Kommunikationsschnittstelle und zumindest einen Sensor zur Erfassung von verhaltensbasierten Daten für eine verhaltensbasierte Authentifizierung eines aktuellen Nutzers gegenüber dem Kommunikationssystem aufweist,
   wobei das Klassifikationsmodul zur Klassifikation des Verhaltens des aktuellen Nutzers unter Verwendung der verhaltensbasierten Daten konfiguriert ist, wobei die verhaltensbasierten Daten physiologische Daten des aktuellen Nutzers umfassen, welche dazu vorgesehen sind, in dem Speichersystem persistent gespeichert zu werden, falls der aktuelle Nutzer im Zuge der verhaltensbasierten Authentifizierung als der registrierte Nutzer authentifiziert wird,
   wobei das Kommunikationssystem dazu konfiguriert ist über die Kommunikationsschnittstelle mit dem Computersystem zu kommunizieren,
   wobei das Kommunikationssystem ferner dazu konfiguriert ist, gesteuert durch den Prozessor das Verfahren zum Freigeben eines Zugriffs auszuführen, welches umfasst:
   - Authentifizieren des Computersystems gegenüber dem Kommunikationssystem unter Verwendung der Kommunikationsschnittstelle des Kommunikationssystems,
   - verhaltensbasiertes Authentifizieren des Nutzers gegenüber dem Kommunikationssystem, wobei das verhaltensbasierte Authentifizieren des Nutzers umfasst:
      ∘ Erfassen verhaltensbasierter Daten des aktuellen Nutzers durch den zumindest einen Sensor des Kommunikationssystems,
      ∘ Generieren zumindest eines Klassifikationsergebnisses unter Verwendung des Klassifikationsmoduls und der erfassten verhaltensbasierten Daten,
      ∘ Auswerten des zumindest einen Klassifikationsergebnisses, um den Nutzer zu authentifizieren, wobei das Auswerten ein Prüfen umfasst, ob das Klassifikationsergebnis ein vorgegebenes Prüfungskriterium erfüllt, wobei eine erfolgreiche Authentifizierung des aktuellen Nutzers als den registrierten Nutzer ein Erfüllen des vorgegebenen Prüfungskriteriums umfasst,
   - Erzeugen eines von dem Erfolg der Authentifizierung des Computersystems und des Nutzers abhängigen Authentifizierungssignals durch das mobile, tragbare Kommunikationssystem,
   - Freigabe des Zugriffs des Computersystems auf die in dem Speichersystem persistent gespeicherten physiologischen Daten des registrierten Nutzers, falls das Authentifizierungssignal eine erfolgreiche Authentifizierung des Computersystems und des aktuellen Nutzers angibt und falls eine Zustimmung des Nutzers zu dem Zugriff vorliegt.
2. Verfahren nach Punkt 1, wobei das Kommunikationssystem einen internen Speicher aufweist, wobei das Generieren des zumindest einen Klassifikationsergebnisses unter Verwendung zumindest eines ersten Konfidenzwertes erfolgt, wobei das Verfahren ferner zum Bereitstellen des zumindest einen ersten Konfidenzwertes umfasst:
   - Wiederholtes Ausführen eines Generierens von ersten Konfidenzwerten, wobei das Generieren der ersten Konfidenzwerte umfasst:
      ∘ Erfassen verhaltensbasierter Daten des Nutzers durch den zumindest einen Sensor des Kommunikationssystems,
      ∘ Eingabe der erfassten Daten in das Klassifikationsmodul,
      ∘ Generieren zumindest eines ersten Konfidenzwertes durch das Klassifikationsmodul,
      ∘ Speichern des zumindest einen ersten Konfidenzwertes in dem Speicher des Kommunikationssystems,
   - auf eine Authentifizierungsanfrage hin, Zugreifen auf den Speicher des Kommunikationssystems, um zumindest einen der generierten und gespeicherten ersten Konfidenzwerte zum Generieren des zumindest einen Klassifikationsergebnisses aus dem Speicher auszulesen.
3. Verfahren nach einem der vorangehenden Punkte, wobei das Verfahren ferner als Voraussetzung zum Erzeugen des Authentifizierungssignals umfasst:
   - Abfragen der Zustimmung des aktuellen Nutzers zur Freigabe des Zugriffs des Computersystems auf die in dem Speichersystem persistent gespeicherten physiologischen Daten des registrierten Nutzers,
   - Empfang der Zustimmung des aktuellen Nutzers.
4. Verfahren nach einem der vorangehenden Punkte, wobei das Klassifikationsmodul auf ein Erkennen eines kritischen Zustands unter Verwendung der erfassten verhaltensbasierten Daten des aktuellen Nutzers trainiert ist, wobei das Verfahren ferner umfasst:
   - Erkennen des kritischen Zustands des aktuellen Nutzers anhand der erfassten verhaltensbasierten Daten,
   - auf das Erkennen des kritischen Zustandes hin, Erzeugen eines Notfallsignals, wobei es, falls das Notfallsignal vorliegt, zur Freigabe des Zugriffs des Computersystems auf die in dem Speichersystem persistent gespeicherten physiologischen Daten des registrierten Nutzers ausreicht, dass das Authentifizierungssignal eine erfolgreiche Authentifizierung des Computersystems angibt.
5. Verfahren nach einem der vorangehenden Punkte, wobei der Zugriff ausschließlich einen Lesezugriff auf das Speichersystem umfasst.
6. Verfahren nach einem der vorangehenden Punkte, wobei der Zugriff auf eine oder mehrere vordefinierte Kategorien und/oder Gruppen der physiologischen Daten des registrierten Nutzers beschränkt ist.
7. Verfahren nach einem der vorangehenden Punkte, wobei das Computersystem ein Terminal mit einer Kommunikationsschnittstelle zur Kommunikation mit einem ID-Token umfasst, wobei der ID-Token eine Kommunikationsschnittstelle zur Kommunikation mit dem Terminal, einen Prozessor und einen Speicher umfasst, wobei in einem geschützten Speicherbereich des Speichers ein privater kryptographischer Schlüssel eines dem ID-Token zugeordneten asymmetrischen Schlüsselpaars gespeichert ist und wobei die Authentifizierung des Computersystems unter Verwendung des privaten kryptographischen Schlüssel des ID-Tokens erfolgt.
8. Verfahren Punkt 7, wobei die Authentifizierung des Computersystems ferner unter Verwendung eines Berechtigungszertifikats erfolgt, welches einen öffentlichen kryptographischen Schlüssel des dem ID-Token zugeordneten asymmetrischen Schlüsselpaars umfasst und welches festlegt, auf welche Kategorien und/oder Gruppen von physiologischen Daten des registrierten Nutzers der Zugriff beschränkt ist.
9. Verfahren nach einem der Punkte 7 oder 8, wobei es sich bei dem ID-Token um einen elektronischen Heilberufeausweis handelt.
10. Verfahren nach einem der vorangehenden Punkte, wobei die verhaltensbasierten Daten Bewegungsdaten einer grobmotorischen Bewegung des aktuellen Nutzers des Kommunikationssystems umfassen,
   wobei das Klassifikationsmodul zur Erkennung eines generischen grobmotorischen Bewegungsmusters mit Hilfe von Trainingsdatensätzen einer Nutzerkohorte trainiert ist.
11. Verfahren nach einem der vorangehenden Punkte, wobei die physiologischen Daten ferner jeweils biometrische Daten und/oder feinmotorische Bewegungsdaten umfassen, wobei das Klassifikationsmodul ferner zur Erkennung eines generischen feinmotorischen Bewegungsmusters mit Hilfe von Trainingsdatensätzen einer Nutzerkohorte trainiert ist.
12. Verfahren nach einem der vorangehenden Punkte, wobei die verhaltensbasierten Daten ferner umfassen:
   - Positionsdaten des Kommunikationssystems, welche durch ein Verfahren zur Positionsbestimmung durch einen Sensor zur Bestimmung der Position des Kommunikationssystems erfasst werden, und/oder
   - Anwendungsnutzungsdaten des aktuellen Nutzers, wobei die Anwendungsnutzungsdaten Informationen über ein Nutzen von Anwendungsprogrammen durch den Nutzer umfassen, und/oder
   - Verbindungsdaten des Kommunikationssystems mit anderen Geräten und/oder
   - Kalender- und/oder Uhrzeitdaten einer im Kommunikationssystem implementierten Uhr oder einer externen Uhr, deren Signal durch einen Sensor des Kommunikationssystems empfangen wird, und/oder
   - Umgebungsdaten, welche mittels mindestens einem internen Umgebungssensor oder mittels mindestens einem externen Umgebungssensor erfasst werden, dessen Signal durch einen Sensor des Kommunikationssystems empfangen wird.
13. Verfahren nach einem der vorangehenden Punkte, wobei in dem internen Speicher des Kommunikationssystems zumindest ein Muster in Form einer Musterfunktion und zumindest ein Vergleichsdatensatz gespeichert sind,
   wobei der Vergleichsdatensatz eine Mehrzahl der verhaltensbasierten Daten des registrierten Nutzers umfasst, wobei aus der Mehrzahl der verhaltensbasierten Daten des ersten Vergleichsdatensatzes zumindest ein erster Vergleichsparameter errechnet wird,
   wobei das Klassifikationsmodul auf die Eingabe der verhaltensbasierten Daten des aktuellen Nutzers hin die folgenden Schritte ausführt:
   - Bestimmen zumindest eines Klassifikationsparameters für die erfassten verhaltensbasierten Daten, wobei das Bestimmen des zumindest einen Klassifikationsparameters ein Vergleichen der erfassten verhaltensbasierten Daten mit der zumindest einen Musterfunktion, ein Zuordnen der erfassten verhaltensbasierten Daten zu dem der Musterfunktion zugeordneten ersten Muster und ein Erhalten von zumindest einem dem ersten Muster entsprechenden Klassifikationsparameter umfasst, falls die Bewegungsdaten dem zumindest einen, ersten Muster zugeordnet werden können,
   - Berechnen eines der ersten Konfidenzwerte für jeden Klassifikationsparameter durch einen Vergleich des zumindest einen Klassifikationsparameters mit dem jeweiligen Vergleichsparameter des Vergleichsdatensatzes.
14. Verfahren nach Punkt 13, wobei das Kommunikationssystem aus den einzelnen ersten Konfidenzwerten der Klassifikationsparameter einen gemeinsamen ersten Konfidenzwert generiert, welcher zur Generierung des Klassifikationsergebnisses verwendet wird und eine Wahrscheinlichkeit angibt, mit der die Identität des aktuellen Nutzers mit der Identität des registrierten Nutzers übereinstimmt.
15. Verfahren nach Punkt 14, wobei die einzelnen ersten Konfidenzwerte der Klassifikationsparameter bei der Auswertung mit jeweils einem Gewichtungsfaktor versehen werden, wobei die Gewichtungsfaktoren dem jeweiligen ersten Konfidenzwert zugeordnet werden.
16. Verfahren nach einem der Punkte 13 bis 15, wobei die verhaltensbasierte Authentifizierung ferner das Trainieren des Klassifikationsmoduls mit den verhaltensbasierten Daten des aktuellen Nutzers umfasst, wobei das Klassifikationsmodul auf das Verhalten des aktuellen Nutzers unter der Voraussetzung trainiert wird, dass die verhaltensbasierte Authentifizierung den aktuellen Nutzer als den registrierten Nutzer authentifiziert, wobei das Trainieren ein Hinzufügen der verhaltensbasierten Daten des aktuellen Nutzers zu dem Vergleichsdatensatz umfasst, wobei das Trainieren ferner ein Entfernen von verhaltensbasierten Daten des registrierten Nutzers, welche ein vorgegebenes Mindestalter überschreiten, aus dem ersten Vergleichsdatensatz umfasst.
17. Verfahren nach Punkt 16, wobei die aus dem Vergleichsdatensatz entfernten verhaltensbasierten Daten des registrierten Nutzers in dem Speichersystem persistent gespeichert werden.
18. Verfahren nach Punkt 17, wobei das Entfernen der verhaltensbasierten Daten des registrierten Nutzers aus dem Vergleichsdatensatz und das persistente Speichern in dem Speichersystem periodisch erfolgt.
19. Verfahren nach einem der Punkte 1 bis 16, wobei auf eine erfolgreiche verhaltensbasierte Authentifizierung des aktuellen Nutzers hin die zur Authentifizierung verwendeten verhaltensbasierten Daten in dem Speichersystem persistent gespeichert werden.
20. Verfahren nach einem der vorangehenden Punkte, wobei das Prüfungskriterium erfüllt ist, falls:
   - zumindest ein Klassifikationsergebnis einen durch das Prüfungskriterium vorgegebenen Schwellenwert überschreitet und/oder
   - ein durch das Prüfungskriterium vorgegebenes Höchstalter des zumindest einen Klassifikationsergebnisses nicht überschreiten.
21. Verfahren nach einem der vorangehenden Punkte, wobei das Speichersystem ein internes Speichersystem des Kommunikationssystems ist.
22. Verfahren nach einem der vorangehenden Punkte, wobei das Speichersystem ein externes Speichersystem ist, welches eine Mehrzahl von unabhängigen Speichern mit jeweils zumindest einem nichtflüchtigen Speichermedium und einen Dateimanagementserver umfasst,
   wobei das persistente Speichern der verhaltensbasierten Daten des registrierten Nutzers durch das Kommunikationssystem in dem Speichersystem ein verteiltes Speichern zumindest einer Datei mit physiologischen Daten, welche die verhaltensbasierten Daten umfassen, auf mehreren unabhängigen Speichern der Mehrzahl von unabhängigen Speichern umfasst, wobei das verteilte Speichern umfasst:
   - automatische Generierung eines Verteilungsplans, der Instruktionen zur Generierung von Dateifragmenten der Datei mittels eines Fehlerkorrekturverfahrens und Identifikatoren der mehreren unabhängigen Speicher, in denen die generierten Dateifragmente gespeichert werden sollen, enthält, durch den Dateimanagementserver oder durch das Kommunikationssystem,
   - Durchführung des in dem Verteilungsplan spezifizierten Fehlerkorrekturverfahrens zur Generierung der Dateifragmente aus der Datei durch das Kommunikationssystem,
   - Senden des Authentifizierungssignals des Kommunikationssystems zum Speichern der Dateifragmente in den im Verteilungsplan identifizierten mehreren unabhängigen Speicher an den Dateimanagementserver über ein Netzwerk,
   - in Antwort auf den Empfang des Authentifizierungssignals, Anforderung eines Berechtigungstokens durch den Dateimanagementserver von jedem der in dem Verteilungsplan identifizierten unabhängigen Speicher und Weiterleitung der in Antwort auf die Anforderung erhaltenen Berechtigungstoken durch den Dateimanagementserver an das Kommunikationssystem, und
   - Speichern der generierten Dateifragmente durch das Kommunikationssystem in den mehreren unabhängigen Speichern des Speichersystems über das Netzwerk mittels Berechtigungsnachweis durch die Berechtigungstoken unter Umgehung des Dateimanagementservers.
23. Verfahren nach Punkt 22, wobei ein Zugriff auf die zumindest eine Datei mit physiologischen Daten des registrierten Nutzers, welche gemäß dem Verteilungsplan mittels des Fehlerkorrekturverfahrens in Dateifragmente aufgeteilt ist und deren resultierende Dateifragmente auf mehreren unabhängigen Speichern der Mehrzahl von unabhängigen Speichern des Speichersystems verteilt gespeichert sind, umfasst:
   - nach erfolgreicher Authentifizierung über den Dateimanagementserver unter Verwendung des Authentifizierungssignals, Empfangen eines Berechtigungstoken für jeden der unabhängigen Speicher zumindest einer Auswahl der mehreren unabhängigen Speicher des Speichersystems, in deren nichtflüchtigen Speichermedien die Dateifragmente gemäß dem Verteilungsplan gespeichert sind, über den Dateimanagementserver, wobei die von der Auswahl der unabhängigen Speicher umfassten Dateifragmente ausreichend für eine Rekonstruktion der Datei mit den physiologischen Daten des registrierten Nutzers sind,
      wobei die Berechtigungstoken den angeforderten Zugriff auf die durch die unabhängigen Speicher der Auswahl jeweils gespeicherten Dateifragmente unter Umgehung des Dateimanagementservers ermöglichen,
   - Herunterladen der Dateifragmente von den einzelnen unabhängigen Speichern der Auswahl über das Netzwerk unter Verwendung der Berechtigungstoken,
   - Rekonstruieren der Datei aus den heruntergeladenen Dateifragmenten.
24. Verfahren nach Punkt 23, wobei das Empfangen der Berechtigungstoken, das Herunterladen der Dateifragmente und die Rekonstruktion der Datei durch das Kommunikationssystem erfolgt, welches die rekonstruierte Datei über eine kryptographisch gesicherte Kommunikationsverbindung an das Computersystem sendet, oder wobei das Empfangen der Berechtigungstoken, das Herunterladen der Dateifragmente und die Rekonstruktion der Datei durch das Computersystem erfolgt.
25. Mobiles, tragbares Kommunikationssystem zum Freigeben eines Zugriffs eines Computersystems auf physiologische Daten eines registrierten Nutzers eines mobilen, tragbaren Kommunikationssystems, welche in einem Speichersystem persistent gespeichert sind, wobei das Kommunikationssystem ein Klassifikationsmodul, einen Prozessor, einen Speicher, eine Kommunikationsschnittstelle und zumindest einen Sensor zur Erfassung von verhaltensbasierten Daten für eine verhaltensbasierte Authentifizierung eines aktuellen Nutzers gegenüber dem Kommunikationssystem aufweist,
   wobei das Klassifikationsmodul zur Klassifikation des Verhaltens des aktuellen Nutzers unter Verwendung der verhaltensbasierten Daten konfiguriert ist, wobei die verhaltensbasierten Daten physiologische Daten des aktuellen Nutzers umfassen, welche dazu vorgesehen sind, in dem Speichersystem persistent gespeichert zu werden, falls der aktuelle Nutzer im Zuge der verhaltensbasierten Authentifizierung als der registrierte Nutzer authentifiziert wird,
   wobei das Kommunikationssystem dazu konfiguriert ist über die Kommunikationsschnittstelle mit dem Computersystem zu kommunizieren,
   wobei der Speicher Programminstruktionen umfasst und ein Ausführen der Programminstruktionen durch den Prozessor das Kommunikationssystem dazu veranlasst das Verfahren auszuführen, welches umfasst:
   - Authentifizieren des Computersystems gegenüber dem Kommunikationssystem unter Verwendung der Kommunikationsschnittstelle des Kommunikationssystems,
   - verhaltensbasiertes Authentifizieren des Nutzers gegenüber dem Kommunikationssystem, wobei das verhaltensbasierte Authentifizieren des Nutzers umfasst:
      ∘ Erfassen verhaltensbasierter Daten des aktuellen Nutzers durch den zumindest einen Sensor des Kommunikationssystems,
      ∘ Generieren zumindest eines Klassifikationsergebnisses unter Verwendung des Klassifikationsmoduls und der erfassten verhaltensbasierten Daten,
      ∘ Auswerten des zumindest einen Klassifikationsergebnisses, um den Nutzer zu authentifizieren, wobei das Auswerten ein Prüfen umfasst, ob das Klassifikationsergebnis ein vorgegebenes Prüfungskriterium erfüllt, wobei eine erfolgreiche Authentifizierung des aktuellen Nutzers als den registrierten Nutzer ein Erfüllen des vorgegebenen Prüfungskriteriums umfasst,
   - Erzeugen eines von dem Erfolg der Authentifizierung des Computersystems und des Nutzers abhängigen Authentifizierungssignals durch das mobile, tragbare Kommunikationssystem,
   - Freigabe des Zugriffs des Computersystems auf die in dem Speichersystem persistent gespeicherten physiologischen Daten des registrierten Nutzers, falls das Authentifizierungssignal eine erfolgreiche Authentifizierung des Computersystems und des aktuellen Nutzers angibt und falls eine Zustimmung des Nutzers zu dem Zugriff vorliegt.
26. System umfassend ein mobiles, tragbares Kommunikationssystem nach Punkt 25 und ein Speichersystem zum persistenten Speichern physiologischer Daten des registrierten Nutzers des Kommunikationssystems, wobei es sich bei den physiologischen Daten um verhaltensbasierte Daten des registrierten Nutzers handelt, welche im Zuge einer erfolgreichen verhaltensbasierten Authentifizierung des registrierten Nutzers gegenüber dem Kommunikationssystem durch zumindest einen Sensor des Kommunikationssystems erfasst wurden.
27. System nach Punkt 26, wobei das System ferner ein Computersystem zum Zugreifen auf physiologische Daten eines registrierten Nutzers des Kommunikationssystems umfasst, welche persistent in dem Speichersystem gespeichert sind.
28. System nach Punkt 27, wobei das Computersystem ein Terminal mit einer Kommunikationsschnittstelle zur Kommunikation mit einem ID-Token umfasst, wobei der ID-Token eine Kommunikationsschnittstelle zur Kommunikation mit dem Terminal, einen Prozessor und einen Speicher umfasst, wobei in einem geschützten Speicherbereich des Speichers ein privater kryptographischer Schlüssel eines dem ID-Token zugeordneten asymmetrischen Schlüsselpaars gespeichert ist und wobei die Authentifizierung des Computersystems unter Verwendung des privaten kryptographischen Schlüssel des ID-Tokens erfolgt.
29. System nach einem der Punkte 28, wobei es sich bei dem ID-Token um einen elektronischen Heilberufeausweis handelt.

### Bezugszeichenliste

- 100:: Kommunikationssystem
- 110:: Sensor
- 120:: Speicher
- 130:: Prozessor
- 140:: Kommunikationsschnittstelle
- 150:: Speichersystem
- 152:: Speicher
- 154:: Dateimanagementserver
- 156:: Netzwerk
- 200:: Klassifikationsmodul
- 210:: Musterfunktion
- 212:: Normalwert
- 220:: Vergleichsdatensatz
- 230:: Vergleichsparameter
- 300:: ID-Token
- 320:: Speicher
- 322:: Authentifizierungsdaten
- 330:: Prozessor
- 340:: Kommunikationsschnittstelle
- 400:: Computersystem
- 420:: Speicher
- 430:: Prozessor
- 440:: Kommunikationsschnittstelle
- 500:: Daten
- 520:: Klassifikationsparameter
- 540:: Konfidenzwert
- 600:: Klassifikationsergebnis
- 700:: System

## Patentansprüche

1. Verfahren zum Freigeben eines Zugriffs eines Computersystems (400) auf physiologische Daten eines registrierten Nutzers eines mobilen, tragbaren Kommunikationssystems (100), welche in einem Speichersystem (150) persistent gespeichert sind, wobei das Kommunikationssystem (100) ein Klassifikationsmodul (200), einen Prozessor (130), eine Kommunikationsschnittstelle (140) und zumindest einen Sensor (110) zur Erfassung von verhaltensbasierten Daten (500) für eine verhaltensbasierte Authentifizierung eines aktuellen Nutzers gegenüber dem Kommunikationssystem (100) aufweist,
wobei das Klassifikationsmodul (200) zur Klassifikation des Verhaltens des aktuellen Nutzers unter Verwendung der verhaltensbasierten Daten (500) konfiguriert ist, wobei die verhaltensbasierten Daten (500) physiologische Daten des aktuellen Nutzers umfassen, welche dazu vorgesehen sind, in dem Speichersystem (150) persistent gespeichert zu werden, falls der aktuelle Nutzer im Zuge der verhaltensbasierten Authentifizierung als der registrierte Nutzer authentifiziert wird,
wobei das Kommunikationssystem (100) dazu konfiguriert ist über die Kommunikationsschnittstelle (140) mit dem Computersystem (400) zu kommunizieren, wobei das Kommunikationssystem (100) ferner dazu konfiguriert ist, gesteuert durch den Prozessor (130) das Verfahren zum Freigeben eines Zugriffs auszuführen, welches umfasst:
• Authentifizieren des Computersystems (400) gegenüber dem Kommunikationssystem (100) unter Verwendung der Kommunikationsschnittstelle (140) des Kommunikationssystems (100),
• verhaltensbasiertes Authentifizieren des Nutzers gegenüber dem Kommunikationssystem (100), wobei das verhaltensbasierte Authentifizieren des Nutzers umfasst:
∘ Erfassen verhaltensbasierter Daten (500) des aktuellen Nutzers durch den zumindest einen Sensor (110) des Kommunikationssystems (100),
∘ Generieren zumindest eines Klassifikationsergebnisses (600) unter Verwendung des Klassifikationsmoduls (200) und der erfassten verhaltensbasierten Daten (500),
∘ Auswerten des zumindest einen Klassifikationsergebnisses (600), um den Nutzer zu authentifizieren, wobei das Auswerten ein Prüfen umfasst, ob das Klassifikationsergebnis (600) ein vorgegebenes Prüfungskriterium (800) erfüllt, wobei eine erfolgreiche Authentifizierung des aktuellen Nutzers als den registrierten Nutzer ein Erfüllen des vorgegebenen Prüfungskriteriums (800) umfasst,
• Erzeugen eines von dem Erfolg der Authentifizierung des Computersystems (400) und des Nutzers abhängigen Authentifizierungssignals durch das mobile, tragbare Kommunikationssystem (100),
• Freigabe des Zugriffs des Computersystems (400) auf die in dem Speichersystem (150) persistent gespeicherten physiologischen Daten des registrierten Nutzers, falls das Authentifizierungssignal eine erfolgreiche Authentifizierung des Computersystems (400) und des aktuellen Nutzers angibt und falls eine Zustimmung des Nutzers zu dem Zugriff vorliegt.

2. Verfahren nach Anspruch 1, wobei das Kommunikationssystem (100) einen internen Speicher (120) aufweist, wobei das Generieren des zumindest einen Klassifikationsergebnisses (600) unter Verwendung zumindest eines ersten Konfidenzwertes (540) erfolgt, wobei das Verfahren ferner zum Bereitstellen des zumindest einen ersten Konfidenzwertes (540) umfasst:
• Wiederholtes Ausführen eines Generierens von ersten Konfidenzwerten, wobei das Generieren der ersten Konfidenzwerte umfasst:
∘ Erfassen verhaltensbasierter Daten (500) des Nutzers durch den zumindest einen Sensor (110) des Kommunikationssystems (100),
∘ Eingabe der erfassten Daten (500) in das Klassifikationsmodul (200),
∘ Generieren zumindest eines ersten Konfidenzwertes (540) durch das Klassifikationsmodul (200),
∘ Speichern des zumindest einen ersten Konfidenzwertes (540) in dem Speicher (120) des Kommunikationssystems (100),
• auf eine Authentifizierungsanfrage hin, Zugreifen auf den Speicher (120) des Kommunikationssystems (100), um zumindest einen der generierten und gespeicherten ersten Konfidenzwerte (540) zum Generieren des zumindest einen Klassifikationsergebnisses (600) aus dem Speicher (120) auszulesen.

3. Verfahren nach einem der vorangehenden Ansprüche, wobei das Verfahren ferner als Voraussetzung zum Erzeugen des Authentifizierungssignals umfasst:
• Abfragen der Zustimmung des aktuellen Nutzers zur Freigabe des Zugriffs des Computersystems (400) auf die in dem Speichersystem (150) persistent gespeicherten physiologischen Daten des registrierten Nutzers,
• Empfang der Zustimmung des aktuellen Nutzers.

4. Verfahren nach einem der vorangehenden Ansprüche, wobei das Klassifikationsmodul (200) auf ein Erkennen eines kritischen Zustands unter Verwendung der erfassten verhaltensbasierten Daten (500) des aktuellen Nutzers trainiert ist, wobei das Verfahren ferner umfasst:
• Erkennen des kritischen Zustands des aktuellen Nutzers anhand der erfassten verhaltensbasierten Daten (500),
• auf das Erkennen des kritischen Zustandes hin, Erzeugen eines Notfallsignals, wobei es, falls das Notfallsignal vorliegt, zur Freigabe des Zugriffs des Computersystems (400) auf die in dem Speichersystem (150) persistent gespeicherten physiologischen Daten des registrierten Nutzers ausreicht, dass das Authentifizierungssignal eine erfolgreiche Authentifizierung des Computersystems (400) angibt, und/oder
wobei der Zugriff ausschließlich einen Lesezugriff auf das Speichersystem (150) umfasst, und/oder
wobei der Zugriff auf eine oder mehrere vordefinierte Kategorien und/oder Gruppen der physiologischen Daten des registrierten Nutzers beschränkt ist.

5. Verfahren nach einem der vorangehenden Ansprüche, wobei das Computersystem (400) ein Terminal mit einer Kommunikationsschnittstelle (440) zur Kommunikation mit einem ID-Token (300) umfasst, wobei der ID-Token (300) eine Kommunikationsschnittstelle (440) zur Kommunikation mit dem Terminal, einen Prozessor (330) und einen Speicher (320) umfasst, wobei in einem geschützten Speicherbereich des Speichers (320) ein privater kryptographischer Schlüssel eines dem ID-Token (300) zugeordneten asymmetrischen Schlüsselpaars gespeichert ist und wobei die Authentifizierung des Computersystems (400) unter Verwendung des privaten kryptographischen Schlüssel des ID-Tokens (300) erfolgt.

6. Verfahren Anspruch 5, wobei die Authentifizierung des Computersystems (400) ferner unter Verwendung eines Berechtigungszertifikats erfolgt, welches einen öffentlichen kryptographischen Schlüssel des dem ID-Token (300) zugeordneten asymmetrischen Schlüsselpaars umfasst und welches festlegt, auf welche Kategorien und/oder Gruppen von physiologischen Daten des registrierten Nutzers der Zugriff beschränkt ist, und/oder
wobei es sich bei dem ID-Token (300) um einen elektronischen Heilberufeausweis handelt.

7. Verfahren nach einem der vorangehenden Ansprüche, wobei die verhaltensbasierten Daten (500) Bewegungsdaten einer grobmotorischen Bewegung des aktuellen Nutzers des Kommunikationssystems (100) umfassen,
wobei das Klassifikationsmodul (200) zur Erkennung eines generischen grobmotorischen Bewegungsmusters mit Hilfe von Trainingsdatensätzen einer Nutzerkohorte trainiert ist, und/oder
wobei die physiologischen Daten ferner jeweils biometrische Daten und/oder feinmotorische Bewegungsdaten umfassen, wobei das Klassifikationsmodul (200) ferner zur Erkennung eines generischen feinmotorischen Bewegungsmusters mit Hilfe von Trainingsdatensätzen einer Nutzerkohorte trainiert ist, und/oder wobei in dem internen Speicher (120) des Kommunikationssystems (100) zumindest ein Muster in Form einer Musterfunktion (210) und zumindest ein Vergleichsdatensatz (220) gespeichert sind,
wobei der Vergleichsdatensatz (220) eine Mehrzahl der verhaltensbasierten Daten (500) des registrierten Nutzers umfasst, wobei aus der Mehrzahl der verhaltensbasierten Daten (500) des ersten Vergleichsdatensatzes (220) zumindest ein erster Vergleichsparameter (230) errechnet wird,
wobei das Klassifikationsmodul (200) auf die Eingabe der verhaltensbasierten Daten (500) des aktuellen Nutzers hin die folgenden Schritte ausführt:
• Bestimmen zumindest eines Klassifikationsparameters (520) für die erfassten verhaltensbasierten Daten (500), wobei das Bestimmen des zumindest einen Klassifikationsparameters (520) ein Vergleichen der erfassten verhaltensbasierten Daten (500) mit der zumindest einen Musterfunktion (210), ein Zuordnen der erfassten verhaltensbasierten Daten (500) zu dem der Musterfunktion (210) zugeordneten ersten Muster und ein Erhalten von zumindest einem dem ersten Muster entsprechenden Klassifikationsparameter (520) umfasst, falls die Bewegungsdaten dem zumindest einen, ersten Muster zugeordnet werden können,
• Berechnen eines der ersten Konfidenzwerte (540) für jeden Klassifikationsparameter (520) durch einen Vergleich des zumindest einen Klassifikationsparameters (520) mit dem jeweiligen Vergleichsparameter (230) des Vergleichsdatensatzes (220).

8. Verfahren nach einem der Ansprüche 7, wobei die verhaltensbasierte Authentifizierung ferner das Trainieren des Klassifikationsmoduls (200) mit den verhaltensbasierten Daten (500) des aktuellen Nutzers umfasst, wobei das Klassifikationsmodul (200) auf das Verhalten des aktuellen Nutzers unter der Voraussetzung trainiert wird, dass die verhaltensbasierte Authentifizierung den aktuellen Nutzer als den registrierten Nutzer authentifiziert, wobei das Trainieren ein Hinzufügen der verhaltensbasierten Daten (500) des aktuellen Nutzers zu dem Vergleichsdatensatz (220) umfasst, wobei das Trainieren ferner ein Entfernen von verhaltensbasierten Daten (500) des registrierten Nutzers, welche ein vorgegebenes Mindestalter überschreiten, aus dem ersten Vergleichsdatensatz (220) umfasst.

9. Verfahren nach einem der vorangehenden Ansprüche, wobei das Prüfungskriterium (800) erfüllt ist, falls:
• zumindest ein Klassifikationsergebnis (600) einen durch das Prüfungskriterium (800) vorgegebenen Schwellenwert überschreitet und/oder
• ein durch das Prüfungskriterium (800) vorgegebenes Höchstalter des zumindest einen Klassifikationsergebnisses (600) nicht überschreiten.

10. Verfahren nach einem der vorangehenden Ansprüche, wobei das Speichersystem (150) ein externes Speichersystem ist, welches eine Mehrzahl von unabhängigen Speichern (152) mit jeweils zumindest einem nichtflüchtigen Speichermedium und einen Dateimanagementserver (154) umfasst,
wobei das persistente Speichern der verhaltensbasierten Daten (500) des registrierten Nutzers durch das Kommunikationssystem (100) in dem Speichersystem (150) ein verteiltes Speichern zumindest einer Datei mit physiologischen Daten, welche die verhaltensbasierten Daten (500) umfassen, auf mehreren unabhängigen Speichern (152) der Mehrzahl von unabhängigen Speichern (152) umfasst, wobei das verteilte Speichern umfasst:
• automatische Generierung eines Verteilungsplans, der Instruktionen zur Generierung von Dateifragmenten der Datei mittels eines Fehlerkorrekturverfahrens und Identifikatoren der mehreren unabhängigen Speicher (152), in denen die generierten Dateifragmente gespeichert werden sollen, enthält, durch den Dateimanagementserver (154) oder durch das Kommunikationssystem (100),
• Durchführung des in dem Verteilungsplan spezifizierten Fehlerkorrekturverfahrens zur Generierung der Dateifragmente aus der Datei durch das Kommunikationssystem (100),
• Senden des Authentifizierungssignals des Kommunikationssystems (100) zum Speichern der Dateifragmente in den im Verteilungsplan identifizierten mehreren unabhängigen Speicher (152) an den Dateimanagementserver (154) über ein Netzwerk (156),
• in Antwort auf den Empfang des Authentifizierungssignals, Anforderung eines Berechtigungstokens durch den Dateimanagementserver (154) von jedem der in dem Verteilungsplan identifizierten unabhängigen Speicher (152) und Weiterleitung der in Antwort auf die Anforderung erhaltenen Berechtigungstoken durch den Dateimanagementserver (154) an das Kommunikationssystem (100), und
• Speichern der generierten Dateifragmente durch das Kommunikationssystem (100) in den mehreren unabhängigen Speichern (152) des Speichersystems (150) über das Netzwerk (156) mittels Berechtigungsnachweis durch die Berechtigungstoken unter Umgehung des Dateimanagementservers (154).

11. Verfahren nach Anspruch 10, wobei ein Zugriff auf die zumindest eine Datei mit physiologischen Daten des registrierten Nutzers, welche gemäß dem Verteilungsplan mittels des Fehlerkorrekturverfahrens in Dateifragmente aufgeteilt ist und deren resultierende Dateifragmente auf mehreren unabhängigen Speichern (152) der Mehrzahl von unabhängigen Speichern (152) des Speichersystems (150) verteilt gespeichert sind, umfasst:
• nach erfolgreicher Authentifizierung über den Dateimanagementserver (154) unter Verwendung des Authentifizierungssignals, Empfangen eines Berechtigungstoken für jeden der unabhängigen Speicher (152) zumindest einer Auswahl der mehreren unabhängigen Speicher (152) des Speichersystems (150), in deren nichtflüchtigen Speichermedien die Dateifragmente gemäß dem Verteilungsplan gespeichert sind, über den Dateimanagementserver (154), wobei die von der Auswahl der unabhängigen Speicher (152) umfassten Dateifragmente ausreichend für eine Rekonstruktion der Datei mit den physiologischen Daten des registrierten Nutzers sind,
wobei die Berechtigungstoken den angeforderten Zugriff auf die durch die unabhängigen Speicher (152) der Auswahl jeweils gespeicherten Dateifragmente unter Umgehung des Dateimanagementservers (154) ermöglichen,
• Herunterladen der Dateifragmente von den einzelnen unabhängigen Speichern (152) der Auswahl über das Netzwerk (156) unter Verwendung der Berechtigungstoken,
• Rekonstruieren der Datei aus den heruntergeladenen Dateifragmenten.

12. Mobiles, tragbares Kommunikationssystem (100) zum Freigeben eines Zugriffs eines Computersystems (400) auf physiologische Daten eines registrierten Nutzers eines mobilen, tragbaren Kommunikationssystems (100), welche in einem Speichersystem (150) persistent gespeichert sind, wobei das Kommunikationssystem (100) ein Klassifikationsmodul (200), einen Prozessor (130), einen Speicher (120), eine Kommunikationsschnittstelle (140) und zumindest einen Sensor (110) zur Erfassung von verhaltensbasierten Daten (500) für eine verhaltensbasierte Authentifizierung eines aktuellen Nutzers gegenüber dem Kommunikationssystem (100) aufweist,
wobei das Klassifikationsmodul (200) zur Klassifikation des Verhaltens des aktuellen Nutzers unter Verwendung der verhaltensbasierten Daten (500) konfiguriert ist, wobei die verhaltensbasierten Daten (500) physiologische Daten des aktuellen Nutzers umfassen, welche dazu vorgesehen sind, in dem Speichersystem (150) persistent gespeichert zu werden, falls der aktuelle Nutzer im Zuge der verhaltensbasierten Authentifizierung als der registrierte Nutzer authentifiziert wird,
wobei das Kommunikationssystem (100) dazu konfiguriert ist über die Kommunikationsschnittstelle (140) mit dem Computersystem (400) zu kommunizieren, wobei der Speicher (120) Programminstruktionen umfasst und ein Ausführen der Programminstruktionen durch den Prozessor (130) das Kommunikationssystem (100) dazu veranlasst das Verfahren auszuführen, welches umfasst:
• Authentifizieren des Computersystems (400) gegenüber dem Kommunikationssystem (100) unter Verwendung der Kommunikationsschnittstelle (140) des Kommunikationssystems (100),
• verhaltensbasiertes Authentifizieren des Nutzers gegenüber dem Kommunikationssystem (100), wobei das verhaltensbasierte Authentifizieren des Nutzers umfasst:
∘ Erfassen verhaltensbasierter Daten (500) des aktuellen Nutzers durch den zumindest einen Sensor (110) des Kommunikationssystems (100),
∘ Generieren zumindest eines Klassifikationsergebnisses (600) unter Verwendung des Klassifikationsmoduls (200) und der erfassten verhaltensbasierten Daten (500),
∘ Auswerten des zumindest einen Klassifikationsergebnisses (600), um den Nutzer zu authentifizieren, wobei das Auswerten ein Prüfen umfasst, ob das Klassifikationsergebnis (600) ein vorgegebenes Prüfungskriterium (800) erfüllt, wobei eine erfolgreiche Authentifizierung des aktuellen Nutzers als den registrierten Nutzer ein Erfüllen des vorgegebenen Prüfungskriteriums (800) umfasst,
• Erzeugen eines von dem Erfolg der Authentifizierung des Computersystems (400) und des Nutzers abhängigen Authentifizierungssignals durch das mobile, tragbare Kommunikationssystem (100),
• Freigabe des Zugriffs des Computersystems (400) auf die in dem Speichersystem (150) persistent gespeicherten physiologischen Daten des registrierten Nutzers, falls das Authentifizierungssignal eine erfolgreiche Authentifizierung des Computersystems (400) und des aktuellen Nutzers angibt und falls eine Zustimmung des Nutzers zu dem Zugriff vorliegt.

13. System (700) umfassend ein mobiles, tragbares Kommunikationssystem (100) nach Anspruch 12 und ein Speichersystem (150) zum persistenten Speichern physiologischer Daten des registrierten Nutzers des Kommunikationssystems (100), wobei es sich bei den physiologischen Daten um verhaltensbasierte Daten (500) des registrierten Nutzers handelt, welche im Zuge einer erfolgreichen verhaltensbasierten Authentifizierung des registrierten Nutzers gegenüber dem Kommunikationssystem (100) durch zumindest einen Sensor des Kommunikationssystems (100) erfasst wurden.

14. System (700) nach Anspruch 13, wobei das System (700) ferner ein Computersystem (400) zum Zugreifen auf physiologische Daten eines registrierten Nutzers des Kommunikationssystems (100) umfasst, welche persistent in dem Speichersystem (150) gespeichert sind.

15. System (700) nach Anspruch 14, wobei das Computersystem (400) ein Terminal
mit einer Kommunikationsschnittstelle (140) zur Kommunikation mit einem ID-Token (300) umfasst, wobei der ID-Token (300) eine Kommunikationsschnittstelle (340) zur Kommunikation mit dem Terminal, einen Prozessor (330) und einen Speicher (320) umfasst, wobei in einem geschützten Speicherbereich des Speichers (320) ein privater kryptographischer Schlüssel eines dem ID-Token (300) zugeordneten asymmetrischen Schlüsselpaars gespeichert ist und wobei die Authentifizierung des Computersystems (400) unter Verwendung des privaten kryptographischen Schlüssel des ID-Tokens (300) erfolgt, und/oder
wobei es sich bei dem ID-Token (300) um einen elektronischen Heilberufeausweis handelt.

## Claims

1. A method for granting a computer system (400) access to physiological data of a registered user of a mobile, portable communication system (100), which data are stored permanently in a memory system (150), wherein the communication system (100) comprises a classification module (200), a processor (130), a communication interface (140), and at least one sensor (110) for detecting behaviour-based data (500) for a behaviour-based authentication of a current user to the communication system (100),
wherein the classification module (200) is configured to classify the behaviour of the current user with use of the behaviour-based data (500), wherein the behaviour-based data (500) comprise physiological data of the current user, which data are intended to be stored permanently in the memory system (150), if the current user is authenticated as the registered user during the course of the behaviour-based authentication,
wherein the communication system (100) is configured to communicate with the computer system (400) via the communication interface (140), wherein the communication system (100) is also configured to carry out the method for granting access, controlled by the processor (130), which method comprises:
• authentication of the computer system (400) to the communication system (100) with use of the communication interface (140) of the communication system (100),
• behaviour-based authentication of the user to the communication system (100), wherein the behaviour-based authentication of the user comprises:
∘ detection of behaviour-based data (500) of the current user by the at least one sensor (110) of the communication system (100),
∘ generation of at least one classification result (600) with use of the classification module (200) and the detected behaviour-based data (500),
∘ evaluation of the at least one classification result (600) in order to authenticate the user, wherein the evaluation comprises a check as to whether the classification result (600) satisfies a predefined check criterion (800), wherein a successful authentication of the current user as the registered user comprises satisfaction of the predefined check criterion (800),
• generation, by the mobile, portable communication system (100), of an authentication signal dependent on the success of the authentication of the computer system (400) and of the user,
• granting of access for the computer system (400) to the physiological data of the registered user stored permanently in the memory system (150), if the authentication signal indicates a successful authentication of the computer system (400) and of the current user and if the user has consented to the access.

2. The method according to claim 1, wherein the communication system (100) comprises an internal memory (120), wherein the at least one classification result (600) is generated with use of at least one first confidence value (540), wherein the method also comprises, in order to provide the at least one first confidence value (540):
• repeated execution of a generation of first confidence values, wherein the generation of the first confidence values comprises:
∘ detection of behaviour-based data (500) of the user by the at least one sensor (110) of the communication system (100),
∘ input of the detected data (500) into the classification module (200),
∘ generation of at least one first confidence value (540) by the classification module (200),
∘ storing of the at least one first confidence value (540) in the memory (120) of the communication system (100),
• in response to an authentication request, accessing of the memory (120) by the communication system (100) in order to read from the memory (120) at least one of the generated and stored first confidence values (540) for generation of the at least one classification result (600).

3. The method according to either one of the preceding claims, wherein the method also comprises, as a precondition for generation of the authentication signal:
• querying of the consent of the current user in order to grant access for the computer system (400) to the physiological data of the registered user stored permanently in the memory system (150),
• receipt of the consent of the current user.

4. The method according to any one of the preceding claims, wherein the classification model (200) is trained to identify a critical state with use of the detected behaviour-based data (500) of the current user, wherein the method also comprises:
• identification of the critical state of the current user on the basis of the detected behaviour-based data (500),
• upon identification of the critical state, generation of an emergency signal, wherein, if the emergency signal is present, it is sufficient, for the granting of access for the computer system (400) to the physiological data of the registered user stored permanently in the memory system (150), that the authentication signal indicates successful authentication of the computer system (400), and/or wherein the access comprises exclusively read access to the memory system (150), and/or
wherein the access is limited to one or more predefined categories and/or groups of the physiological data of the registered user.

5. The method according to any one of the preceding claims, wherein the computer system (400) comprises a terminal with a communication interface (440) for communication with an ID token (300), wherein the ID token (300) comprises a communication interface (440) for communication with the terminal, a processor (330), and a memory (320), wherein a private cryptographic key of an asymmetric key pair associated with the ID token (300) is stored in a protected memory area of the memory (320), and wherein the computer system (400) is authenticated with use of the private cryptographic key of the ID token (300).

6. The method according to claim 5, wherein the computer system (400) is also authenticated with use of an authorisation certificate which comprises a public cryptographic key of the asymmetric key pair associated with the ID token (300) and which defines those categories and/or groups of physiological data of the registered user to which the access is limited, and/or
wherein the ID token (300) is an electronic health professional card.

7. The method according to any one of the preceding claims, wherein the behaviour-based data (500) comprise movement data of a gross motor movement of the current user of the communication system (100), wherein the classification module (200) is trained to identify a generic gross motor movement pattern with the aid of training data records of a user cohort, and/or
wherein the physiological data also comprise biometric data and/or fine motor movement data, wherein the classification module (200) is also trained to identify a generic fine motor movement pattern with the aid of training data records of a user cohort, and/or
wherein at least one pattern in the form of a pattern function (210) and at least one comparison data record (220) are stored in the internal memory (120) of the communication system (100),
wherein the comparison data record (220) comprises a plurality of behaviour-based data items (500) of the registered user, wherein at least one first comparison parameter (230) is calculated from the plurality of behaviour-based data items (500) of the first comparison data record (220),
wherein the classification module (200), following the input of the behaviour-based data (500) of the current user, performs the following steps:
• determination of at least one classification parameter (520) for the detected behaviour-based data (500), wherein the determination of the at least one classification parameter (520) comprises a comparison of the detected behaviour-based data (500) with the at least one pattern function (210), an association of the detected behaviour-based data (500) with the first pattern associated with the pattern function (210), and obtainment of at least one classification parameter (520) corresponding to the first pattern, if the movement data may be associated with the at least one, first pattern,
• calculation of one of the first confidence values (540) for each classification parameter (520) by a comparison of the at least one classification parameter (520) with the corresponding comparison parameter (230) of the comparison data record (220).

8. The method according to claim 7, wherein the behaviour-based authentication also comprises the training of the classification module (200) with the behaviour-based data (500) of the current user, wherein the classification module (200) is trained on the behaviour of the current user on the precondition that the behaviour-based authentication authenticates the current user as the registered user, wherein the training comprises an addition of the behaviour-based data (500) of the current user to the comparison data record (220), wherein the training also comprises a removal from the first comparison data record (220) of behaviour-based data (500) of the registered user that do not satisfy a predefined minimum age.

9. The method according to any one of the preceding claims, wherein the check criterion (800) is satisfied if
• at least one classification result (600) exceeds a threshold value predefined by the check criterion (800) and/or
• a maximum age of the at least one classification result (600) predefined by the check criterion (800) is not exceeded.

10. The method according to any one of the preceding claims, wherein the memory system (150) is an external memory system which comprises a plurality of independent memories (152), each with at least one non-volatile storage medium, and a file management server (154), wherein the persistent storage of the behaviour-based data (500) of the registered user by the communication system (100) in the memory system (150) comprises a distributed storage of at least one file with physiological data, which comprise the behaviour-based data (500), on a number of independent memories (152) of the plurality of independent memories (152), wherein the distributed storage comprises:
• automatic generation, by the file management server (154) or by the communication system (100), of a distribution plan, which contains instructions for the generation of file fragments of the file by means of an error correction process and identifiers of the number of independent memories (152), in which the generated file fragments are to be stored,
• execution, by the communication system (100), of the error correction process specified in the distribution plan in order to generate the file fragments from the file,
• sending of the authentication signal of the communication system (100) to the file management server (154) via a network (156) in order to store the file fragments in the number of independent memories (152) identified in the distribution plan,
• in response to the receipt of the authentication signal, requesting of an authorisation token by the file management server (154) from each of the independent memories (152) identified in the distribution plan and forwarding, to the communication system (100) by the file management server (154), of the authorisation token obtained in response to the request, and
• storing of the generated file fragments by the communication system (100) in the number of independent memories (152) of the memory system (150) via the network (156) by means of proof of authorisation by the authorisation token, with bypassing of the file management server (154).

11. The method according to claim 10, wherein access to the at least one file containing physiological data of the registered user, which file is divided into file fragments in accordance with the distribution plan by means of the error correction process, with the resultant file fragments being stored distributed over a number of independent memories (152) of the plurality of independent memories (152) of the memory system (150), comprises:
• following successful authentication via the file management server (154) with use of the authentication signal, receipt, via the file management server (154), of an authorisation token for each of the independent memories (152) at least of a selection from the number of independent memories (152) of the memory system (150) in whose non-volatile storage media the file fragments are stored in accordance with the distribution plan, wherein the file fragments comprised by the selection of the independent memories (152) are sufficient for a reconstruction of the file with the physiological data of the registered user,
wherein the authorisation tokens allow the requested access to the file fragments stored by the independent memories (152) of the selection, with bypassing of the file management server (154),
• downloading of the file fragments from the individual independent memories (152) of the selection via the network (156) with use of the authorisation tokens,
• reconstruction of the file from the downloaded file fragments.

12. A mobile, portable communication system (100) for granting a computer system (400) access to physiological data of a registered user of a mobile, portable communication system (100), which data are stored permanently in a memory system (150), wherein the communication system (100) comprises a classification module (200), a processor (130), a memory (120), a communication interface (140), and at least one sensor (110) for detecting behaviour-based data (500) for a behaviour-based authentication of a current user to the communication system (100),
wherein the classification module (200) is configured to classify the behaviour of the current user with use of the behaviour-based data (500), wherein the behaviour-based data (500) comprise physiological data of the current user, which data are intended to be stored permanently in the memory system (150), if the current user is authenticated as the registered user during the course of the behaviour-based authentication,
wherein the communication system (100) is configured to communicate with the computer system (400) via the communication interface (140), wherein the memory (120) comprises program instructions and an execution of the program instructions by the processor (130) prompts the communication system (100) to execute the method, which comprises:
• authentication of the computer system (400) to the communication system (100) with use of the communication interface (140) of the communication system (100),
• behaviour-based authentication of the user to the communication system (100), wherein the behaviour-based authentication of the user comprises:
∘ detection of behaviour-based data (500) of the current user by the at least one sensor (110) of the communication system (100),
∘ generation of at least one classification result (600) with use of the classification module (200) and the detected behaviour-based data (500),
∘ evaluation of the at least one classification result (600) in order to authenticate the user, wherein the evaluation comprises a check as to whether the classification result (600) satisfies a predefined check criterion (800), wherein a successful authentication of the current user as the registered user comprises satisfaction of the predefined check criterion (800),
• generation, by the mobile, portable communication system (100), of an authentication signal dependent on the success of the authentication of the computer system (400) and of the user,
• granting of access for the computer system (400) to the physiological data of the registered user stored permanently in the memory system (150), if the authentication signal indicates a successful authentication of the computer system (400) and of the current user and if the user has consented to the access.

13. A system (700) comprising a mobile, portable communication system (100) according to claim 12 and a memory system (150) for permanently storing physiological data of the registered user of the communication system (100), wherein the physiological data are behaviour-based data (500) of the registered user detected during the course of a successful behaviour-based authentication of the registered user to the communication system (100) by at least one sensor of the communication system (100).

14. The system (700) according to claim 13, wherein the system (700) also comprises a computer system (400) for accessing physiological data of a registered user of the communication system (100), which data are stored permanently in the memory system (150).

15. The system (700) according to claim 14, wherein the computer system (400) comprises a terminal with a communication interface (140) for communicating with an ID token (300), wherein the ID token (300) comprises a communication interface (340) for communication with the terminal, a processor (330), and a memory (320), wherein a private cryptographic key of an asymmetric key pair associated with the ID token (300) is stored in a protected memory area of the memory (320), and wherein the computer system (400) is authenticated with use of the private cryptographic key of the ID token (300), and/or
wherein the ID token (300) is an electronic health professional card.

## Revendications

1. Procédé de libération d'un accès d'un système informatique (400) à des données physiologiques d'un utilisateur enregistré d'un système de communication (100) mobile portable, lesquelles sont stockées de manière permanente dans un système de mémoire (150), où le système de communication (100) présente un module de classification (200), un processeur (130), une interface de communication (140) et au moins un capteur (110) pour la détection de données (500) basées sur le comportement pour une authentification basée sur le comportement d'un utilisateur actuel vis-à-vis du système de communication (100),
où le module de classification (200) est configuré pour la classification du comportement de l'utilisateur actuel moyennant l'emploi des données (500) basées sur le comportement, où les données (500) basées sur le comportement comprennent des données physiologiques de l'utilisateur actuel, lesquelles sont prévues pour être stockées dans le système de mémoire (150) de manière permanente dans le cas où l'utilisateur actuel est authentifié au cours de l'authentification basée sur le comportement en tant qu'utilisateur enregistré,
où le système de communication (100) est configuré pour communiquer avec le système informatique (400) par le biais de l'interface de communication (140),
où le système de communication (100) est en outre configuré pour exécuter le procédé pour la libération d'un accès, lequel comprend :
• l'authentification du système informatique (400) vis-à-vis du système de communication (100) moyennant l'emploi de l'interface de communication (140) du système de communication (100),
• l'authentification basée sur le comportement de l'utilisateur vis-à-vis du système de communication (100), où l'authentification basée sur le comportement de l'utilisateur comprend :
° la saisie de données (500) basées sur le comportement de l'utilisateur actuel par l'au moins un capteur (110) du système de communication (100),
° la génération d'au moins un résultat de classification (600) moyennant l'emploi du module de classification (200) et des données (500) basées sur le comportement saisies,
° l'exploitation de l'au moins un résultat de classification (600) afin d'authentifier l'utilisateur, où l'exploitation comprend une vérification que le résultat de classification (600) remplit un critère de vérification (800) prédéfini, où une authentification réussie de l'utilisateur actuel comprend une satisfaction au critère de vérification (800) prédéfini,
• la création d'un signal d'authentification dépendant de la réussite de l'authentification du système informatique (400) et de l'utilisateur par le système de communication (100) mobile portable,
• la libération de l'accès du système informatique (400) aux données physiologiques de l'utilisateur enregistré stockées de manière permanente dans le système de mémoire (150), dans le cas où le signal d'authentification indique une authentification réussie du système informatique (400) et de l'utilisateur actuel et dans le cas où un accord de l'utilisateur est disponible.

2. Procédé selon la revendication 1, dans lequel le système de communication (100) présente une mémoire (120) interne, où la génération de l'au moins un résultat de classification (600) a lieu moyennant l'emploi d'au moins une première valeur de confiance (540), où, en outre, le procédé pour la mise à disposition de l'au moins une première valeur de confiance (540) comprend :
• une exécution répétée d'une génération de premières valeurs de confiance, où la génération des premières valeurs de confiance comprend :
° la saisie de données (500) basées sur le comportement de l'utilisateur par l'au moins un capteur (110) du système de communication (100),
° l'entrée des données (500) saisies dans le module de classification (200),
° la génération d'au moins une première valeur de confiance (540) par le module de classification (200),
° le stockage de l'au moins une première valeur de confiance (540) dans la mémoire (120) du système de communication (100),
• suite à une demande d'authentification, l'accès à la mémoire (120) du système de communication (100) afin de générer au moins une des premières valeurs de confiance (540) générées et stockées de l'au moins un résultat de classification (600) à partir de la mémoire (120).

3. Procédé selon l'une des revendications précédentes, où le procédé comprend en outre en tant que condition pour la création du signal d'authentification :
• une interrogation de l'utilisateur actuel en vue de son accord pour la libération de l'accès du système informatique (400) aux données physiologiques de l'utilisateur enregistré stockées de manière permanente dans le système de mémoire (150),
• la réception de l'accord de l'utilisateur actuel.

4. Procédé selon l'une des revendications précédentes, dans lequel le module de classification (200) est entraîné pour une reconnaissance d'un état critique moyennant l'emploi des données (500) basées sur le comportement saisies de l'utilisateur actuel, où le procédé comprend en outre :
• une reconnaissance d'un état critique de l'utilisateur actuel à l'aide des données (500) basées sur le comportement saisies,
• suite à la reconnaissance de l'état critique, la création d'un signal d'urgence, où, dans le cas où il y a un signal d'urgence, il est suffisant pour la libération de l'accès du système informatique (400) aux données physiologiques de l'utilisateur enregistré stockées de manière permanente dans le système de mémoire (150), de sorte que le signal d'authentification indique une authentification réussie du système informatique (400), et/ou
dans lequel l'accès comprend exclusivement un accès en lecture du système de mémoire (150), et/ou
dans lequel l'accès est restreint à une ou à plusieurs catégories prédéfinies et/ou à des groupes des données physiologiques de l'utilisateur enregistré.

5. Procédé selon l'une des revendications précédentes, dans lequel le système informatique (400) comprend un terminal doté d'une interface de communication (440) pour la communication avec un jeton d'ID (300), où le jeton d'ID (300) comprend une interface de communication (440) pour la communication avec le terminal, un processeur (330) et une mémoire (320), où une clé cryptographique privée d'une paire de clés asymétrique associée au jeton d'ID (300) est stockée dans une zone de mémoire sécurisée de la mémoire (320), et où l'authentification du système informatique (400) a lieu moyennant l'utilisation de la clé cryptographique privée du jeton d'ID (300).

6. Procédé selon la revendication 5, dans lequel l'authentification du système informatique (400) a lieu en outre moyennant l'utilisation d'un certificat d'autorisation, lequel comprend une clé cryptographique publique de la paire cde clés asymétrique associée au jeton d'ID (300) et lequel fixe à quelles catégories et/ou à quels groupes de données physiologiques de l'utilisateur enregistré l'accès est restreint, et/ou
dans lequel, dans le cas du jeton d'ID (300), il s'agit d'une carte d'identité électronique d'un professionnel de la santé.

7. Procédé selon l'une des revendications précédentes, dans lequel les données (500) basées sur le comportement comprennent des données de mouvement d'un mouvement de motricité globale de l'utilisateur actuel du système de communication (100),
dans lequel le module de classification (200) est entraîné pour la reconnaissance d'un modèle de mouvement de motricité globale générique à l'aide d'ensembles de données d'entraînement d'une cohorte d'utilisateurs, et/ou
dans lequel les données physiologiques comprennent en outre respectivement des données biométriques et/ou des données de mouvement de motricité fine, où le module de classification (200) est en outre entraîné pour la reconnaissance d'un modèle de mouvement de motricité fine générique à l'aide d'ensembles de données d'entraînement d'une cohorte d'utilisateurs, et/ou
dans lequel au moins un modèle sous forme d'une fonction modèle (210) et au moins un ensemble de données de comparaison (220) sont stockés dans la mémoire (120) interne du système de communication (100),
dans lequel l'ensemble de données de comparaison (220) comprend une multiplicité de données (500) basées sur le comportement de l'utilisateur enregistré, où au moins un premier paramètre de comparaison (230) est calculé à partir de la multiplicité des données (500) basées sur le comportement du premier ensemble de données de comparaison (220),
dans lequel le module de classification (200), suite à l'entrée des données (500) basées sur le comportement de l'utilisateur actuel, exécute les étapes suivantes :
• la détermination d'au moins un paramètre de classification (520) pour les données (500) basées sur le comportement, où la détermination de l'au moins un paramètre de classification (520) comprend une comparaison des données (500) basées sur le comportement saisies avec l'au moins une fonction modèle (210), une association des données (500) basées sur le comportement saisies au premier modèle associé à la fonction modèle (210) et l'obtention d'au moins un paramètre de classification (520) correspondant au premier modèle dans le cas où les données de mouvement peuvent être associées au moins à un premier modèle,
• le calcul d'une des premières valeurs de confiance (540) pour chaque paramètre de classification (520) par une comparaison de l'au moins un paramètre de classification (520) avec le paramètre de comparaison (230) respectif de l'ensemble de données de comparaison (220).

8. Procédé selon la revendication 7, dans lequel l'authentification basée sur le comportement comprend en outre l'entraînement du module de classification (200) avec les données (500) basées sur le comportement de l'utilisateur actuel, où le module de classification (200) est entraîné par rapport au comportement de l'utilisateur actuel à condition que l'authentification basée sur le comportement authentifie l'utilisateur actuel en tant qu'utilisateur enregistré, où l'entraînement comprend un ajout des données (500) basées sur le comportement de l'utilisateur actuel à l'ensemble de données de comparaison (220), où l'entraînement comprend en outre un retrait de données (500) basées sur le comportement de l'utilisateur enregistré, lesquelles dépassent un âge minimal prédéfini, du premier ensemble de données de comparaison (220).

9. Procédé selon l'une des revendications précédentes, dans lequel le critère de vérification (800) est satisfait dans le cas :
• d'au moins un résultat de classification (600) dépassant une valeur de seuil prédéfinie par le critère de vérification(800), et/ou
• d'un âge maximal prédéfini par le critère de vérification (800) ne dépassant pas pour l'au moins un résultat de classification (600).

10. Procédé selon l'une des revendications précédentes, dans lequel le système de mémoire (150) est un système de mémoire externe, lequel comprend une multiplicité de mémoires (152) indépendantes avec respectivement au moins un support de stockage non volatil et un serveur de gestion de données (154),
dans lequel le stockage de manière permanente des données (500) basées sur le comportement de l'utilisateur enregistré comprend un stockage partagé par le système de communication (100) dans le système de mémoire (150) d'au moins une donnée avec des données physiologiques, lesquelles comprennent les données (500) basées sur le comportement, dans plusieurs mémoires indépendantes (152) de la multiplicité de mémoires indépendantes (152), où le stockage partagé comprend :
• une génération automatique d'un plan de partage qui contient des instructions pour la génération de fragments de donnée de la donnée au moyen d'un procédé de correction d'erreurs et d'identificateurs des nombreuses mémoires indépendantes (152), dans lesquelles les fragments de donnée générés doivent être stockés, par le serveur de gestion de données (154) ou par le système de communication (100),
• l'exécution du procédé de correction d'erreurs spécifié dans le plan de distribution pour la génération des fragments de donnée à partir de la donnée par le système de communication (100),
• l'envoi du signal d'authentification du système de communication (100) pour le stockage des fragments de donnée dans les nombreuses mémoires indépendantes (152) identifiées dans le plan de distribution au serveur de gestion de données (154) par le biais d'un réseau (156),
• suite à la réception du signal d'authentification, la demande d'un jeton d'autorisation par le serveur de gestion de donnés (154) de chacune des mémoires indépendantes (152) identifiées dans le plan de distribution et la transmission des jetons d'autorisation reçus en réponse à la demande par le serveur de gestion de données (154) au système de communication (100), et
• le stockage des fragments de donnée générés par le système de communication (100) dans les nombreuses mémoires indépendantes(152) du système de mémoire (150) par le biais du réseau (156) au moyen d'un document d'autorisation par le jeton d'autorisation moyennant un contournement du serveur de gestion de données (154).

11. Procédé selon la revendication 10, dans lequel un accès à l'au moins une donnée avec des données physiologiques de l'utilisateur enregistré, lesquelles sont subdivisées en fragments de données selon le plan de distribution au moyen du procédé de correction d'erreurs en fragments de données et dont les fragments de données résultants sont stockés de manière distribuée sur plusieurs mémoires indépendantes (152) de la multiplicité de mémoires indépendantes (152) du système de mémoires (150), comprend :
• suite à une authentification réussie par le biais du serveur de gestion de données (154), moyennant l'utilisation du signal d'authentification, la réception d'un jeton d'autorisation pour chacune des mémoires indépendantes (152) d'au moins une sélection des nombreuses mémoires indépendantes (152) du système de mémoires (150), dont les supports de stockage non volatils stockent les fragments de données selon le plan de distribution, par le biais du serveur de gestion de données (154), où les fragments de données compris dans la sélection des mémoires indépendantes (152) sont suffisants pour la reconstruction des données avec les données physiologiques de l'utilisateur enregistré,
où les jetons d'autorisation permettent l'accès demandé aux fragments de données respectivement stockés par les mémoires indépendantes (152) de la sélection moyennant un contournement du serveur de gestion de données (154),
• le téléchargement des fragments de données à partir des mémoires indépendantes (152) individuelles de la sélection par le biais du réseau (156), moyennant l'emploi des jetons d'autorisation,
• la reconstruction des données à partir des fragments de données téléchargés.

12. Système de communication (100) mobile portable permettant la libération d'un accès d'un système informatique (400) à des données physiologiques d'un utilisateur enregistré d'un système de communication (100) mobile portable, lesquelles sont stockées de manière permanente dans un système de mémoire (150), où le système de communication (100) présente un module de classification (200), un processeur (130), une mémoire (120), une interface de communication (140) et au moins un capteur (110) pour la détection de données (500) basées sur le comportement pour une authentification basée sur le comportement d'un utilisateur actuel vis-à-vis du système de communication (100),
où le module de classification (200) est configuré pour la classification du comportement de l'utilisateur actuel moyennant l'emploi des données (500) basées sur le comportement, où les données (500) basées sur le comportement comprennent des données physiologiques de l'utilisateur actuel, lesquelles sont prévues pour être stockées dans le système de mémoire (150) de manière permanente dans le cas où l'utilisateur actuel est authentifié au cours de l'authentification basée sur le comportement en tant qu'utilisateur enregistré,
où le système de communication (100) est configuré pour communiquer avec le système informatique (400) par le biais de l'interface de communication (140),
où la mémoire (120) comprend des instructions de programme et où une exécution des instructions de programme par le processeur (130) fait en sorte que le système de communication (100) exécute le procédé, lequel comprend :
• l'authentification du système informatique (400) vis-à-vis du système de communication (100) moyennant l'emploi de l'interface de communication (140) du système de communication (100),
• l'authentification basée sur le comportement de l'utilisateur vis-à-vis du système de communication (100), où l'authentification basée sur le comportement de l'utilisateur comprend :
° la saisie de données (500) basées sur le comportement de l'utilisateur actuel par l'au moins un capteur (110) du système de communication (100),
° la génération d'au moins un résultat de classification (600) moyennant l'emploi du module de classification (200) et des données (500) basées sur le comportement saisies,
° l'exploitation de l'au moins un résultat de classification (600) afin d'authentifier l'utilisateur, où l'exploitation comprend une vérification que le résultat de classification (600) remplit un critère de vérification (800) prédéfini, où une authentification réussie de l'utilisateur actuel comprend une satisfaction du critère de vérification (800) prédéfini,
• la création d'un signal d'authentification dépendant de la réussite de l'authentification du système informatique (400) et de l'utilisateur par le système de communication (100) mobile portable,
• la libération de l'accès du système informatique (400) aux données physiologiques de l'utilisateur enregistré stockées de manière permanente dans le système de mémoire (150), dans le cas où le signal d'authentification indique une authentification réussie du système informatique (400) et de l'utilisateur actuel et dans le cas où un accord de l'utilisateur est disponible.

13. Système (700) comprenant un système de communication (100) mobile portable selon la revendication 12 et un système de mémoire (150) pour le stockage de manière permanente de données physiologiques de l'utilisateur enregistré du système de communication (100), où, dans le cas des données physiologiques, il s'agit de données (500) basées sur le comportement de l'utilisateur enregistré, lesquelles ont été détectées dans le cadre d'une authentification basée sur le comportement réussie de l'utilisateur enregistré vis-à-vis du système de communication (100) par l'au moins un capteur du système de communication (100).

14. Système (700) selon la revendication 13, où le système (700) comprend en outre un système informatique (400) pour l'accès à des données physiologiques d'un utilisateur enregistré du système de communication (100), lesquelles sont stockées de manière permanente dans le système de mémoire (150).

15. Système (700) selon la revendication 14, dans lequel le système informatique (400) comprend un terminal doté d'une interface de communication (140) pour la communication avec un jeton d'ID (300), où le jeton d'ID (300) comprend une interface de communication (340) pour la communication avec le terminal, un processeur (330) et une mémoire (320), où une clé cryptographique privée d'une paire de clés asymétrique associée au jeton d'ID (300) est stockée dans une zone de mémoire sécurisée de la mémoire (320), et où l'authentification du système informatique (400) a lieu moyennant l'utilisation de la clé cryptographique privée du jeton d'ID (300) et/ou
dans lequel, dans le cas du jeton d'ID (300), il s'agit d'une carte d'identité électronique d'un professionnel de la santé.
